(19) Europäisches Patentamt
European Patent Office
Office européen des brevets

(11) EP 3 855 733 A1

(12) EUROPEAN PATENT APPLICATION
published in accordance with Art. 153(4) EPC

(43) Date of publication:
28.07.2021 Bulletin 2021/30

(51) Int Cl.:
H04N 9/10 (2006.01)

(21) Application number: 19866037.5

(22) Date of filing: 24.09.2019

(86) International application number:
PCT/CN2019/107614

(87) International publication number:
WO 2020/063599 (02.04.2020 Gazette 2020/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 24.09.2018 US 201862735856 P
25.09.2018 US 201862736458 P

(71) Applicant: Huawei Technologies Co., Ltd.
Shenzhen Guangdong 518129 (CN)

(72) Inventors:
• CHEN, Huanbang
Shenzhen, Guangdong 518129 (CN)
• YANG, Haitao
Shenzhen, Guangdong 518129 (CN)
• CHEN, Jianle
Santa Clara, California 95050 (US)

(74) Representative: Gill Jennings & Every LLP
The Broadgate Tower
20 Primrose Street
London EC2A 2ES (GB)

(54) **IMAGE PREDICTION METHOD AND DEVICE AND CORRESPONDING ENCODER AND DECODER**

(57) Embodiments of this application disclose a picture prediction method and apparatus, and a corresponding encoder and decoder. A prediction direction of a current picture block is considered when a size of a subblock in the current picture block is determined. For example, if a prediction mode of the current picture block is unidirectional prediction, the size of the subblock is 4 x 4; or if a prediction mode of the current picture block is bidirectional prediction, the size of the subblock is 8 x 8. In this way, motion compensation complexity and prediction efficiency are balanced. To be specific, the prediction efficiency is also considered while the motion compensation complexity in the conventional technology is reduced, so that coding performance is improved.

700

FIG. 7A

**Description**

**TECHNICAL FIELD**

This application relates to the field of video coding technologies, and in particular, to a picture prediction method and apparatus, and a corresponding encoder and decoder.

**BACKGROUND**

Video coding (video encoding and decoding) is applied to a wide range of digital video applications, for example, broadcast digital TV, video transmission over internet and mobile networks, real-time conversational applications such as video chatting and video conferencing, DVD and Blu-ray discs, and security applications of video content acquisition and editing systems and camcorders.

Since the development of a block-based hybrid video coding approach in the H.261 standard in 1990, new video coding technologies and tools were developed and formed a basis for new video coding standards. Other video coding standards include MPEG-1 video, MPEG-2 video, ITU-T H.262/MPEG-2, ITU-T H.263, ITU-T H.264/MPEG-4 Part 10: advanced video coding (Advanced Video Coding, AVC), ITU-T H.265/high efficiency video coding (High Efficiency Video Coding, HEVC) and extensions, for example, scalability and/or 3D (three-dimensional) extensions of these standards. As video creation and use have become more ubiquitous, video traffic is the biggest load on communications networks and data storage. Accordingly, one of the goals of most of the video coding standards was to achieve a bit rate reduction compared to its predecessor without sacrificing picture quality. Even the latest high efficiency video coding (High Efficiency video coding, HEVC) can compress videos about twice as much as AVC without sacrificing quality, it is hunger for a new technique to further compress videos as compared with HEVC.

**SUMMARY**

Embodiments of this application provide a picture prediction method and apparatus, and a corresponding encoder and encoder, to reduce complexity to some extent, so as to improve coding performance.

According to a first aspect, an embodiment of this application provides a picture prediction method. It should be understood that the method in this embodiment of this application may be performed by a video decoder or an electronic device having a video decoding function, or the method in this embodiment of this application may be performed by a video encoder or an electronic device having a video encoding function. The method may include:

obtaining motion vectors of control points of a current picture block (such as a current affine picture block);
obtaining a motion vector of each subblock in the current picture block based on the motion vectors of the control points (such as affine control points) of the current picture block (such as a motion vector group) by using an affine transform model, where a size of the subblock is determined based on a prediction direction of the current picture block; and
performing motion compensation based on the motion vector of each subblock in the current picture block, to obtain a predicted pixel value of each subblock.

It should be understood that, after the predicted pixel value of each subblock is obtained, the predicted pixel value may be further refined, or may not be refined. After predicted pixel values of a plurality of subblocks in the current picture block are obtained, a predicted pixel value of the current picture block is obtained.

In some implementations of the first aspect, if the prediction direction of the current picture block is bidirectional prediction, the size of the subblock in the current picture block is U x V; or
if the prediction direction of the current picture block is unidirectional prediction, the size of the subblock in the current picture block is M x N.

Herein, U and M each represent the width of the subblock, V and N each represent the height of the subblock, and U, V, M, and N each are 2n, where n is a positive integer.

In some implementations of the first aspect, $U \geq M$, $V \geq N$, and U and V cannot be equal to M and N at the same time.

In an implementation of the first aspect, U = 2M, and V = 2N.

In a specific implementation of the first aspect, M is 4, and N is 4.

In a specific implementation of the first aspect, U is 8, and V is 8.

In some implementations of the first aspect, if a size of the current picture block satisfies: width $W \geq 2U$ and height $H \geq 2V$, the method further includes: parsing a bitstream to obtain an affine-related syntax element (for example, affine_inter_flag or affine_merge_flag).

In some implementations of the first aspect, the obtaining motion vectors of control points of a current picture block (such as a current affine picture block) includes:

receiving an index (such as a candidate index) and motion vector differences MVDs that are obtained by parsing the bitstream;
determining a target candidate MVP group in a candidate motion vector predictor MVP list based on the index; and determining the motion vectors of the control points of the current picture block based on the target candidate MVP group and the motion vector differences MVDs that are obtained by parsing the bitstream. It should be understood that this application is not limited thereto. For example, a decoder side may obtain the target candidate MVP group according to another method instead of based on the index.

In some implementations of the first aspect, the prediction direction of the current picture block is obtained in the following manner:
prediction direction indication information is used to indicate unidirectional prediction or bidirectional prediction, and the prediction direction indication information is derived or obtained by parsing the bitstream.

In some implementations of the first aspect, the obtaining motion vectors of control points of a current picture block (such as a current affine picture block) includes:

receiving an index (such as a candidate index) obtained by parsing the bitstream; and
determining target candidate motion information in a candidate motion information list based on the index, where the target candidate motion information includes at least one target candidate motion vector group (for example, a target candidate motion vector group corresponding to a first reference frame list (such as L0) and/or a target candidate motion vector corresponding to a second reference frame list (such as L1)), and the at least one target candidate motion vector group is used as the motion vectors of the control points of the current picture block.

In some implementations of the first aspect, the prediction direction of the current picture block is obtained in the following manner:

the prediction direction of the current picture block is bidirectional prediction, and the target candidate motion information corresponding to the index (such as the candidate index) in the candidate motion information list includes a first target candidate motion vector group corresponding to a first reference frame list (for example, a target candidate motion vector group in a first direction) and a second target candidate motion vector group corresponding to a second reference frame list (for example, a target candidate motion vector group in a second direction); or
the prediction direction of the current picture block is unidirectional prediction, and the target candidate motion information corresponding to the index (such as the candidate index) in the candidate motion vector predictor MVP list includes a first target candidate motion vector group corresponding to a first reference frame list (for example, a target candidate motion vector group in a first direction).

Alternatively, the target candidate motion information corresponding to the index (such as the candidate index) in the candidate motion vector predictor MVP list includes a second target candidate motion vector group corresponding to a second reference frame list (for example, a target candidate motion vector group in a second direction).

In some implementations of the first aspect, when the size of the current picture block satisfies $W \geq 16$ and $H \geq 16$, an affine mode is allowed to be used. It should be understood that, for "an affine mode is allowed to be used", another condition may be alternatively considered. Herein, "when the size of the current picture block satisfies $W \geq 16$ and $H \geq 16$" should not be understood as "only when the size of the current picture block satisfies $W \geq 16$ and $H \geq 16$".

In some implementations of the first aspect, the obtaining a motion vector of each subblock in the current picture block based on the obtained motion vectors of the control points of the current picture block by using an affine transform model includes:

obtaining the affine transform model based on the motion vectors of the control points of the current picture block; and
obtaining the motion vector of each subblock in the current picture block based on location coordinate information of each subblock in the current picture block and the affine transform model.

It can be learned that, compared with the conventional technology in which a current coding block is partitioned into M x N (that is, 4 x 4) subblocks, that is, motion compensation is performed on each M x N (that is, 4 x 4) subblock by using a corresponding motion vector, in this embodiment of this application, the size of the subblock in the current coding block is determined based on the prediction direction of the current coding block. For example, if unidirectional prediction is performed on the current coding block, the size of the subblock in the current coding block is 4 x 4, or if bidirectional prediction is performed on the current coding block, the size of the subblock in the current coding block is 8 x 8. From a perspective of an overall picture, sizes of subblocks (or motion compensation units) in some picture blocks in this embodiment of this application are larger than a size of a subblock (or a motion compensation unit) in the conventional technology. In this way, an average quantity of reference pixels that need to be read for motion compensation for all pixels is smaller, and computational complexity of interpolation is lower. Therefore, in this embodiment of this application, motion compensation complexity is reduced to some extent while prediction efficiency is also considered, so that coding performance is improved.

According to a second aspect, an embodiment of this application provides a picture prediction method. It should be understood that the method in this embodiment of this application may be performed by a video decoder or an electronic device having a video decoding function, or the method in this embodiment of this application may be performed by a video encoder or an electronic device having a video encoding function. The method may include:

> obtaining motion vectors of control points of a current picture block (such as a current affine picture block);
> obtaining a motion vector of each subblock in the current picture block based on the motion vectors of the control points (such as affine control points) of the current picture block (such as a motion vector group) by using an affine transform model, where if unidirectional prediction is performed on the current picture block (such as the current affine picture block), a size of the subblock in the current picture block is set to 4 x 4, or if bidirectional prediction is performed on the current picture block, a size of the subblock in the current picture block is set to 8 x 8; and
> performing motion compensation based on the motion vector of each subblock in the current picture block, to obtain a predicted pixel value of each subblock.

It can be learned that, in this embodiment of this application, a prediction direction of the current picture block is considered when the size of the subblock in the current picture block is determined. For example, if a prediction mode of the current coding picture block is unidirectional prediction, the size of the subblock is 4 x 4; or if a prediction mode of the current coding picture block is bidirectional prediction, the size of the subblock is 8 x 8. In this way, motion compensation complexity and prediction efficiency are balanced. To be specific, the prediction efficiency is also considered while the motion compensation complexity in the conventional technology is reduced, so that coding performance is improved.

According to a third aspect, an embodiment of this application provides a picture prediction apparatus, including several function units configured to implement any method in the first aspect. For example, the picture prediction apparatus may include:

> an obtaining unit, configured to obtain motion vectors of control points of a current picture block; and
> an inter prediction processing unit, configured to: obtain a motion vector of each subblock in the current picture block based on the motion vectors of the control points of the current picture block by using an affine transform model, where a size of the subblock is determined based on a prediction direction of the current picture block; and perform motion compensation based on the motion vector of each subblock in the current picture block, to obtain a predicted pixel value of each subblock.

According to a fourth aspect, an embodiment of this application provides a picture prediction apparatus, including several function units configured to implement any method in the first aspect or the second aspect. For example, the picture prediction apparatus may include:

> an obtaining unit, configured to obtain motion vectors of control points of a current picture block; and
> an inter prediction processing unit, configured to: obtain a motion vector of each subblock in the current picture block based on the motion vectors of the control points of the current picture block by using an affine transform model, where if unidirectional prediction is performed on the current picture block, a size of the subblock in the current picture block is 4 x 4, or if bidirectional prediction is performed on the current picture block, a size of the subblock in the current picture block is 8 x 8; and perform motion compensation based on the motion vector of each subblock in the current picture block, to obtain a predicted pixel value of each subblock.

According to a fifth aspect, this application provides a decoding method, including: A video decoder determines an inter direction of a current coding block (which may be specifically a current affine coding block); parses a bitstream, to obtain an index and a motion vector difference MVD; determines a target motion vector group (which may also be referred to as a target candidate motion vector group) in a candidate motion vector predictor MVP list (for example, an affine transform candidate motion vector list) based on the index, where the target motion vector group represents motion vector predictors of a group of control points of the current coding block; determines motion vectors of control points of the current coding block based on the target candidate motion vector group and the motion vector difference MVD that is obtained by parsing the bitstream; obtains a motion vector of each subblock in the current coding block based on the determined motion vectors of the control points of the current coding block by using an affine transform model, where a size of the subblock is determined based on the prediction direction of the current coding block, or a size of the subblock is determined based on the prediction direction of the current coding block and a size of the current coding block; and performs motion compensation based on the motion vector of each subblock in the current coding block, to obtain a predicted pixel value of each subblock.

It can be learned that, compared with the conventional technology in which a current coding block is partitioned into M x N (that is, 4 x 4) subblocks, that is, motion compensation is performed on each M x N (that is, 4 x 4) subblock by using a corresponding motion vector, in this embodiment of this application, the size of the subblock in the current coding block is determined based on the prediction direction of the current coding block, or the size of the subblock is determined based on the prediction direction of the current coding block and the size of the current coding block. For example, if unidirectional prediction in an AMVP mode is performed on the current coding block, the size of the subblock in the current coding block is set to 4 x 4, or if bidirectional prediction in an AMVP mode is performed on the current coding block, the size of the subblock in the current coding block is set to 8 x 4 or 4 x 8. From a perspective of an overall picture, the size of the subblock (or a motion compensation unit) in this embodiment of this application is larger than a size of a subblock (or a motion compensation unit) in the conventional technology. In this way, an average quantity of reference pixels that need to be read for motion compensation for all pixels is smaller, and computational complexity of interpolation is lower. Therefore, in this embodiment of this application, motion compensation complexity is reduced to some extent while prediction efficiency is also considered, so that coding performance is improved.

In some implementations of the fifth aspect, if an inter prediction mode of the current coding block is a bidirectional prediction mode in the AMVP mode, the size of the subblock in the current coding block is U x V; or
if an inter prediction mode of the current coding block is a unidirectional prediction mode in the AMVP mode, the size of the subblock in the current coding block is M x N.

In some implementations of the fifth aspect, if an inter prediction mode of the current coding block is a bidirectional prediction mode in the AMVP mode and the size of the current coding block satisfies: width $W \geq 2U$ and height $H \geq 2V$, the size of the subblock in the current coding block is U x V; or
if an inter prediction mode of the current coding block is a unidirectional prediction mode in the AMVP mode, the size of the subblock in the current coding block is M x N.

In some implementations of the fifth aspect, if a subblock that is in the current affine coding block and for which unidirectional prediction is performed is partitioned into M x N, a subblock that is in the current affine coding block and for which bidirectional prediction is performed is partitioned into U x V, where $U \geq M$, $V \geq N$, and U and V cannot be equal to M and N at the same time.

In some implementations of the fifth aspect, U = 2M and N = V, or U = M and V = 2N, or U = 2M and V=2N.

In some implementations of the fifth aspect, M is an integer such as 4, 8, or 16, and N is an integer such as 4, 8, or 16.

In some implementations of the fifth aspect, if the size of the current coding block satisfies: width $W \geq 2U$ and height $H \geq 2V$, the parsing a bitstream further includes: parsing the bitstream to obtain an affine-related syntax element (for example, affine_inter_flag or affine_merge_flag).

In some implementations of the fifth aspect, if an inter prediction mode of the current coding block is a bidirectional prediction mode in the AMVP mode and the size of the current coding block does not satisfy "width $W \geq 2U$ and height $H \geq 2V$", it is determined that the inter prediction mode of the current coding block is a unidirectional prediction mode in the AMVP mode, and the size of the subblock in the current coding block is M x N.

In some implementations of the fifth aspect, if unidirectional prediction is performed on the current affine coding block, the size of the subblock in the current affine coding block is set to 4 x 4, or if bidirectional prediction is performed on the current affine coding block, the size of the subblock in the current affine coding block is set to 8 x 4.

In some implementations of the fifth aspect, when the size of the current coding block satisfies $W \geq 16$ and $H \geq 8$, an affine mode is allowed to be used.

In some implementations of the fifth aspect, when the size of the current coding block satisfies $W \geq 8$ and $H \geq 8$, an affine mode is allowed to be used.

When the width W of the current coding block is less than 16, if the prediction direction of the affine coding block is bidirectional, the inter prediction mode of the current coding block is changed to the unidirectional prediction mode.

In some implementations of the fifth aspect, that the inter prediction mode of the current coding block is changed to the unidirectional prediction mode includes: discarding motion information of backward prediction, and converting bidirectional prediction into forward prediction; or discarding motion information of forward prediction, and converting bidirectional prediction into backward prediction.

In some implementations of the fifth aspect, when the width W of the current affine coding block is less than 16, a flag bit for bidirectional prediction does not need to be parsed.

In some implementations of the fifth aspect, if unidirectional prediction is performed on the current affine coding block, the size of the subblock in the current affine coding block is set to 4 x 4, or if bidirectional prediction is performed on the current affine coding block, the size of the subblock in the current affine coding block is set to 4 x 8.

In some implementations of the fifth aspect, only when the size of the coding block satisfies $W \geq 8$ and $H \geq 16$, an affine mode is allowed to be used.

In some implementations of the fifth aspect, only when the size of the coding block satisfies $W \geq 8$ and $H \geq 8$, an affine mode is allowed to be used; and when the height H of the coding block is less than 16, if the prediction direction of the affine coding block is bidirectional, the inter prediction mode of the current coding block is changed to the unidirectional prediction mode.

In some implementations of the fifth aspect, if unidirectional prediction is performed on the current affine coding block, the size of the subblock in the current affine coding block is set to 4 x 4, or if bidirectional prediction is performed on the current affine coding block, adaptive partition is performed based on the size of the affine coding block. A partition manner may be any one of the following three manners:

(1) If the width W of the affine coding block is greater than or equal to H, the size of the subblock in the current affine coding block is set to 8 x 4; or if the width W of the affine coding block is less than H, the size of the subblock in the current affine coding block is set to 4 x 8.

(2) If the width W of the affine coding block is greater than H, the size of the subblock in the current affine coding block is set to 8 x 4; or if the width W of the affine coding block is less than or equal to H, the size of the subblock in the current affine coding block is set to 4 x 8.

(3) If the width W of the affine coding block is greater than H, the size of the subblock in the current affine coding block is set to 8 x 4; or if the width W of the subblock in the current affine coding block is less than H, the size of the subblock in the current affine coding block is set to 4 x 8; or if the width W of the affine coding block is equal to H, the size of the subblock in the current affine coding block is set to 8 x 8.

In some implementations of the fifth aspect, when the size of the coding block satisfies $W \geq 8$ and $H \geq 8$, and W is not equal to 8 or H is not equal to 8, an affine mode is allowed to be used.

In some implementations of the fifth aspect, when the size of the coding block satisfies $W \geq 8$ and $H \geq 8$, an affine mode is allowed to be used; and when the width W of the coding block is equal to 8 and the height H of the coding block is equal to 8, if the prediction direction of the affine coding block is bidirectional, the inter prediction mode of the current coding block is changed to the unidirectional prediction mode.

In some implementations of the fifth aspect, the bitstream may be further limited, so that when the width W of the affine coding block is equal to 8 and the height H of the affine coding block is equal to 8, a flag bit for bidirectional prediction does not need to be parsed.

In some implementations of the fifth aspect, the candidate motion vector predictor MVP list (for example, the affine transform candidate motion vector list) may include only one candidate motion vector group or a plurality of candidate motion vector groups, where each candidate motion vector group may be a motion vector 2-tuple or a motion vector triplet. Optionally, when a length of the candidate motion vector predictor MVP list (for example, the affine transform candidate motion vector list) is 1, parsing the bitstream to obtain the index is not required, but the target motion vector group may be directly determined.

In some implementations of the fifth aspect, in the advanced motion vector prediction AMVP mode, the determining an inter prediction mode of a current coding block (for example, a current affine coding block) includes: parsing the bitstream to obtain one or more syntax elements related to inter prediction, where the one or more syntax elements are used to indicate that the AMVP mode is used for the current coding block, and are used to indicate that unidirectional prediction or bidirectional prediction is performed for the current coding block.

In some implementations of the fifth aspect, the obtaining a motion vector of each subblock in the current coding block based on the determined motion vectors of the control points of the current coding block by using an affine transform model includes: obtaining motion vectors of one or more subblocks in the current coding block based on the affine transform model (for example, coordinates of center pixels of the one or more subblocks are substituted into the affine transform model, to obtain the motion vectors of the one or more subblocks), where the affine transform model is determined based on location coordinates of a group of control points of the current coding block and motion vectors of the group of control points of the current coding block. In other words, a model parameter of the affine transform model is determined based on the location coordinates of the group of control points of the current coding block and the motion vectors of the group of control points of the current coding block.

According to a sixth aspect, this application provides another decoding method, including: A video decoder determines a prediction direction of a current coding block; and parses a bitstream, to obtain an index. The video decoder determines a target motion vector group in a candidate motion information list based on the index. The video decoder obtains a motion vector of each subblock in the current coding block based on a determined motion vectors of control points of the current coding block by using a parameter affine transform model, where a size of the subblock is determined based on the inter direction of the current coding block, or a size of the subblock is determined based on the inter direction of the current coding block and a size of the current coding block; and performs motion compensation based on the motion vector of each subblock in the current coding block, to obtain a predicted pixel value of each subblock.

In some implementations of the sixth aspect, in a merge merge mode, the determining a prediction direction of a current coding block (for example, a current affine coding block) includes: determining, based on the index (for example, affine_merge_idx), that unidirectional prediction or bidirectional prediction is performed for the current coding block, where the prediction direction of the current coding block is the same as a prediction direction of candidate motion information indicated by the index (for example, affine_merge_idx).

It can be learned that, compared with the conventional technology in which a current coding block is partitioned into M x N (that is, 4 x 4) subblocks, that is, motion compensation is performed on each M x N (that is, 4 x 4) subblock by using a corresponding motion vector, in this embodiment of this application, the size of the subblock in the current coding block is determined based on the prediction direction of the current coding block, or the size of the subblock is determined based on the prediction direction of the current coding block and the size of the current coding block. For example, if unidirectional prediction in the merge mode is performed on the current coding block, the size of the subblock in the current coding block is set to 4 x 4, or if bidirectional prediction in the merge mode is performed on the current coding block, the size of the subblock in the current coding block is set to 8 x 4 or 4 x 8. From a perspective of an overall picture, sizes of subblocks (or motion compensation units) in some picture blocks in this embodiment of this application are larger than a size of a subblock (or a motion compensation unit) in the conventional technology. In this way, an average quantity of reference pixels that need to be read for motion compensation for all pixels is smaller, and computational complexity of interpolation is lower. Therefore, in this embodiment of this application, motion compensation complexity is reduced to some extent while prediction efficiency is also considered, so that coding performance is improved.

In some implementations of the sixth aspect, if an inter prediction mode of the current coding block is a bidirectional prediction mode in the merge mode, the size of the subblock in the current coding block is U x V; or

if an inter prediction mode of the current coding block is a unidirectional prediction mode in the merge mode, the size of the subblock in the current coding block is M x N.

In some implementations of the sixth aspect, if an inter prediction mode of the current coding block is a bidirectional prediction mode in the merge mode and the size of the current coding block satisfies: width $W \geq 2U$ and height $H \geq 2V$, the size of the subblock in the current coding block is U x V; or

if an inter prediction mode of the current coding block is a unidirectional prediction mode in the merge mode, the size of the subblock in the current coding block is M x N.

In some implementations of the sixth aspect, if a subblock that is in the affine coding block and for which unidirectional prediction is performed is partitioned into M x N, a subblock for which bidirectional prediction is performed is partitioned into U x V, where $U \geq M$, $V \geq N$, and U and V cannot be equal to M and N at the same time.

In some implementations of the sixth aspect, U = 2M and N = V, or U = M and V = 2N, or U = 2M and V=2N.

In some implementations of the sixth aspect, M is an integer such as 4, 8, or 16, and N is an integer such as 4, 8, or 16.

In some implementations of the sixth aspect, if the size of the current coding block satisfies: width $W \geq 2U$ and height $H \geq 2V$, the parsing a bitstream includes: parsing the bitstream to obtain an affine-related syntax element (for example, affine_inter_flag or affine_merge_flag).

In some implementations of the sixth aspect, if an inter prediction mode of the current coding block is a bidirectional prediction mode in the merge mode and the size of the current coding block does not satisfy "width $W \geq 2U$ and height $H \geq 2V$", it is determined that the inter prediction mode of the current coding block is a unidirectional prediction mode in the merge mode, and the size of the subblock in the current coding block is M x N.

In some implementations of the sixth aspect, if unidirectional prediction is performed on the current affine coding block, a size of a basic motion compensation unit in the current affine coding block is set to 4 x 4, or if unidirectional prediction is performed on the current affine coding block, a size of a motion compensation unit in the current affine coding block is set to 8 x 4.

In some implementations of the sixth aspect, when the size of the current coding block satisfies $W \geq 16$ and $H \geq 8$, an affine mode is allowed to be used.

In some implementations of the sixth aspect, when the size of the current coding block satisfies $W \geq 8$ and $H \geq 8$, an affine mode is allowed to be used.

When the width W of the current coding block is less than 16, if the prediction direction of the affine coding block is bidirectional, the inter prediction mode of the current coding block is changed to the unidirectional prediction mode.

In some implementations of the sixth aspect, that the inter prediction mode of the current coding block is changed to the unidirectional prediction mode includes: discarding motion information of backward prediction, and converting bidirectional prediction into forward prediction; or discarding motion information of forward prediction, and converting bidirectional prediction into backward prediction.

**EP 3 855 733 A1**

In some implementations of the sixth aspect, when the width W of the current affine coding block is less than 16, a flag bit for bidirectional prediction does not need to be parsed.

In some implementations of the sixth aspect, if unidirectional prediction is performed on the current affine coding block, a size of a motion compensation unit in the current affine coding block is set to 4 x 4, or if bidirectional prediction is performed on the current affine coding block, a size of a motion compensation unit in the current affine coding block is set to 4 x 8.

In some implementations of the sixth aspect, when the size of the coding block satisfies W ≥ 8 and H ≥ 16, an affine mode is allowed to be used.

In some implementations of the sixth aspect, when the size of the coding block satisfies W ≥ 8 and H ≥ 8, an affine mode is allowed to be used; and when the height H of the coding block is less than 16, if the prediction direction of the affine coding block is bidirectional, the inter prediction mode of the current coding block is changed to the unidirectional prediction mode.

In some implementations of the sixth aspect, if unidirectional prediction is performed on the affine coding block, a size of a motion compensation unit in the affine coding block is set to 4 x 4, or if bidirectional prediction is performed on the affine coding block, adaptive partition is performed based on the size of the affine coding block. A partition manner may be any one of the following three manners:

(1) If the width W of the affine coding block is greater than or equal to H, the size of the motion compensation unit in the affine coding block is set to 8 x 4; or if the width W of the affine coding block is less than H, the size of the motion compensation unit in the affine coding block is set to 4 x 8.
(2) If the width W of the affine coding block is greater than H, the size of the motion compensation unit in the affine coding block is set to 8 x 4; or if the width W of the affine coding block is less than or equal to H, the size of the motion compensation unit in the affine coding block is set to 4 x 8.
(3) If the width W of the affine coding block is greater than H, the size of the motion compensation unit in the affine coding block is set to 8 x 4; or if the width W of the affine coding block is less than H, the size of the motion compensation unit in the affine coding block is set to 4 x 8; or if the width W of the affine coding block is equal to H, the size of the motion compensation unit in the affine coding block is set to 8 x 8.

In some implementations of the sixth aspect, when the size of the coding block satisfies W ≥ 8 and H ≥ 8, and W is not equal to 8 or H is not equal to 8, an affine mode is allowed to be used.

In some implementations of the sixth aspect, when the size of the coding block satisfies W ≥ 8 and H ≥ 8, an affine mode is allowed to be used; and when the width W of the coding block is equal to 8 and the height H of the coding block is equal to 8, if the prediction direction of the affine coding block is bidirectional, the inter prediction mode of the current coding block is changed to the unidirectional prediction mode.

In some implementations of the sixth aspect, in the method, the bitstream may be further limited, so that when the width W of the affine coding block is equal to 8 and the height H of the affine coding block is equal to 8, a flag bit for bidirectional prediction does not need to be parsed.

According to a seventh aspect, an embodiment of this application provides a video decoder, including several function units configured to implement any method in the foregoing aspects. For example, the video decoder may include:

an entropy decoding unit, configured to parse a bitstream, to obtain an index and a motion vector difference MVD; and an inter prediction unit, configured to: determine a prediction direction of a current coding block; determine a target candidate MVP group in a candidate motion vector predictor MVP list based on the index; determine motion vectors of control points of the current coding block based on the target candidate MVP group and the motion vector difference MVD that is obtained by parsing the bitstream; obtain a motion vector of each subblock in the current coding block based on the determined motion vectors of the control points of the current coding block by using an affine transform model, where a size of the subblock is determined based on the prediction direction of the current coding block, or a size of the subblock is determined based on the prediction direction of the current coding block and a size of the current coding block; and perform motion compensation based on the motion vector of each subblock in the current coding block, to obtain a predicted pixel value of each subblock.

According to an eighth aspect, an embodiment of this application provides another video decoder, including several function units configured to implement any method in the foregoing aspects. For example, the video decoder may include:

an entropy decoding unit, configured to parse a bitstream, to obtain an index; and an inter prediction unit, configured to: determine a prediction direction of a current coding block; determine a target motion vector group in a candidate motion information list based on the index; obtain a motion vector of each subblock in the current coding block based on determined motion vectors of control points of the current coding block by using a parameter affine transform model, where a size of the subblock is determined based on the prediction direction of the current coding block, or a size of the subblock is determined based on the prediction direction of the current coding block and a size of the current coding block; and perform motion compensation based on the motion vector of each subblock in the current coding block, to obtain a predicted pixel value of each subblock.

The method according to the first aspect of this application may be performed by the apparatus according to the third aspect of this application. Other features and implementations of the method according to the first aspect of this application directly depend on functionalities and different implementations of the apparatus according to the third aspect of this application.

The method according to the second aspect of this application may be performed by the apparatus according to the fourth aspect of this application. Other features and implementations of the method according to the second aspect of this application directly depend on functionalities and different implementations of the apparatus according to the fourth aspect of this application.

According to a ninth aspect, this application relates to a video stream decoding apparatus, including a processor and a memory. The memory stores instructions, and the instructions enable the processor to perform the method according to the first aspect or the second aspect.

According to a tenth aspect, this application relates to a video stream encoding apparatus, including a processor and a memory. The memory stores instructions, and the instructions enable the processor to perform the method according to the first aspect or the second aspect.

According to an eleventh aspect, a computer-readable storage medium is provided. The computer-readable storage medium stores instructions, and when the instructions are executed, one or more processors are enabled to encode video data. The instructions enable the one or more processors to perform the method according to the first or the second aspect or any possible embodiment of the first or the second aspect.

According to a twelfth aspect, this application relates to a computer program including program code. When the program code is run on a computer, the method according to the first or the second aspect or any possible embodiment of the first or the second aspect is performed.

According to a thirteenth aspect, an embodiment of this application provides a video data decoding device, and the device includes:

a memory, configured to store video data in a form of a bitstream; and
a video decoder, configured to: parse a bitstream, to obtain an index and a motion vector difference MVD; determine a target motion vector group in a candidate motion vector predictor MVP list based on the index, where the target motion vector group represents motion vector predictors of a group of control points of a current coding block; determine motion vectors of control points of the current coding block based on the target motion vector group and the motion vector difference(s) MVDs that are obtained by parsing the bitstream; determine a prediction direction of the current coding block; obtain a motion vector of each subblock (for example, one or more subblocks) in the current coding block based on the determined motion vectors of the control points of the current coding block by using an affine transform model, where a size of the subblock is determined based on the prediction direction of the current coding block, or a size of the subblock is determined based on the prediction direction of the current coding block and a size of the current coding block; and perform motion compensation based on the motion vector of each subblock (for example, one or more subblocks) in the current coding block, to obtain a predicted pixel value of each subblock. In other words, a predicted pixel value of the current coding block is predicted based on motion vectors of one or more subblocks in the current coding block.

According to a fourteenth aspect, an embodiment of this application provides a video data decoding device, and the device includes:

a memory, configured to store video data in a form of a bitstream; and
a video decoder, configured to: parse a bitstream, to obtain an index; determine a target motion vector group in a candidate motion information list based on the index, where the target motion vector group represents motion vectors of a group of control points of a current coding block; determine a prediction direction of the current coding block; obtain a motion vector of each subblock (for example, one or more subblocks) in the current coding block based on determined motion vectors of control points of the current coding block by using a parameter affine transform model, where a size of the subblock is determined based on the prediction direction of the current coding block, or a size of the subblock is determined based on the prediction direction of the current coding block and a size of the current coding block; and perform motion compensation based on the motion vector of each subblock (for example, one or more subblocks) in the current coding block, to obtain a predicted pixel value of each subblock. In other words, a predicted pixel value of the current coding block is predicted based on motion vectors of one or more subblocks in the current coding block.

It should be understood that the technical solutions in the second to the fourteenth aspects of this application correspond to the technical solutions in the first aspect of this application. For beneficial effects brought by the aspects and corresponding feasible implementations, refer to the first aspect. Details are not described again.

Details of one or more embodiments are described in accompanying drawings and the following descriptions.

## BRIEF DESCRIPTION OF DRAWINGS

To describe the technical solutions in the embodiments of this application or in the background more clearly, the following describes the accompanying drawings for describing the embodiments of this application or the background.

FIG. 1 is a block diagram of a video encoding and decoding system in an implementation according to an embodiment of this application;

FIG. 2A is a block diagram of a video encoder in an implementation according to an embodiment of this application;

FIG. 2B is a schematic diagram of inter prediction in an implementation according to an embodiment of this application;

FIG. 2C is a block diagram of a video decoder in an implementation according to an embodiment of this application;

FIG. 3 is a schematic diagram of candidate locations of motion information in an implementation according to an embodiment of this application;

FIG. 4 is a schematic diagram of inherited control point motion vector prediction in an implementation according to an embodiment of this application;

FIG. 5A is a schematic diagram of constructed control point motion vector prediction in an implementation according to an embodiment of this application;

FIG. 5B is a schematic flowchart of combining motion information of control points to obtain constructed control point motion information in an implementation according to an embodiment of this application;

FIG. 6A is a flowchart of a decoding method in an implementation according to an embodiment of this application;

FIG. 6B is a schematic diagram of constructing a candidate motion vector list in an implementation according to an embodiment of this application;

FIG. 6C is a schematic diagram of a subblock (which is also referred to as a motion compensation unit) in an implementation according to an embodiment of this application;

FIG. 7A is a schematic flowchart of a picture prediction method according to an embodiment of this application;

FIG. 7B is a schematic structural diagram of a subblock (which is also referred to as a motion compensation unit) according to an embodiment of this application;

FIG. 7C is a schematic structural diagram of another subblock (which is also referred to as a motion compensation unit) according to an embodiment of this application;

FIG. 7D is a schematic flowchart of a decoding method according to an embodiment of this application;

FIG. 8A is a schematic structural diagram of a picture prediction apparatus according to an embodiment of this application;

FIG. 8B is a schematic structural diagram of an encoding device or a decoding device according to an embodiment of this application; and

FIG. 9 is a video coding system 1100 including the encoder 20 in FIG. 2A and/or the decoder 30 in FIG. 2C according to an example embodiment.

In the following, identical reference signs represent identical or at least functionally equivalent features unless otherwise specified.

## DESCRIPTION OF EMBODIMENTS

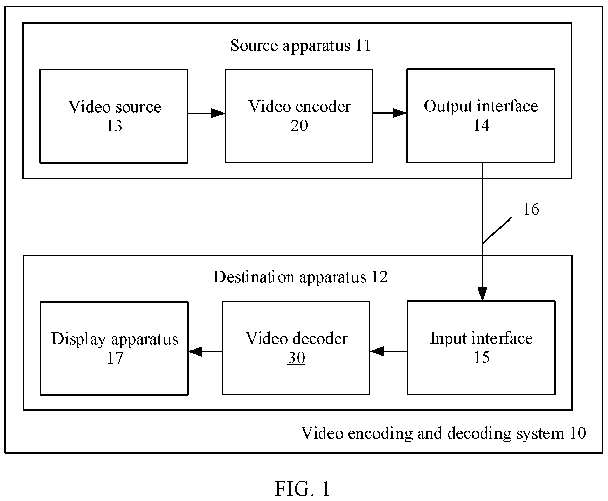

A video picture prediction solution provided in the embodiments of this application may be applied to video picture encoding or decoding. FIG. 1 is a schematic block diagram of a video encoding and decoding system 10 according to an embodiment of this application. As shown in FIG. 1, the system 10 includes a source apparatus 11 and a destination apparatus 12. The source apparatus 11 generates encoded video data and sends the encoded video data to the destination apparatus 12. The destination apparatus 12 is configured to receive the encoded video data, and decode the encoded video data for display. The source apparatus 11 and the destination apparatus 12 each may include any one of a wide range of apparatuses, including a desktop computer, a notebook computer, a tablet computer, a set-top box, a mobile phone such as a so-called "smart" phone, a so-called "smart" touch panel, a television, a camera, a display apparatus, a digital media player, a video game console, a video streaming transmission apparatus, and the like.

A picture prediction solution provided in the embodiments of this application for a picture block may be applied to video picture encoding or decoding. FIG. 1 is a schematic block diagram of a video encoding and decoding system 10 according to an embodiment of this application. As shown in FIG. 1, the system 10 includes a source apparatus 11 and a destination apparatus 12. The source apparatus 11 generates encoded video data and sends the encoded video data to the destination apparatus 12. The destination apparatus 12 is configured to receive the encoded video data, and decode the encoded video data for display. The source apparatus 11 and the destination apparatus 12 each may include any one of a wide range of apparatuses, including a desktop computer, a notebook computer, a tablet computer, a set-top box, a mobile phone such as a so-called "smart" phone, a so-called "smart" touch panel, a television, a camera, a display apparatus, a digital media player, a video game console, a video streaming transmission apparatus, and the like.

The destination apparatus 12 may receive the to-be-decoded encoded video data via a link 16. The link 16 may include any type of medium or apparatus capable of transmitting the encoded video data from the source apparatus 11 to the destination apparatus 12. In a possible implementation, the link 16 may include a communications medium enabling the source apparatus 11 to directly transmit the encoded video data to the destination apparatus 12 in real time. The encoded video data may be modulated according to a communications standard (for example, a wireless communications protocol) and transmitted to the destination apparatus 12. The communications medium may include any wireless or wired communications medium, for example, a radio frequency spectrum or one or more physical transmission lines. The communications medium may be a part of a packet-based network (for example, a local area network, a wide area network, or a global network of the internet). The communications medium may include a router, a switch, a base station, or any other device that can facilitate communication from the source apparatus 11 to the destination apparatus 12.

Alternatively, the video encoding and decoding system 10 further includes a storage apparatus. The encoded data may be output to the storage apparatus through an output interface 14. Similarly, the encoded data may be accessed from the storage apparatus through an input interface 15. The storage apparatus may include any one of a plurality of distributed or locally accessed data storage media, for example, a hard disk drive, a Blu-ray disc, a DVD, a CD-ROM, a flash memory, a volatile or nonvolatile memory, or any other suitable digital storage medium configured to store the encoded video data. In another feasible implementation, the storage apparatus may correspond to a file server or another intermediate storage apparatus capable of maintaining an encoded video generated by the source apparatus 11. The destination apparatus 12 may access the stored video data from the storage apparatus through streaming transmission or downloading. The file server may be any type of server capable of storing the encoded video data and transmitting the encoded video data to the destination apparatus 12. In a feasible implementation, the file server includes a website server, a file transfer protocol server, a network-attached storage apparatus, or a local disk drive. The destination apparatus 12 may access the encoded video data through any standard data connection including an internet connection. The data connection may include a wireless channel (for example, a Wi-Fi connection), a wired connection (for example, a cable modem), or a combination thereof, that is suitable for accessing the encoded video data stored in the file server. Transmission of the encoded video data from the storage apparatus may be streaming transmission, downloading transmission, or a combination thereof.

The technologies in this application are not necessarily limited to wireless applications or settings. The technologies may be applied to video decoding, to support any one of a variety of multimedia applications, for example, over-the-air television broadcasting, cable television transmission, satellite television transmission, streaming video transmission (for example, through the internet), digital video encoding for storage in a data storage medium, decoding of a digital video stored in a data storage medium, or another application. In some possible implementations, the system 10 may be configured to support unidirectional or bidirectional video transmission, so as to support applications such as streaming video transmission, video playing, video broadcasting, and/or videotelephony.

In a possible implementation of FIG. 1, the source apparatus 11 may include a video source 13, a video encoder 20, and the output interface 14. In some applications, the output interface 14 may include a modulator/demodulator (a modem) and/or a transmitter. In the source apparatus 11, the video source 13 may include, for example, the following source devices: a video capturing apparatus (for example, a video camera), an archive containing a previously captured video, a video feed-in interface for receiving a video from a video content provider, and/or a computer graphics system for generating computer graphics data as a source video, or a combination thereof. In a possible implementation, if the video source 13 is a video camera, the source apparatus 11 and the destination apparatus 12 may constitute a so-called camera phone or a video phone. For example, the technologies described in this application may be applied to video decoding, and may be applied to wireless and/or wired applications.

The video encoder 20 may encode a video generated through capturing, pre-capturing, or calculation. The encoded video data may be directly transmitted to the destination apparatus 12 through the output interface 14 of the source apparatus 11. The encoded video data may also (or alternatively) be stored in the storage apparatus for subsequent access by the destination apparatus 12 or another apparatus for decoding and/or playing.

The destination apparatus 12 includes the input interface 15, a video decoder 30, and a display apparatus 17. In some applications, the input interface 15 may include a receiver and/or a modem. The input interface 15 of the destination apparatus 12 receives the encoded video data via the link 16. The encoded video data transmitted to or provided for the storage apparatus via the link 16 may include a plurality of syntax elements generated by the video encoder 20 for a video decoder of the video decoder 30 to decode the video data. These syntax elements may be included in the encoded video data that is transmitted on the communications medium, stored in the storage medium, or stored in the file server.

The display apparatus 17 may be integrated with the destination apparatus 12 or disposed outside the destination apparatus 12. In some possible implementations, the destination apparatus 12 may include an integrated display apparatus and also be configured to connect to an interface of an external display apparatus. In other possible implementations, the destination apparatus 12 may be a display apparatus. Generally, the display apparatus 17 displays decoded video data to a user, and may include any one of a variety of display apparatuses, for example, a liquid crystal display, a plasma display, an organic light-emitting diode display, or another type of display apparatus.

The video encoder 20 and the video decoder 30 may operate according to, for example, a next-generation video coding compression standard (H.266) that is currently being developed, and may comply with an H.266 test model (such as JEM). Alternatively, the video encoder 20 and the video decoder 30 may operate according to other dedicated or industrial standards such as the ITU-T H.265 standard or the ITU-T H.264 standard, or extensions of such standards, where the ITU-T H.265 standard is also referred to as the high efficiency video coding standard, and the ITU-T H.264 standard is alternatively referred to as MPEG-4 Part 10 or advanced video coding (advanced video coding, AVC). However, the technologies in this application are not limited to any specific coding standard. Other possible implementations of the video compression standard include MPEG-2 and ITU-T H.263.

Although not shown in FIG. 1, in some aspects, the video encoder 20 and the video decoder 30 may be integrated with an audio encoder and an audio decoder respectively, and each may include an appropriate multiplexer-demultiplexer (MUX-DEMUX) unit or other hardware and software to encode both audio and a video in a common data stream or a separate data stream. If applicable, in some feasible implementations, the MUX-DEMUX unit may comply with the ITU H.223 multiplexing protocol or other protocols such as the user datagram protocol (UDP).

The video encoder 20 and the video decoder 30 each may be implemented as any one of a variety of appropriate encoder circuits, for example, one or more microprocessors, a digital signal processor (digital signal processing, DSP), an application-specific integrated circuit (application-specific integrated circuit, ASIC), a field-programmable gate array (field-programmable gate array, FPGA), discrete logic, software, hardware, firmware, or any combination thereof. When some of the technologies are implemented as software, an apparatus may store an instruction for the software into an appropriate non-transitory computer-readable medium, and execute the instruction in a form of hardware by using one or more processors, to implement the technologies of this application. Each of the video encoder 20 and the video decoder 30 may be included in one or more encoders or decoders, and either of the video encoder 20 and the video decoder 30 may be integrated as a part of a combined encoder/decoder (CODEC) in a corresponding apparatus.

JCT-VC has developed the H.265 (HEVC) standard. HEVC standardization is based on an evolved model of a video decoding apparatus, where the model is referred to as an HEVC test model (HM). A latest H.265 standard document is available at http://www.itu.int/rec/T-REC-H.265. A latest version of the standard document is H.265 (12/16), and the standard document is incorporated herein by reference in its entirety. In the HM, it is assumed that the video decoding apparatus has several additional capabilities relative to an existing algorithm of ITU-T H.264/AVC.

JVET is committed to developing the H.266 standard. An H.266 standardization process is based on an evolved model of the video decoding apparatus, where the model is referred to as the H.266 test model. H.266 algorithm descriptions are available at http://phenix.int-evry.fr/jvet, and latest algorithm descriptions are included in JVET-F1001-v2. A document of the algorithm descriptions is incorporated herein by reference in its entirety. In addition, reference software for a JEM test model is available at https://jvet.hhi.fraunhofer.de/svn/svn_HMJEMSoftware/, and is also incorporated herein by reference in its entirety.

Generally, in descriptions of an HM working model, a video frame or picture may be partitioned into a sequence of tree blocks including both luma and chroma samples or a sequence of largest coding units (largest coding unit, LCU), where the LCU is also referred to as a CTU. A tree block has a function similar to that of a macroblock in the H.264 standard. A slice includes several consecutive tree blocks in a decoding order. The video frame or picture may be partitioned into one or more slices. Each tree block may be partitioned into coding units based on a quadtree. For example, a tree block serving as a root node of the quadtree may be partitioned into four child nodes, and each child node may also serve as a parent node and be partitioned into four other child nodes. A final non-partitionable child node serving as a leaf node of the quadtree includes a decoding node, for example, a decoded picture block. In syntax data associated with a decoded bitstream, a maximum quantity of times that the tree block can be partitioned and a minimum size of the decoding node may be defined.

A coding unit includes a decoding node, a prediction unit (prediction unit, PU), and a transform unit (transform unit, TU) associated with the decoding node. A size of the CU corresponds to a size of the decoding node, and a shape of the CU needs to be a square. The size of the CU may range from 8 x 8 pixels to a maximum of 64 x 64 pixels, or may be a larger tree block size. Each CU may include one or more PUs and one or more TUs. For example, syntax data associated with the CU may describe partitioning of the CU into one or more PUs. A partition mode may vary among a case in which the CU is skipped or encoded in a direct mode, a case in which the CU is encoded in an intra prediction mode, and a case in which the CU is encoded in an inter prediction mode. The PU obtained through partitioning may be in a non-square shape. For example, the syntax data associated with the CU may also describe partitioning of the CU into one or more TUs based on the quadtree. The TU may be in a square or non-square shape.

The HEVC standard allows TU-based transform. Different CUs may include different TUs. A size of a TU is usually set based on a size of a PU within a given CU defined for a partitioned LCU. However, a case may not always be like this. The size of the TU is usually the same as or less than that of the PU. In some feasible implementations, a quadtree structure referred to as a "residual quadtree" (residual qualtree, RQT) may be used to partition a residual sample corresponding to a CU into smaller units. A leaf node of the RQT may be referred to as a TU. A pixel difference associated with the TU may be transformed to generate a transform coefficient, and the transform coefficient may be quantized.

Generally, the PU includes data related to a prediction process. For example, when the PU is encoded in an intra mode, the PU may include data describing the intra prediction mode of the PU. In another feasible implementation, when the PU is encoded in an inter mode, the PU may include data defining a motion vector for the PU. For example, the data defining the motion vector for the PU may describe a horizontal component of the motion vector, a vertical component of the motion vector, resolution (for example, 1/4 pixel precision or 1/8 pixel precision) of the motion vector, a reference picture to which the motion vector points, and/or a reference picture list (for example, a list 0, a list 1, or a list C) of the motion vector.

Generally, transform and quantization processes are used for the TU. A given CU including one or more PUs may also include one or more TUs. After prediction, the video encoder 20 may calculate a residual value corresponding to the PU. The residual value includes a pixel difference. The pixel difference may be transformed into a transform coefficient, and the transform coefficient is quantized and is scanned by using a TU, to generate serialized transform coefficients for entropy decoding. In this application, the term "picture block" is usually used to represent the decoding node of the CU. In some specific applications, in this application, the term "picture block" may also be used to represent the tree block including the decoding node, the PU, and the TU, for example, the LCU or the CU.

The video encoder 20 encodes video data. The video data may include one or more pictures. The video encoder 20 may generate a bitstream, where the bitstream includes encoding information of the video data in a form of a bit stream. The encoding information may include encoded picture data and associated data. The associated data may include a sequence parameter set (sequence parameter set, SPS), a picture parameter set (picture parameter set, PPS), and another syntax structure. The SPS may include a parameter applied to zero or a plurality of sequences. The SPS describes general higher-layer parameters of a coded video sequence (coded video sequence, CVS), and the sequence parameter set SPS includes information required by all slices (slice) in the CVS. The PPS may include a parameter applied to zero or a plurality of pictures. A syntax structure is a set of zero or a plurality of syntax elements arranged in a bitstream in a specified order.

In a feasible implementation, the HM supports prediction for various PU sizes. Assuming that a size of a given CU is 2N x 2N, the HM supports intra prediction for a PU size of 2N x 2N or N x N, and inter prediction for a symmetric PU size of 2N x 2N, 2N x N, N x 2N, or N x N. The HM also supports asymmetric partitioning of inter prediction for PU sizes of 2N x nU, 2N x nD, nL x 2N, and nR x 2N. In asymmetric partitioning, the CU is not partitioned in a direction, and is partitioned into two parts in another direction, where one part accounts for 25% of the CU and the other part accounts for 75% of the CU. The part accounting for 25% of the CU is indicated by an indicator including "n" followed by "U (Up)", "D (Down)", "L (Left)" or "R (Right)". Therefore, for example, "2N x nU" refers to a horizontally partitioned 2N x 2N CU, with a 2N x 0.5N PU at the top and a 2N x 1.5N PU at the bottom.

In this application, "N x N" and "N multiplied by N" may be used interchangeably to indicate a pixel size of a picture block in a vertical dimension and a horizontal dimension, for example, 16 x 16 pixels or 16 multiplied by 16 pixels. Usually, a 16 x 16 block has 16 pixels in a vertical direction (y = 16) and 16 pixels in a horizontal direction (x = 16). Similarly, an N x N block usually has N pixels in a vertical direction and N pixels in a horizontal direction, where N is a nonnegative integer. Pixels in a block may be arranged in rows and columns. In addition, in a block, a quantity of pixels in the horizontal direction and a quantity of pixels in the vertical direction may not be necessarily the same. For example, a block may include N x M pixels, where M is not necessarily equal to N.

After performing intra or inter prediction decoding on the PU in the CU, the video encoder 20 may calculate residual data of the TU in the CU. The PU may include pixel data in a spatial domain (which is also referred to as a pixel domain). The TU may include a coefficient in a transform domain after transform (for example, discrete cosine transform (discrete cosine transform, DCT), integer transform, wavelet transform, or conceptually similar transform) is applied to residual video data. The residual data may correspond to a pixel difference between a pixel of an unencoded picture and a predicted value corresponding to the PU. The video encoder 20 may generate a TU including residual data of the CU, and then transform the TU to generate a transform coefficient of the CU.

The JEM model further improves a video picture coding structure. Specifically, a block coding structure referred to as a "quadtree plus binary tree" (QTBT) structure is introduced. Without using concepts such as CU, PU, and TU in HEVC, the QTBT structure supports more flexible CU partition shapes. A CU may be in a square shape or rectangular shape. Quadtree partitioning is first performed on a CTU, and binary tree partitioning is further performed on a leaf node of the quadtree. In addition, there are two binary tree partitioning modes: symmetric horizontal partitioning and symmetric vertical partitioning. A leaf node of a binary tree is referred to as a CU. The CU in the JEM model cannot be further partitioned in a prediction process or a transform process. In other words, the CU, the PU, and the TU in the JEM model have a same block size. In the existing JEM model, a maximum CTU size is 256 x 256 luma pixels.

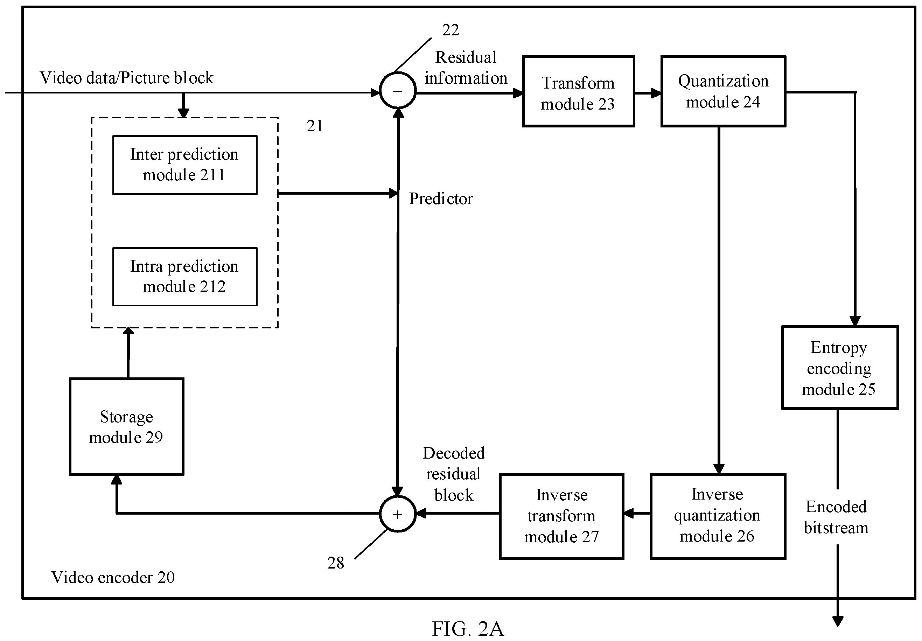

FIG. 2A is a schematic block diagram of a video encoder 20 according to an embodiment of this application.

As shown in FIG. 2A, the video encoder 20 may include a prediction module 21, a summator 22, a transform module 23, a quantization module 24, and an entropy encoding module 25. In an example, the prediction module 21 may include an inter prediction module 211 and an intra prediction module 212. An internal structure of the prediction module 21 is not limited in this embodiment of this application. Optionally, for a video encoder with a hybrid architecture, the video encoder 20 may further include an inverse quantization module 26, an inverse transform module 27, and a summator 28.

In a feasible implementation of FIG. 2A, the video encoder 20 may further include a storage module 29. It should be understood that the storage module 29 may be alternatively disposed outside the video encoder 20.

In another feasible implementation, the video encoder 20 may further include a filter (not shown in FIG. 2A), to filter a boundary of a picture block, to remove an artifact from a reconstructed video picture. When necessary, the filter filters an output from the summator 28.

Optionally, the video encoder 20 may further include a partitioning unit (not shown in FIG. 2A). The video encoder 20 receives video data, and the partitioning unit partitions the video data into picture blocks. Such partitioning may further include partitioning into slices, picture blocks, or other larger units, and (for example) picture block partitioning performed based on quadtree structures of LCUs and CUs. For example, the video encoder 20 is a component for encoding a picture block in a to-be-encoded video slice. Generally, the slice may be partitioned into a plurality of picture blocks (and may be partitioned into sets of picture blocks). Slice types include I (mainly used for intra picture encoding), P (used for inter forward reference prediction picture encoding), and B (used for inter bidirectional reference prediction picture encoding).

The prediction module 21 is configured to perform intra or inter prediction for a current to-be-processed picture block, to obtain a predicted value (which may be referred to as prediction information in this application) of the current block. In this embodiment of this application, the current to-be-processed picture block may be briefly referred to as a to-be-processed block, a current picture block, or a current block. Alternatively, in an encoding phase, the current to-be-processed picture block may be briefly referred to as a current coding block, and in a decoding phase, the current to-be-processed picture block may be briefly referred to as a current decoding block or a current coding block.

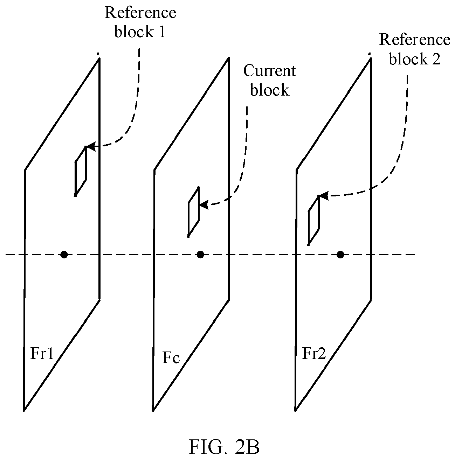

Specifically, the inter prediction module 211 included in the prediction module 21 performs inter prediction for the current block, to obtain an inter predicted value. The intra prediction module 212 performs intra prediction for the current block, to obtain an intra predicted value. The inter prediction module 211 searches a reconstructed picture for a matched reference block for the current block in a current picture, and uses a pixel value of a pixel in the reference block as prediction information or a predicted value (no distinguishing is made between information and value below) of a pixel value of a pixel in the current block. This process is referred to as motion estimation (Motion estimation, ME) (as shown in FIG. 2B), and motion information of the current block is transmitted.

It should be noted that motion information of a picture block includes prediction direction indication information (which usually indicates forward prediction, backward prediction, or bidirectional prediction), one or two motion vectors (Motion vector, MV) that point to the reference block, and indication information (which is usually denoted as a reference frame index, Reference index) of a picture in which the reference block is located.

Forward prediction means selecting a reference picture from a forward reference picture set, to obtain a reference block for a current block. Backward prediction means selecting a reference picture from a backward reference picture set, to obtain a reference block for a current block. Bidirectional prediction means selecting a reference picture from each of a forward reference picture set and a backward reference picture set, to obtain reference blocks. When bidirectional prediction is used, the current block has two reference blocks. Each reference block needs to be indicated by using a motion vector and a reference frame index, and then the predicted value of the pixel value of the pixel in the current block is determined based on pixel values of pixels in the two reference blocks.

In a motion estimation process, a plurality of reference blocks in the reference picture needs to be tried for the current block, and which reference block or blocks are finally used for prediction is determined through rate-distortion optimization (Rate-distortion optimization, RDO) or another method.

After the prediction module 21 generates the predicted value of the current block through inter prediction or intra prediction, the video encoder 20 subtracts the predicted value from the current block, to produce residual information. The transform module 23 is configured to transform the residual information. The transform module 23 applies transform such as discrete cosine transform (discrete cosine transformation, DCT) or conceptually similar transform (for example, discrete sine transform DST) to transform the residual information into a residual transform coefficient. The transform module 23 may send the obtained residual transform coefficient to the quantization module 24. The quantization module 24 quantizes the residual transform coefficient to further reduce a bit rate. In some feasible implementations, the quantization module 24 may continue to scan a matrix including the quantized transform coefficient. Alternatively, the entropy encoding module 25 may perform scanning.

After quantization, the entropy encoding module 25 may perform entropy encoding on the quantized residual transform coefficient to obtain a bitstream. For example, the entropy encoding module 25 may perform context-adaptive variable-length coding (CAVLC), context-adaptive binary arithmetic coding (CABAC), syntax-based context-adaptive binary arithmetic coding (SBAC), probability interval partitioning entropy (PIPE) coding, or another entropy encoding methodology or technology. After the entropy encoding module 25 performs entropy encoding, the encoded bitstream may be transmitted to the video decoder 30, or stored for subsequent transmission or retrieval by the video decoder 30.

The inverse quantization module 26 and the inverse transform module 27 perform inverse quantization and inverse transform respectively, to reconstruct a residual block in a pixel domain for subsequent use as a reference block in a reference picture. The summator 28 adds residual information obtained through reconstruction to the predicted value generated by the prediction module 21, to generate a reconstructed block, and uses the reconstructed block as the reference block for storage in the storage module 29. The reference block may be used by the prediction module 21 to perform inter or intra prediction on a block in a subsequent video frame or picture.

It should be understood that another structural variant of the video encoder 20 may be used to encode a video stream. For example, for some picture blocks or picture frames, the video encoder 20 may directly quantize residual information without processing by the transform module 23 or processing by the inverse transform module 27. Alternatively, for some picture blocks or picture frames, the video encoder 20 does not generate residual information, and correspondingly, processing by the transform module 23, the quantization module 24, the inverse quantization module 26, and the inverse transform module 27 is not required. Alternatively, the video encoder 20 may directly store a reconstructed picture block as a reference block without processing by a filter unit. Alternatively, the quantization module 24 and the inverse quantization module 26 in the video encoder 20 may be combined together. Alternatively, the transform module 23 and the inverse transform module 27 in the video encoder 20 may be combined together. Alternatively, the summator 22 and the summator 28 may be combined together.

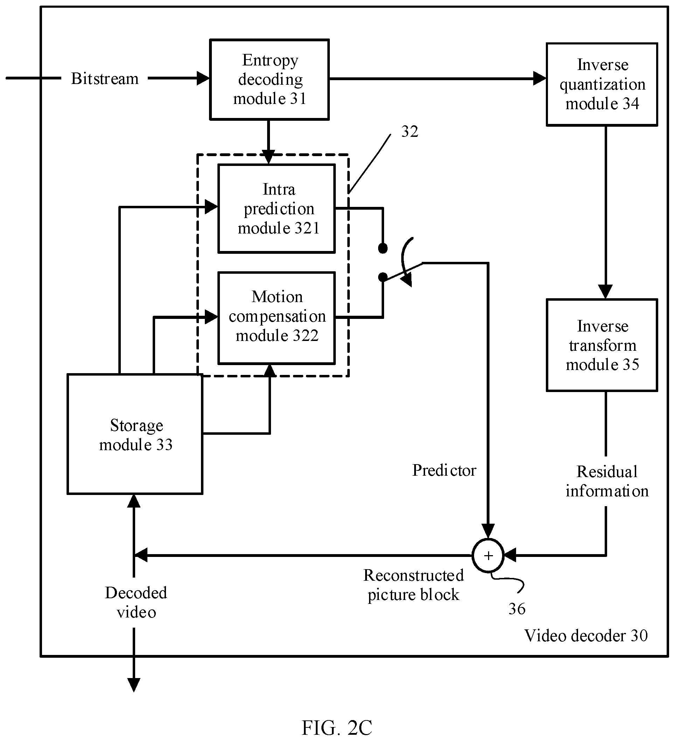

FIG. 2C is a schematic block diagram of a video decoder 30 according to an embodiment of this application.

As shown in FIG. 2C, the video decoder 30 may include an entropy decoding module 31, a prediction module 32, an inverse quantization module 34, an inverse transform module 35, and a reconstruction module 36. In an example, the prediction module 32 may include a motion compensation module 322 and an intra prediction module 321. This is not limited in this embodiment of this application.

In a feasible implementation, the video decoder 30 may further include a storage module 33. It should be understood that the storage module 33 may be alternatively disposed outside the video decoder 30. In some feasible implementations, the video decoder 30 may perform an example decoding process inverse to the encoding process described with respect to the video encoder 20 in FIG. 2A.

During decoding, the video decoder 30 receives a bitstream from the video encoder 20. The bitstream received by the video decoder 30 successively goes through entropy decoding, inverse quantization, and inverse transform performed by the entropy decoding module 31, the inverse quantization module 34, and the inverse transform module 35 respectively, to obtain residual information. Whether intra prediction or inter prediction is performed for a current block is determined based on the bitstream. If intra prediction is performed, the intra prediction module 321 in the prediction module 32 constructs prediction information based on a pixel value of a reference pixel in a reconstructed block around the current block by using the intra prediction method. If inter prediction is performed, the motion compensation module 322 needs to obtain motion information through parsing, determine a reference block in a reconstructed picture block based on the obtained motion information, and use a pixel value of a pixel in the reference block as prediction information (this process is referred to as motion compensation (motion compensation, MC)). The reconstruction module 36 can obtain reconstruction information by using the prediction information and the residual information.

As noted in the foregoing, this application relates to, for example, inter coding. Therefore, specific technologies of this application may be executed by the motion compensation module 322. In other feasible implementations, one or more other units of the video decoder 30 may additionally or alternatively be responsible for executing the technologies of this application.

The following first describes concepts in this application.

(1) Inter prediction mode

In HEVC, two inter prediction modes are used: an advanced motion vector prediction (advanced motion vector prediction, AMVP) mode and a merge (merge) mode.

In the AMVP mode, spatially or temporally neighboring encoded blocks (denoted as neighboring blocks) of a current block are first traversed. A candidate motion vector list (which may also be referred to as a motion information candidate list) is constructed based on motion information of the neighboring blocks. Then, an optimal motion vector is determined in the candidate motion vector list based on rate-distortion costs, and candidate motion information with minimum rate-distortion costs is used as a motion vector predictor (motion vector predictor, MVP) of the current block. Locations and a traversal order of the neighboring blocks are predefined. The rate-distortion costs are obtained through calculation according to a formula (1), where J represents the rate-distortion costs RD costs, SAD is a sum of absolute differences (sum of absolute differences, SAD) between an original pixel value and a predicted pixel value obtained through motion estimation by using a candidate motion vector predictor, R represents a bit rate, and λ represents a Lagrange multiplier. An encoder side transfers an index value of the selected motion vector predictor in the candidate motion vector list and a reference frame index value to a decoder side. Further, motion search is performed in an MVP-centered neighboring domain, to obtain an actual motion vector of the current block. The encoder side transfers a difference (motion vector difference) between the MVP and the actual motion vector to the decoder side.

$$J = SAD + \lambda R \quad (1)$$

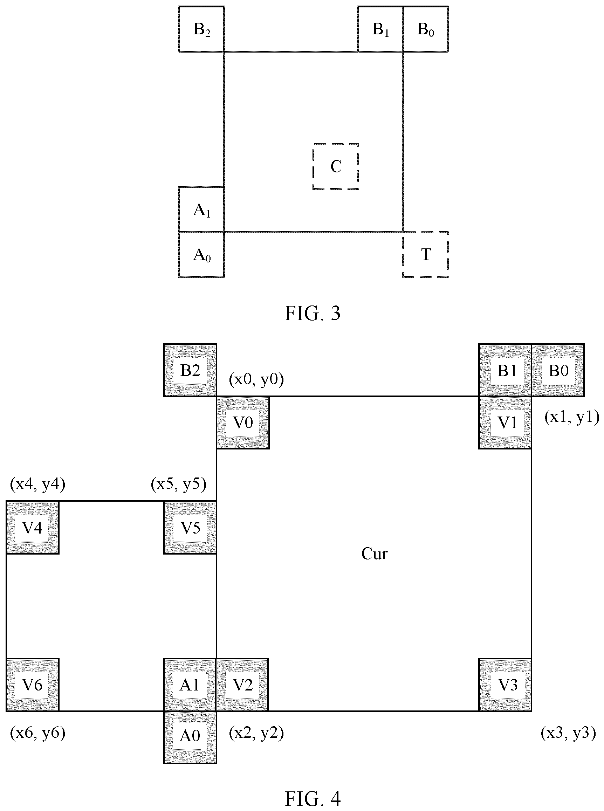

In the merge mode, a candidate motion vector list is first constructed based on motion information of spatially or temporally neighboring encoded blocks of a current block. Then, rate-distortion costs are calculated to determine optimal motion information in the candidate motion vector list as motion information of the current block, and an index value (denoted as a merge index, the same below) of a location of the optimal motion information in the candidate motion vector list is transferred to the decoder side. Spatial candidate motion information and temporal candidate motion information of the current block are shown in FIG. 3. The spatial candidate motion information is from five spatially neighboring blocks (A0, A1, B0, B1, and B2). If a neighboring block is unavailable (the neighboring block does not exist, or the neighboring block is not encoded, or a prediction mode used for the neighboring block is not the inter prediction mode), motion information of the neighboring block is not added to the candidate motion vector list. The temporal candidate motion information of the current block is obtained after an MV of a collocated block in a reference frame is scaled based on picture order counts (picture order count, POC) of the reference frame and a current frame. Whether a block at a location T in the reference frame is available is first determined. If the block is unavailable, a block at a location C is selected.

Similar to the AMVP mode, in the merge mode, locations and a traversal order of the neighboring blocks are also predefined. In addition, the locations and the traversal order of the neighboring blocks may be different in different modes.

It can be learned that a candidate motion vector list needs to be maintained in both the AMVP mode and the merge mode. Before new motion information is added to the candidate list each time, whether same motion information already exists in the list is first checked. If the same motion information exists in the list, the motion information is not added to the list. This checking process is referred to as pruning of the candidate motion vector list. Pruning of the list is to avoid the same motion information in the list, to avoid redundant rate-distortion cost calculation.

During inter prediction in HEVC, same motion information is used for all pixels in a coding block, and then motion compensation is performed based on the motion information, to obtain predicted values of the pixels in the coding block. However, in the coding block, not all pixels have a same motion characteristic. Using the same motion information may result in inaccurate motion compensation prediction and more residual information.

In existing video coding standards, block matching motion estimation based on a translational motion model is used, and it is assumed that motion of all pixels in a block is consistent. However, in the real world, there are a variety of movements. Many objects, for example, a rotating object, a roller coaster rotating in different directions, fireworks, and some stunts in movies, are not in translational motion. If these moving objects, especially those in a UGC scenario, are encoded by using a block motion compensation technology based on the translational motion model in the existing coding standard, coding efficiency is greatly affected. Therefore, a non-translational motion model, for example, an affine motion model, is introduced to further improve the coding efficiency.

Based on this, in terms of different motion models, the AMVP mode may be divided into a translational model-based AMVP mode and a non-translational model-based AMVP mode, and the merge mode may be divided into a translational model-based merge mode and a non-translational motion model-based merge mode.

(2) Non-translational motion model

In non-translational motion model-based prediction, a same motion model is used on an encoder side and a decoder side to derive motion information of each motion compensation subunit in a current block, and motion compensation is performed based on the motion information of the motion compensation subunit to obtain a prediction block, so as to improve prediction efficiency. Common non-translational motion models include a 4-parameter affine motion model and a 6-parameter affine motion model.

The motion compensation subunit in the embodiments of this application may be a pixel or a pixel block that is obtained through partitioning according to a specific method and whose size is $N_1 \times N_2$, where both $N_1$ and $N_2$ are positive integers, and $N_1$ may be equal to $N_2$ or may not be equal to $N_2$.

The 4-parameter affine motion model is shown as a formula (2):

$$\begin{cases} vx = a_1 + a_3 x + a_4 y \\ vy = a_2 - a_4 x + a_3 y \end{cases} \tag{2}$$

The 4-parameter affine motion model may be represented by motion vectors of two pixels and coordinates of the two pixels relative to a top-left pixel of a current block. A pixel used to represent a motion model parameter is referred to as a control point. If pixels in the top-left corner (0, 0) and the top-right corner (W, 0) are used as control points, motion vectors (vx0, vy0) and (vx1, vy1) of the control points in the top-left corner and the top-right corner of the current block are first determined. Then, motion information of each motion compensation subunit of the current block is obtained according to a formula (3), where (x, y) is coordinates of the motion compensation subunit relative to the top-left pixel of the current block, and W represents the width of the current block.

$$\begin{cases} vx = \frac{vx_1 - vx_0}{W} x - \frac{vy_1 - vy_0}{W} y + vx_0 \\ vy = \frac{vy_1 - vy_0}{W} x + \frac{vx_1 - vx_0}{W} y + vy_0 \end{cases} \tag{3}$$

The 6-parameter affine motion model is shown as a formula (4):

$$\begin{cases} vx = a_1 + a_3 x + a_4 y \\ vy = a_2 + a_5 x + a_6 y \end{cases} \tag{4}$$

The 6-parameter affine motion model may be represented by motion vectors of three pixels and coordinates of the three pixels relative to a top-left pixel of a current block. If pixels in the top-left corner (0, 0), the top-right corner (W, 0), and the bottom-left corner (0, H) are used as control points, motion vectors (vx0, vy0), (vx1, vy1), and (vx2, vy2) of the control points in the top-left corner, the top-right corner, and the bottom-left corner of the current block are first determined. Then, motion information of each motion compensation subunit of the current block is obtained according to a formula (5), where (x, y) is coordinates of the motion compensation subunit relative to the top-left pixel of the current block, and W and H respectively represent the width and the height of the current block.

$$\begin{cases} vx = \frac{vx_1 - vx_0}{W} x + \frac{vx_2 - vy_0}{H} y + vx_0 \\ vy = \frac{vy_1 - vy_0}{W} x + \frac{vy_2 - vx_0}{H} y + vy_0 \end{cases} \tag{5}$$

A coding block that is predicted by using the affine motion model is referred to as an affine coding block.

Usually, motion information of control points of the affine coding block may be obtained by using an affine motion model-based advanced motion vector prediction (Advanced Motion Vector Prediction, AMVP) mode or an affine motion model-based merge (Merge) mode.

The motion information of the control points of the current coding block may be obtained by using an inherited control point motion vector prediction method or a constructed control point motion vector prediction method.

(3) Inherited control point motion vector prediction method

In the inherited control point motion vector prediction method, a candidate control point motion vector of a current block is determined by using a motion model of a neighboring encoded affine coding block.

A current block shown in FIG. 3 is used as an example. Neighboring-location blocks of the current block are traversed in a specified order, for example, A1→B1→B0→A0→B2, to find an affine coding block in which a neighboring-location block of the current block is located, and obtain motion information of control points of the affine coding block. Further, a control point motion vector (for a merge mode) or a control point motion vector predictor (for an AMVP mode) is derived for the current block by using a motion model constructed based on the motion information of the control points of the affine coding block. The order A1→B1→B0→A0→B2 is merely used as an example. An order of another combination is also applicable to this application. In addition, the neighboring-location blocks are not limited to A1, B1, B0, A0, and B2.

The neighboring-location block may be a pixel, or may be a pixel block that is of a preset size and that is obtained through partitioning according to a specific method, for example, a 4 x 4 pixel block, a 4 x 2 pixel block, or a pixel block of another size. This is not limited.

The following describes a determining process by using A1 as an example, and other cases are deduced by analogy.

As shown in FIG. 4, if a coding block in which A1 is located is a 4-parameter affine coding block, a motion vector (vx4, vy4) of the top-left corner (x4, y4) of the affine coding block and a motion vector (vx5, vy5) of the top-right corner (x5, y5) of the affine coding block are obtained. A motion vector (vx0, vy0) of the top-left corner (x0, y0) of the current affine coding block is obtained through calculation according to a formula (6), and a motion vector (vx1, vy1) of the top-right corner (x1, y1) of the current affine coding block is obtained through calculation according to a formula (7).

$$\begin{cases} vx_0 = vx_4 + \frac{(vx_5-vx_4)}{x_5-x_4} \times (x_0 - x_4) - \frac{(vy_5-vy_4)}{x_5-x_4} \times (y_0 - y_4) \\ vy_0 = vy_4 + \frac{(vy_5-vy_4)}{x_5-x_4} \times (x_0 - x_4) + \frac{(vx_5-vx_4)}{x_5-x_4} \times (y_0 - y_4) \end{cases} \quad (6)$$

$$\begin{cases} vx_1 = vx_4 + \frac{(vx_5-vx_4)}{x_5-x_4} \times (x_1 - x_4) - \frac{(vy_5-vy_4)}{x_5-x_4} \times (y_1 - y_4) \\ vy_1 = vy_4 + \frac{(vy_5-vy_4)}{x_5-x_4} \times (x_1 - x_4) + \frac{(vx_5-vx_4)}{x_5-x_4} \times (y_1 - y_4) \end{cases} \quad (7)$$

A combination of the motion vector (vx0, vy0) of the top-left corner (x0, y0) of the current block and the motion vector (vx1, vy1) of the top-right corner (x1, y1) of the current block that are obtained based on the affine coding block in which A1 is located is the candidate control point motion vector of the current block.

If a coding block in which A1 is located is a 6-parameter affine coding block, a motion vector (vx4, vy4) of the top-left corner (x4, y4) of the affine coding block, a motion vector (vx5, vy5) of the top-right corner (x5, y5) of the affine coding block, and a motion vector (vx6, vy6) of the bottom-left corner (x6, y6) of the affine coding block are obtained. A motion vector (vx0, vy0) of the top-left corner (x0, y0) of the current block is obtained through calculation according to a formula (8), a motion vector (vx1, vy1) of the top-right corner (x1, y1) of the current block is obtained through calculation according to a formula (9), and a motion vector (vx2, vy2) of the bottom-left corner (x2, y2) of the current block is obtained through calculation according to a formula (10).

$$\begin{cases} vx_0 = vx_4 + \frac{(vx_5-vx_4)}{x_5-x_4} \times (x_0 - x_4) + \frac{(vx_6-vx_4)}{y_6-y_4} \times (y_0 - y_4) \\ vy_0 = vy_4 + \frac{(vy_5-vy_4)}{x_5-x_4} \times (x_0 - x_4) + \frac{(vy_6-vy_4)}{y_6-y_4} \times (y_0 - y_4) \end{cases} \quad (8)$$

$$\begin{cases} vx_1 = vx_4 + \frac{(vx_5-vx_4)}{x_5-x_4} \times (x_1 - x_4) + \frac{(vx_6-vx_4)}{y_6-y_4} \times (y_1 - y_4) \\ vy_1 = vy_4 + \frac{(vy_5-vy_4)}{x_5-x_4} \times (x_1 - x_4) + \frac{(vy_6-vy_4)}{y_6-y_4} \times (y_1 - y_4) \end{cases} \quad (9)$$

$$\begin{cases} vx_2 = vx_4 + \frac{(vx_5-vx_4)}{x_5-x_4} \times (x_2 - x_4) + \frac{(vx_6-vx_4)}{y_6-y_4} \times (y_2 - y_4) \\ vy_2 = vy_4 + \frac{(vy_5-vy_4)}{x_5-x_4} \times (x_2 - x_4) + \frac{(vy_6-vy_4)}{y_6-y_4} \times (y_2 - y_4) \end{cases} \quad (10)$$

A combination of the motion vector (vx0, vy0) of the top-left corner (x0, y0) of the current block, the motion vector (vx1, vy1) of the top-right corner (x1, y1) of the current block, and the motion vector (vx2, vy2) of the bottom-left corner (x2, y2) of the current block that are obtained based on the affine coding block in which A1 is located is the candidate control point motion vector of the current block.

It should be noted that another motion model, candidate location, and search and traversal order are also applicable to this application. Details are not described in the embodiments of this application.

It should be noted that a method for representing motion models of a neighboring coding block and a current coding block by using other control points is also applicable to this application. Details are not described herein.

(4) Constructed control point motion vector (constructed control point motion vectors) prediction method 1

In the constructed control point motion vector prediction method, motion vectors of neighboring encoded blocks around a control point of a current block are combined into a motion vector of the control point of the current affine coding block, and there is no need to consider whether the neighboring encoded blocks are affine coding blocks.

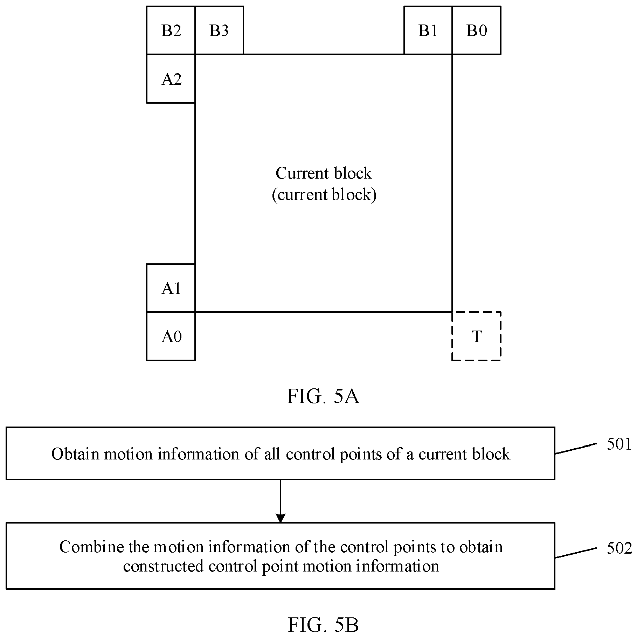

Motion vectors of the top-left corner and the top-right corner of the current block are determined by using motion information of the neighboring encoded blocks around the current coding block. FIG. 5A is used as an example to describe the constructed control point motion vector prediction method. It should be noted that FIG. 5A is merely an example.

As shown in FIG. 5A, motion vectors of neighboring encoded blocks A2, B2, and B3 of the top-left corner are used as candidate motion vectors for the motion vector of the top-left corner of the current block, and motion vectors of neighboring encoded blocks B1 and B0 of the top-right corner are used as candidate motion vectors for the motion vector of the top-right corner of the current block. The candidate motion vectors of the top-left corner and the top-right corner are combined to constitute a plurality of 2-tuples. Motion vectors, of two encoded blocks, included in a 2-tuple may be used as candidate control point motion vectors of the current block, as shown in the following formula (11A):

$$\{v_{A2}, v_{B1}\}, \{v_{A2}, v_{B0}\}, \{v_{B2}, v_{B1}\}, \{v_{B2}, v_{B0}\}, \{v_{B3}, v_{B1}\}, \{v_{B3}, v_{B0}\} \qquad (11A)$$

Herein, $v_{A2}$ represents the motion vector of A2, $v_{B1}$ represents the motion vector of B1, $v_{B0}$ represents the motion vector of B0, $v_{B2}$ represents the motion vector of B2, and $v_{B3}$ represents the motion vector of B3.

As shown in FIG. 5A, motion vectors of neighboring encoded blocks A2, B2, and B3 of the top-left corner are used as candidate motion vectors for the motion vector of the top-left corner of the current block, motion vectors of neighboring encoded blocks B1 and B0 of the top-right corner are used as candidate motion vectors for the motion vector of the top-right corner of the current block, and motion vectors of neighboring encoded blocks A0 and A1 of the bottom-left corner are used as candidate motion vectors for the motion vector of the bottom-left corner of the current block. The candidate motion vectors of the top-left corner, the top-right corner, and the bottom-left corner are combined to constitute triplets. Motion vectors, of three encoded blocks, included in a triplet may be used as candidate control point motion vectors of the current block, as shown in the following formulas (11B) and (11C):

$$\{v_{A2}, v_{B1}, v_{A0}\}, \{v_{A2}, v_{B0}, v_{A0}\}, \{v_{B2}, v_{B1}, v_{A0}\}, \{v_{B2}, v_{B0}, v_{A0}\}, \{v_{B3}, v_{B1}, v_{A0}\}, \{v_{B3}, v_{B0}, v_{A0}\} (11B)$$

$$\{v_{A2}, v_{B1}, v_{A1}\}, \{v_{A2}, v_{B0}, v_{A1}\}, \{v_{B2}, v_{B1}, v_{A1}\}, \{v_{B2}, v_{B0}, v_{A1}\}, \{v_{B3}, v_{B1}, v_{A1}\}, \{v_{B3}, v_{B0}, v_{A1}\} (11C)$$

Herein, $v_{A2}$ represents the motion vector of A2, $v_{B1}$ represents the motion vector of B1, $v_{B0}$ represents the motion vector of B0, $v_{B2}$ represents the motion vector of B2, $v_{B3}$ represents the motion vector of B3, $v_{A0}$ represents the motion vector of A0, and $v_{A1}$ represents the motion vector of A1.

It should be noted that another control point motion vector combination method is also applicable to this application, and details are not described herein.

It should be noted that a method for representing motion models of a neighboring coding block and a current coding block by using other control points is also applicable to this application. Details are not described herein.

(5) Constructed control point motion vector (constructed control point motion vectors) prediction method 2, as shown in FIG. 5B

Step 501: Obtain motion information of all control points of a current block.

Using FIG. 5A as an example, CPk (k = 1, 2, 3, or 4) represents the $k^{th}$ control point. A0, A1, A2, B0, B1, B2, and B3 are spatial neighboring locations of the current block and are used to predict CP1, CP2, or CP3. T is a temporal neighboring location of the current block and is used to predict CP4.

It is assumed that coordinates of CP1, CP2, CP3, and CP4 are (0, 0), (W, 0), (H, 0), and (W, H) respectively, where W and H represent the width and the height of the current block.

Motion information of each control point is obtained in the following order:

(1) For CP1, a check order is B2→A2→B3. If B2 is available, motion information of B2 is used. If B2 is unavailable, A2 and B3 are checked. If motion information of all the three locations is unavailable, motion information of CP1 cannot be obtained.

(2) For CP2, a check order is B0→B1. If B0 is available, motion information of B0 is used for CP2. If B0 is unavailable, B1 is checked. If motion information of both the locations is unavailable, motion information of CP2 cannot be obtained.

(3) For CP3, a check order is A0→A1.

(4) For CP4, motion information of T is used.

Herein, that X is available means that a block at a location X (X is A0, A1, A2, B0, B1, B2, B3, or T) is already encoded and an inter prediction mode is used for the block. Otherwise, the location X is unavailable.

It should be noted that another method for obtaining control point motion information is also applicable to this application. Details are not described herein.

Step 502: Combine the motion information of the control points, to obtain constructed control point motion information.

Motion information of two control points is combined to constitute a 2-tuple, to construct a 4-parameter affine motion model. A combination of the two control points may be {CP1, CP4}, {CP2, CP3}, {CP1, CP2}, {CP2, CP4}, {CP1, CP3}, or {CP3, CP4}. For example, a 4-parameter affine motion model constructed by using a 2-tuple including the control points CP1 and CP2 may be denoted as Affine (CP1, CP2).

Motion information of three control points is combined to constitute a triplet, to construct a 6-parameter affine motion model. A combination of the three control points may be {CP1, CP2, CP4}, {CP1, CP2, CP3}, {CP2, CP3, CP4}, or {CP1, CP3, CP4}. For example, a 6-parameter affine motion model constructed by using a triplet including the control points CP1, CP2, and CP3 may be denoted as Affine (CP1, CP2, CP3).

Motion information of four control points is combined to constitute a quadruple, to construct an 8-parameter bilinear model. An 8-parameter bilinear model constructed by using a quadruple including the control points CP1, CP2, CP3, and CP4 is denoted as Bilinear (CP1, CP2, CP3, CP4).

In the embodiments of this application, for ease of description, a combination of motion information of two control points (or two encoded blocks) is referred to as a 2-tuple for short, a combination of motion information of three control points (or three encoded blocks) is referred to as a triplet for short, and a combination of motion information of four control points (or four encoded blocks) is referred to as a quadruple for short.

These models are traversed in preset order. If motion information of a control point corresponding to a combination model is unavailable, it is considered that the model is unavailable. If motion information of a control point corresponding to a combination model is available, a reference frame index of the model is determined, and a motion vector of the control point is scaled. If motion information of all control points after scaling is consistent, the model is invalid. If it is determined that all motion information of control points for constructing the model is available, and the model is valid, the motion information of the control points for constructing the model is added to a motion information candidate list.

A method for scaling a control point motion vector is shown in a formula (12):

$$MV_s = \frac{CurPoc - DesPoc}{CurPoc - SrcPoc} \times MV \qquad (12)$$

Herein, *CurPoc* represents a POC of a current frame, *DesPoc* represents a POC of a reference frame of a current block, *SrcPoc* represents a POC of a reference frame of a control point, $MV_s$ represents a motion vector obtained through scaling, and MV represents a motion vector of the control point.

It should be noted that a combination of different control points may be converted into control points at a same location.

For example, a 4-parameter affine motion model obtained based on a combination of {CP1, CP4}, {CP2, CP3}, {CP2, CP4}, {CP1, CP3}, or {CP3, CP4} is represented by {CP1, CP2} or {CP1, CP2, CP3} after conversion. A conversion method is: substituting motion vectors and coordinate information of control points into the formula (2), to obtain a model parameter; and then substituting coordinate information of {CP1, CP2} into the formula (3), to obtain motion vectors of CP1 and CP2.

More directly, conversion may be performed according to the following formulas (13) to (21), where W represents the width of the current block, and H represents the height of the current block. In the formulas (13) to (21), $(vx_0, vy_0)$ represents the motion vector of CP1, $(vx_1, vy_1)$ represents the motion vector of CP2, $(vx_2, vy_2)$ represents the motion vector of CP3, and $(vx_3, vy_3)$ represents the motion vector of CP4.

{CP1, CP2} may be converted into {CP1, CP2, CP3} according to the following formula (13). In other words, the motion vector of CP3 in {CP1, CP2, CP3} may be determined according to the formula (13):

$$\begin{cases} vx_2 = -\frac{vy_1 - vy_0}{W}H + vx_0 \\ vy_2 = +\frac{vx_1 - vx_0}{W}H + vy_0 \end{cases} \qquad (13)$$

{CP1, CP3} may be converted into {CP1, CP2} or {CP1, CP2, CP3} according to the following formula (14):

$$\begin{cases} vx_1 = +\frac{vy_2 - vy_0}{H} W + vx_0 \\ vy_1 = -\frac{vx_2 - vx_0}{H} W + vy_0 \end{cases} \quad (14)$$

{CP2, CP3} may be converted into {CP1, CP2} or {CP1, CP2, CP3} according to the following formula (15):

$$\begin{cases} vx_0 = \frac{vx_2 - vx_1}{W*W + H*H} W*W - \frac{vy_2 - vy_1}{W*W + H*H} H*W + vx_1 \\ vy_0 = \frac{vy_2 - vy_1}{W*W + H*H} W*W + \frac{vx_2 - vx_1}{W*W + H*H} H*W + vy_1 \end{cases} \quad (15)$$

{CP1, CP4} may be converted into {CP1, CP2} or {CP1, CP2, CP3} according to the following formula (16) or (17):

$$\begin{cases} vx_1 = \frac{vx_3 - vx_0}{W*W + H*H} W*W + \frac{vy_3 - vy_0}{W*W + H*H} H*W + vx_0 \\ vy_1 = \frac{vy_3 - vy_0}{W*W + H*H} W*W - \frac{vx_3 - vx_0}{W*W + H*H} H*W + vy_0 \end{cases} \quad (16)$$

$$\begin{cases} vx_2 = \frac{vx_3 - vx_0}{W*W + H*H} H*H - \frac{vy_3 - vy_0}{W*W + H*H} H*W + vx_0 \\ vy_2 = \frac{vy_3 - vy_0}{W*W + H*H} W*H + \frac{vx_3 - vx_0}{W*W + H*H} H*H + vy_0 \end{cases} \quad (17)$$

{CP2, CP4} may be converted into {CP1, CP2} according to the following formula (18), and {CP2, CP4} may be converted into {CP1, CP2, CP3} according to the following formulas (18) and (19):

$$\begin{cases} vx_0 = -\frac{vy_3 - vy_1}{H} W + vx_1 \\ vy_0 = +\frac{vx_3 - vx_1}{H} W + vy_1 \end{cases} \quad (18)$$

$$\begin{cases} vx_2 = -\frac{vy_3 - vy_1}{H} W + vx_3 \\ vy_2 = +\frac{vx_3 - vx_1}{H} W + vy_3 \end{cases} \quad (19)$$

{CP3, CP4} may be converted into {CP1, CP2} according to the following formula (20), and {CP3, CP4} may be converted into {CP1, CP2, CP3} according to the following formulas (20) and (21):

$$\begin{cases} vx_0 = +\frac{vy_3 - vy_2}{W} H + vx_2 \\ vy_0 = -\frac{vx_3 - vx_2}{W} H + vy_2 \end{cases} \quad (20)$$

$$\begin{cases} vx_1 = +\frac{vy_3 - vy_2}{W} H + vx_3 \\ vy_1 = -\frac{vx_3 - vx_2}{W} H + vy_3 \end{cases} \quad (21)$$

For example, a 6-parameter affine motion model obtained based on a combination {CP1, CP2, CP4}, {CP2, CP3, CP4}, or {CP1, CP3, CP4} is represented by {CP1, CP2, CP3} after conversion. A conversion method is: substituting motion vectors and coordinate information of control points into the formula (4), to obtain a model parameter; and then substituting coordinate information of {CP1, CP2, CP3} into the formula (5), to obtain motion vectors of CP1, CP2, and CP3.

More directly, conversion may be performed according to the following formulas (22) to (24), where W represents the width of the current block, and H represents the height of the current block. In the formulas (22) to (24), $(vx_0, vy_0)$

represents the motion vector of CP1, ($vx_1$, $vy_1$) represents the motion vector of CP2, ($vx_2$, $vy_2$) represents the motion vector of CP3, and ($vx_3$, $vy_3$) represents the motion vector of CP4.

{CP1, CP2, CP4} may be converted into {CP1, CP2, CP3} according to the formula (22):

$$\begin{cases} vx_2 = vx_3 + vx_0 - vx_1 \\ vy_2 = vy_3 + vy_0 - vy_1 \end{cases} \qquad (22)$$

{CP2, CP3, CP4} may be converted into {CP1, CP2, CP3} according to the formula (23):

$$\begin{cases} vx_0 = vx_1 + vx_2 - vx_3 \\ vy_0 = vy_1 + vy_2 - vy_3 \end{cases} \qquad (23)$$

{CP1, CP3, CP4} may be converted into {CP1, CP2, CP3} according to the formula (24):

$$\begin{cases} vx_1 = vx_3 + vx_0 - vx_2 \\ vy_1 = vy_3 + vy_0 - vy_2 \end{cases} \qquad (24)$$

(6) Affine motion model-based advanced motion vector prediction mode (Affine AMVP mode)

(1) Construct a candidate motion vector list.

A candidate motion vector list in the affine motion model-based AMVP mode is constructed by using an inherited control point motion vector prediction method and/or a constructed control point motion vector prediction method. In the embodiments of this application, the candidate motion vector list in the affine motion model-based AMVP mode may be referred to as a control point motion vector predictor candidate list (control point motion vectors predictor candidate list). Each control point motion vector predictor group includes motion vectors of two (4-parameter affine motion model) control points or motion vectors of three (6-parameter affine motion model) control points.

Optionally, the control point motion vector predictor candidate list is pruned and sorted according to a particular rule, and may be truncated or padded to obtain control point motion vector predictors of a particular quantity.

(2) Determine an optimal control point motion vector predictor.

On an encoder side, a motion vector of each motion compensation subunit in a current coding block is obtained by using each control point motion vector predictor in the control point motion vector predictor candidate list according to the formula (3)/(5). Further, a pixel value of a corresponding location in a reference frame to which the motion vector of each motion compensation subunit points is obtained and used as a predicted value of the motion compensation subunit to perform affine motion model-based motion compensation. An average value of differences between original values and predicted values of all pixels in the current coding block is calculated. A control point motion vector predictor corresponding to a minimum average value is selected as an optimal control point motion vector predictor, and used as motion vector predictors of two/three control points of the current coding block. An index number representing a location of the control point motion vector predictor in the control point motion vector predictor candidate list is encoded into a bitstream and sent to a decoder.

On a decoder side, the index number is parsed, and the control point motion vector predictor (control point motion vectors predictor, CPMVP) is determined from the control point motion vector predictor candidate list based on the index number.

(3) Determine a control point motion vector.

On the encoder side, the control point motion vector predictor is used as a start search point to perform motion search within a specific search range, to obtain the control point motion vector (control point motion vectors, CPMV). A difference (control point motion vectors differences, CPMVD) between the control point motion vector and the control point motion vector predictor is transferred to the decoder side.

On the decoder side, the control point motion vector difference is obtained through parsing, and the control point motion vector difference and the control point motion vector predictor are added to obtain the control point motion vector.

(7) Affine merge mode (Affine Merge mode)

A control point motion vector merge candidate list (control point motion vectors merge candidate list) is constructed by using an inherited control point motion vector prediction method and/or a constructed control point motion vector prediction method.

Optionally, the control point motion vector merge candidate list is pruned and sorted according to a particular rule, and may be truncated or padded to obtain control point motion vectors of a particular quantity.

On an encoder side, a motion vector of each motion compensation subunit (pixel or pixel block that is obtained through partitioning according to a particular method and whose size is $N_1 \times N_2$) in a current coding block is obtained by using each control point motion vector in the merge candidate list according to the formula (3)/(5). Further, a pixel value of a location in a reference frame to which the motion vector of each motion compensation subunit points is obtained and used as a predicted value of the motion compensation subunit to perform affine motion compensation. An average value of differences between original values and predicted values of all pixels in the current coding block is calculated. A control point motion vector corresponding to a minimum average value of differences is selected as motion vectors of two/three control points of the current coding block. An index number representing a location of the control point motion vector in the candidate list is encoded into a bitstream and sent to a decoder.

On a decoder side, the index number is parsed, and the control point motion vector (control point motion vectors, CPMV) is determined from the control point motion vector merge candidate list based on the index number.

In addition, it should be noted that, in this application, "at least one" means one or more, and "a plurality of" means two or more than two. The term "and/or" describes an association relationship for describing associated objects and represents that three relationships may exist. For example, A and/or B may represent the following cases: Only A exists, both A and B exist, and only B exists, where A and B may be singular or plural. The character "/" usually represents an "or" relationship between the associated objects. The term "at least one of the following items (pieces)" or an expression similar to the term indicates any combination of the items, and includes a single item (piece) or any combination of a plurality of items (pieces). For example, at least one of a, b, or c may indicate: a, b, c, a-b, a-c, b-c, or a-b-c, where a, b, and c may be singular or plural.

In this application, when the inter prediction mode is used to decode the current block, a syntax element may be used to signal the inter prediction mode.

For a part of a currently used syntax structure of the inter prediction mode used for parsing the current block, refer to Table 1. It should be noted that a syntax element in the syntax structure may be alternatively represented by another identifier. This is not specifically limited in this application.

**Table 1**

| coding_unit(x0,y0,cbWidth,cbHeight) { | Descriptor (descriptor) |
|---|---|
| ... | |
| merge_flag[x0][y0] | ae(v) |
| if(merge_flag[x0][y0]){ | |
| if (allowAffineMerge) | |
| affine_merge_flag[x0][y0] | ae(v) |
| if (MaxNumMergeCand > 1) | |
| merge_idx[x0][y0] | ae(v) |
| } else { | |
| if(slice_type = = B) | |
| inter_pred_idc[x0][y0] | ae(v) |
| if (allowAffineInter) { | |
| affine_inter_flag[x0][y0] | ae(v) |
| if(affine_inter_flag[x0][y0]) | |
| affine_type_flag[x0][y0] | ae(v) |
| } | |
| MotionModelIdc[x0][y0] = affine_inter_flag[x0][y0] + affine_type_flag[x0][y0] | |

(continued)

| coding_unit(x0,y0,cbWidth,cbHeight) { | Descriptor (descriptor) |
|---|---|
| if(inter_pred_idc[x0][y0] != PRED_L1) { | |
| if(num_ref_idx_10_active_minus1 > 0) | |
| ref_idx_10[x0][y0] | ae(v) |
| mvd_coding(x0, y0, 0, 0) | |
| if(MotionModelIdc[x0][y0] > 0) { | |
| mvd_coding(x0, y0, 0, 1) | |
| if(MotionModelIdc[x0][y0] > 1) { | |
| mvd_coding(x0, y0, 0, 2) | |
| } | |
| mvp_10_flag[x0][y0] | ae(v) |
| } | |
| if(inter_pred_idc[x0][y0] != PRED_L0) { | |
| if(num_ref_idx_l1_active_minus1 > 0) | |
| ref_idx_l1[x0][y0] | ae(v) |
| coding_unit(x0,y0,cbWidth,cbHeight) { | Descriptor (descriptor) |
| mvd_coding(x0, y0, 1, 0) | |
| if(MotionModelIdc[x0][y0] > 0) { | |
| mvd_coding(x0, y0, 1, 1) | |
| if(MotionModelIdc[x0][y0] > 1) | |
| mvd_coding(x0, y0, 1, 2) | |
| } | |
| mvp_l1_flag[x0][y0] | ae(v) |
| } | |
| } | |
| ... | |
| } | |

A syntax element merge_flag[x0][y0] may be used to indicate whether the merge mode is used for the current block. For example, when merge_flag[x0][y0] = 1, it indicates that the merge mode is used for the current block; or when merge_flag[x0][y0] = 0, it indicates that the merge mode is not used for the current block. x0 and y0 represent coordinates of the current block in a video picture.

A variable allowAffineMerge may be used to indicate whether the current block satisfies a condition for using the affine motion model-based merge mode. For example, allowAffineMerge = 0 indicates that the condition for using the affine motion model-based merge mode is not satisfied, and allowAffineMerge = 1 indicates that the condition for using the affine motion model-based merge mode is satisfied. The condition for using the affine motion model-based merge mode may be: Both the width and the height of the current block are greater than or equal to 8. cbWidth represents the width of the current block, and cbHeight represents the height of the current block. In other words, when cbWidth < 8 or cbHeight < 8, allowAffineMerge = 0; or when cbWidth ≥ 8 and cbHeight ≥ 8, allowAffineMerge = 1.

A variable allowAffineInter may be used to indicate whether the current block satisfies a condition for using the affine motion model-based AMVP mode. For example, allowAffineInter = 0 indicates that the condition for using the affine motion model-based AMVP mode is not satisfied, and allowAffineInter = 1 indicates that the condition for using the affine motion model-based AMVP mode is satisfied. The condition for using the affine motion model-based AMVP mode may be: Both the width and the height of the current block are greater than or equal to 16. In other words, when cbWidth < 16 or cbHeight < 16, allowAffineInter = 0; or when cbWidth ≥ 16 and cbHeight ≥ 16, allowAffineInter = 1.

A syntax element affine_merge_flag[x0][y0] may be used to indicate whether the affine motion model-based merge mode is used for the current block. A type (slice_type) of a slice in which the current block is located is a P type or a B type. For example, affine_merge_flag[x0][y0] = 1 indicates that the affine motion model-based merge mode is used for the current block; and affine_merge_flag[x0][y0] = 0 indicates that the affine motion model-based merge mode is not used for the current block, but a translational motion model-based merge mode may be used.

A syntax element affine_inter_flag[x0][y0] may be used to indicate whether the affine motion model-based AMVP mode is used for the current block when the slice in which the current block is located is a P-type slice or a B-type slice. For example, allowAffineInter = 1 indicates that the affine motion model-based AMVP mode is used for the current block, and allowAffineInter = 0 indicates that the affine motion model-based AMVP mode is not used for the current block, but a translational motion model-based AMVP mode may be used.

A syntax element affine_type_flag[x0][y0] may be used to indicate whether the 6-parameter affine motion model is used to perform motion compensation for the current block when the slice in which the current block is located is a P-type slice or a B-type slice. affine_type_flag[x0][y0] = 0 indicates that the 6-parameter affine motion model is not used to perform motion compensation for the current block, and only the 4-parameter affine motion model may be used to perform motion compensation. affine_type_flag[x0][y0] = 1 indicates that the 6-parameter affine motion model is used to perform motion compensation for the current block.

As shown in Table 2, when MotionModelIdc[x0][y0] = 1, it indicates that the 4-parameter affine motion model is used; when MotionModelIdc[x0][y0] = 2, it indicates that the 6-parameter affine motion model is used; or when MotionModelIdc[x0] [y0] = 0, it indicates that the translational motion model is used.

**Table 2**

| MotionModelIdc[x0][y0] | Motion model for motion compensation (motion model for motion compensation) |
|---|---|
| 0 | Translational motion (translational motion) |
| 1 | 4-parameter affine motion (4-parameter affine motion) |
| 2 | 6-parameter affine motion (6-parameter affine motion) |

A variable MaxNumMergeCand is used to represent a maximum list length, and indicates a maximum length of a constructed candidate motion vector list. inter_pred_idc[y0] is used to indicate a prediction direction. PRED_L1 is used to indicate backward prediction. num_ref_idx_l0_active_minus1 indicates a quantity of reference frames in a forward reference frame list, and ref_idx_l0[x0][y0] indicates an index value for a forward reference frame of the current block. mvd_coding(x0, y0, 0, 0) indicates a first motion vector difference. mvp_l0_flag[x0][y0] indicates an index value for a forward MVP candidate list. PRED L0 indicates forward prediction. num_ref_idx_l1_active_minus1 indicates a quantity of reference frames in a backward reference frame list. ref_idx_l1[x0][y0] indicates an index value for a backward reference frame of the current block, and mvp_l1_flag[x0] [y0] indicates an index value for a backward MVP candidate list.

In Table 1, ae(v) represents a syntax element encoded through context-based adaptive binary arithmetic coding (context-based adaptive binary arithmetic coding, cabac).

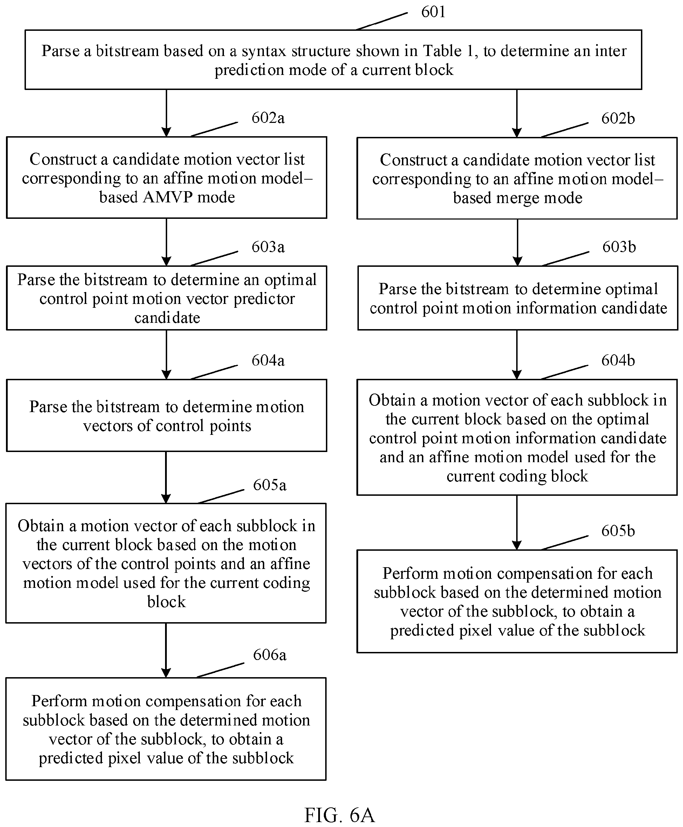

The following describes an inter prediction process in detail. Details are shown in FIG. 6A.

Step 601: Parse a bitstream based on a syntax structure shown in Table 1, to determine an inter prediction mode of a current block.

If it is determined that the inter prediction mode of the current block is an affine motion model-based AMVP mode, step 602a is performed.

To be specific, syntax elements merge_flag = 0 and affine_inter_flag = 1 indicate that the inter prediction mode of the current block is the affine motion model-based AMVP mode.

If it is determined that the inter prediction mode of the current block is an affine motion model-based merge (merge) mode, step 602b is performed.

To be specific, syntax elements merge flag = 1 and affine_merge_flag = 1 indicate that the inter prediction mode of the current block is the affine motion model-based merge mode.

Step 602a: Construct a candidate motion vector list corresponding to the affine motion model-based AMVP mode, and perform step 603a.

A candidate control point motion vector of the current block is derived by using an inherited control point motion vector prediction method and/or a constructed control point motion vector prediction method, and is added to the candidate motion vector list.

The candidate motion vector list may include a 2-tuple list (a 4-parameter affine motion model is used for the current coding block) or a triplet list. The 2-tuple list includes one or more 2-tuples used to construct the 4-parameter affine motion model. The triplet list includes one or more triplets used to construct a 6-parameter affine motion model.

Optionally, the candidate motion vector 2-tuple/triplet list is pruned and sorted according to a particular rule, and may be truncated or padded to obtain motion vector groups of a particular quantity.

A1: A process of constructing the candidate motion vector list by using the inherited control point motion vector prediction method is described.

FIG. 4 is used as an example. For example, neighboring-location blocks around the current block are traversed in an order of A1→B1→B0→A0→B2 in FIG. 4, to find an affine coding block in which a neighboring-location block is located, and obtain control point motion information of the affine coding block. Further, candidate control point motion information of the current block is derived by using a motion model constructed based on the control point motion information of the affine coding block. For details, refer to the related descriptions in the inherited control point motion vector prediction method in the foregoing (3). Details are not described herein again.

For example, when an affine motion model used for the current block is the 4-parameter affine motion model (that is, MotionModelIdc= 1), if the 4-parameter affine motion model is used for a neighboring affine coding block, motion vectors of two control points of the affine coding block are obtained: a motion vector (vx4, vy4) of a top-left control point (x4, y4) and a motion vector (vx5, vy5) of a top-right control point (x5, y5). The affine coding block is an affine coding block predicted in an encoding phase by using the affine motion model.

Motion vectors of two control points, that is, a top-left control point and a top-right control point, of the current block are respectively derived according to 4-parameter affine motion model formulas (6) and (7) by using the 4-parameter affine motion model including the two control points of the neighboring affine coding block.

If the 6-parameter affine motion model is used for a neighboring affine coding block, motion vectors of three control points of the neighboring affine coding block are obtained, for example, a motion vector (vx4, vy4) of a top-left control point (x4, y4), a motion vector (vx5, vy5) of a top-right control point (x5, y5), and a motion vector (vx6, vy6) of a bottom-left control point (x6, y6) in FIG. 4.

Motion vectors of three control points, that is, a top-left control point, a top-right control point, and a bottom-left control point, of the current block are respectively derived according to 6-parameter motion model formulas (8), (9), and (10) by using the 6-parameter affine motion model including the three control points of the neighboring affine coding block.

For example, an affine motion model used for the current coding block is the 6-parameter affine motion model (that is, MotionModelIdc = 2).

If an affine motion model used for a neighboring affine coding block is the 6-parameter affine motion model, motion vectors of three control points of the neighboring affine coding block are obtained, for example, a motion vector (vx4, vy4) of a top-left control point (x4, y4), a motion vector (vx5, vy5) of a top-right control point (x5, y5), and a motion vector (vx6, vy6) of a bottom-left control point (x6, y6) in FIG. 4.

Motion vectors of three control points, that is, a top-left control point, a top-right control point, and a bottom-left control point, of the current block are respectively derived according to formulas (8), (9), and (10) corresponding to the 6-parameter affine motion model by using the 6-parameter affine motion model including the three control points of the neighboring affine coding block.

If an affine motion model used for a neighboring affine coding block is the 4-parameter affine motion model, motion vectors of two control points of the affine coding block are obtained: a motion vector (vx4, vy4) of a top-left control point (x4, y4) and a motion vector (vx5, vy5) of a top-right control point (x5, y5).

Motion vectors of two control points, that is, a top-left control point and a top-right control point, of the current block are respectively derived according to 4-parameter affine motion model formulas (6) and (7) by using the 4-parameter affine motion model including the two control points of the neighboring affine coding block.

It should be noted that another motion model, candidate location, and search order are also applicable to this application. Details are not described herein. It should be noted that a method for representing motion models of a neighboring coding block and a current coding block by using other control points is also applicable to this application. Details are not described herein.

A2: A process of constructing the candidate motion vector list by using the constructed control point motion vector prediction method is described.

For example, if an affine motion model used for the current coding block is the 4-parameter affine motion model (that is, MotionModelIdc is 1), motion vectors of the top-left corner and the top-right corner of the current coding block are determined based on motion information of neighboring encoded blocks around the current coding block. Specifically, the candidate motion vector list may be constructed by using the constructed control point motion vector prediction method 1 or the constructed control point motion vector prediction method 2. For a specific manner, refer to the descriptions in the foregoing (4) and (5). Details are not described herein.

For example, if an affine motion model used for the current coding block is the 6-parameter affine motion model (that is, MotionModelIdc is 2), motion vectors of the top-left corner, the top-right corner, and the bottom-left corner of the current coding block are determined based on motion information of neighboring encoded blocks around the current coding block. Specifically, the candidate motion vector list may be constructed by using the constructed control point motion vector prediction method 1 or the constructed control point motion vector prediction method 2. For a specific manner, refer to the descriptions in the foregoing (4) and (5). Details are not described herein.

It should be noted that another control point motion information combination manner is also applicable to this application. Details are not described herein.

Step 603a: Parse the bitstream to determine an optimal control point motion vector predictor, and perform step 604a.

B1: If the affine motion model used for the current coding block is the 4-parameter affine motion model (MotionModelIdc is 1), an index number is parsed, and optimal motion vector predictors of two control points are determined from the candidate motion vector list based on the index number.

For example, the index number is mvp_l0_flag or mvp_l1_flag.

B2: If the affine motion model used for the current coding block is the 6-parameter affine motion model (MotionModelIdc is 2), an index number is parsed, and optimal motion vector predictors of three control points are determined from the candidate motion vector list based on the index number.

Step 604a: Parse the bitstream to determine control point motion vectors.

C1: If the affine motion model used for the current coding block is the 4-parameter affine motion model (MotionModelIdc is 1), motion vector differences of two control points of the current block are obtained by decoding the bitstream, and motion vectors of the control points are obtained based on the motion vector differences and motion vector predictors of the control points. Using forward prediction as an example, the motion vector differences of the two control points are mvd_coding(x0, y0, 0, 0) and mvd_coding(x0, y0, 0, 1) respectively.

For example, motion vector differences of the top-left control point and the top-right control point are obtained by decoding the bitstream, and are respectively added to motion vector predictors, to obtain motion vectors of the top-left control point and the top-right control point of the current block.

C2: The affine motion model used for the current coding block is the 6-parameter affine motion model (MotionModelIdc is 2).

Motion vector differences of three control points of the current block are obtained by decoding the bitstream, and motion vectors of the control points are obtained based on the motion vector differences and motion vector predictors of the control points. Using forward prediction as an example, the motion vector differences of the three control points are mvd_coding(x0, y0, 0, 0), mvd_coding(x0, y0, 0, 1), and mvd_coding(x0, y0, 0, 2) respectively.

For example, motion vector differences of the top-left control point, the top-right control point, and the bottom-left control point are obtained by decoding the bitstream, and are respectively added to motion vector predictors, to obtain motion vectors of the top-left control point, the top-right control point, and the bottom-left control point of the current block.

Step 602b: Construct a motion information candidate list corresponding to the affine motion model-based merge mode.

Specifically, the motion information candidate list corresponding to the affine motion model-based merge mode may be constructed by using the inherited control point motion vector prediction method and/or the constructed control point motion vector prediction method.

Optionally, the motion information candidate list is pruned and sorted according to a particular rule, and may be truncated or padded to obtain motion information groups of a particular quantity.

D1: A process of constructing the candidate motion vector list by using the inherited control point motion vector prediction method is described.

Candidate control point motion information of the current block is derived by using the inherited control point motion vector prediction method, and is added to the motion information candidate list.

Neighboring-location blocks around the current block are traversed in an order of A1→B1→B0→A0→B2 in FIG. 3, to find an affine coding block in which the location is located, and obtain control point motion information of the affine coding block. Further, the candidate control point motion information of the current block is derived by using a motion model of the affine coding block.

If the candidate motion vector list is empty, the candidate control point motion information is added to the candidate list. If the candidate motion vector list is not empty, motion information in the candidate motion vector list is successively traversed, and whether motion information that is the same as the candidate control point motion information exists in the candidate motion vector list is checked. If no motion information that is the same as the candidate control point motion information exists in the candidate motion vector list, the candidate control point motion information is added to the candidate motion vector list.

To determine whether two pieces of candidate motion information are the same, whether forward/backward reference frames of the two pieces of candidate motion information are the same and whether horizontal components and vertical components of forward/backward motion vectors are the same need to be successively determined. The two pieces of motion information are considered to be different only when all the foregoing elements are different.

If a quantity of pieces of motion information in the candidate motion vector list reaches a maximum list length MaxNumMrgCand (MaxNumMrgCand is a positive integer such as 1, 2, 3, 4, or 5, 5 is used as an example for description below, and details are not described herein), the candidate list is constructed. If a quantity of pieces of motion information in the candidate motion vector list does not reach a maximum list length, a next neighboring-location block is traversed.

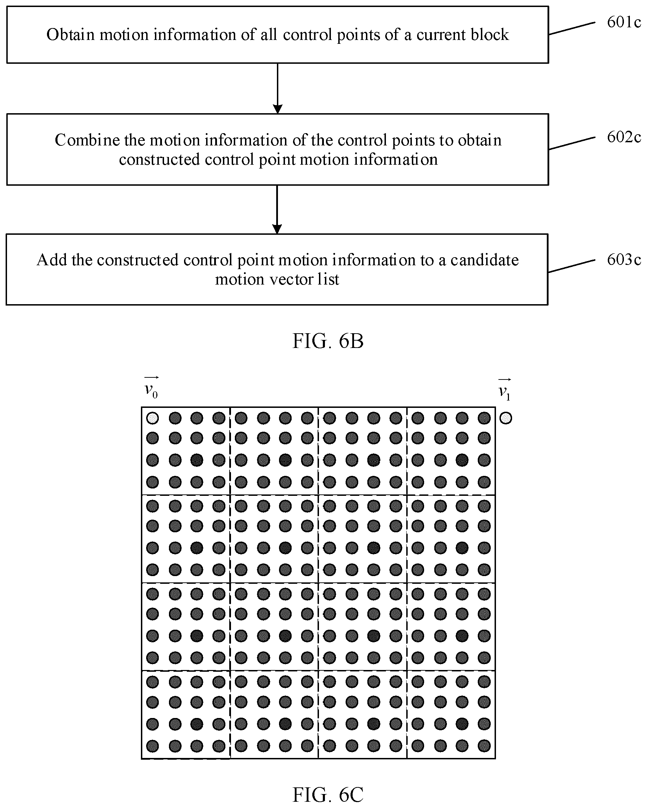

D2: Candidate control point motion information of the current block is derived by using the constructed control point motion vector prediction method, and is added to the motion information candidate list, as shown in FIG. 6B.

Step 601c: Obtain motion information of all control points of the current block. For details, refer to step 501 in the constructed control point motion vector prediction method 2 in (5). Details are not described herein again.

Step 602c: Combine the motion information of the control points, to obtain constructed control point motion information. For details, refer to step 501 in FIG. 5B. Details are not described herein again.

Step 603c: Add the constructed control point motion information to the candidate motion vector list.

If a length of the candidate list is less than a maximum list length MaxNumMrgCand, the combinations are traversed in a preset order, and an obtained valid combination is used as candidate control point motion information. If the candidate motion vector list is empty, the candidate control point motion information is added to the candidate motion vector list. If the candidate motion vector list is not empty, motion information in the candidate motion vector list is successively traversed, and whether motion information that is the same as the candidate control point motion information exists in the candidate motion vector list is checked. If no motion information that is the same as the candidate control point motion information exists in the candidate motion vector list, the candidate control point motion information is added to the candidate motion vector list.

For example, a preset order is as follows: Affine (CP1, CP2, CP3)→Affine (CP1, CP2, CP4)→Affine (CP1, CP3, CP4)→Affine (CP2, CP3, CP4)→Affine (CP1, CP2)→Affine (CP1, CP3)→Affine (CP2, CP3)→Affine (CP1, CP4)→Affine (CP2, CP4)→Affine (CP3, CP4). There are a total of 10 combinations.

If control point motion information corresponding to a combination is unavailable, it is considered that the combination is unavailable. If a combination is available, a reference frame index of the combination is determined (when there are two control points, a minimum reference frame index is selected as the reference frame index of the combination; or when there are more than two control points, a reference frame index with a maximum presence frequency is selected as the reference frame index of the combination, and if a plurality of reference frame indices have a same presence frequency, a minimum reference frame index is selected as the reference frame index of the combination). Control point motion vectors are scaled. If motion information of all control points after scaling is consistent, the combination is invalid.

Optionally, in the embodiments of this application, the candidate motion vector list may alternatively be padded. For example, after the foregoing traversal process, if the length of the candidate motion vector list is less than the maximum list length MaxNumMrgCand, the candidate motion vector list may be padded until the list length is equal to MaxNumMrgCand.

Padding may be performed by using a zero motion vector padding method, or by using a method for combining or weighted-averaging existing candidate motion information in the existing list. It should be noted that another method for padding the candidate motion vector list is also applicable to this application. Details are not described herein.

Step S603b: Parse the bitstream to determine optimal control point motion information.

An index number is parsed, and the optimal control point motion information is determined from the candidate motion vector list based on the index number.

Step 604b: Obtain a motion vector of each subblock in the current block based on the optimal control point motion information and an affine motion model used for the current coding block.

For each subblock in the current affine coding block (one subblock may be equivalent to one motion compensation unit, and the width and the height of the subblock are less than the width and the height of the current block), motion information of a pixel at a preset location in the motion compensation unit may be used to represent motion information of all pixels in the motion compensation unit. It is assumed that a size of the motion compensation unit is M x N, the pixel at the preset location may be a center pixel (M/2, N/2), a top-left pixel (0, 0), a top-right pixel (M - 1, 0), or a pixel at another location in the motion compensation unit. The following uses the center pixel of the motion compensation unit as an example for description, as shown in FIG. 6C. In FIG. 6C, Vo represents a motion vector of a top-left control point, and $V_1$ represents a motion vector of a top-right control point. Each small box represents one motion compensation unit.

Coordinates of the center pixel of the motion compensation unit relative to a pixel in the top-left corner of the current affine coding block are calculated according to a formula (25). Herein, i is an $i^{th}$ motion compensation unit (from left to right) in a horizontal direction, j is a $j^{th}$ motion compensation unit (from top to bottom) in a vertical direction, and $(x_{(i,j)}, y_{(i,j)})$ represent coordinates of a center pixel of an $(i, j)^{th}$ motion compensation unit relative to the pixel at the top-left control point of the current affine coding block.

If the affine motion model used for the current affine coding block is the 6-parameter affine motion model, $(x_{(i,j)}, y_{(i,j)})$ are substituted into a formula (26) in the 6-parameter affine motion model, to obtain a motion vector of a center pixel of each motion compensation unit, and the motion vector is used as motion vectors $(vx_{(i,j)}, vy_{(i,j)})$ of all pixels in the motion compensation unit.

If the affine motion model used for the current affine coding block is the 4-parameter affine motion model, $(x_{(i,j)}, y_{(i,j)})$ are substituted into a formula (27) in the 4-parameter affine motion model, to obtain a motion vector of a center pixel of each motion compensation unit, and the motion vector is used as motion vectors $(vx_{(i,j)}, vy_{(i,j)})$ of all pixels in the motion compensation unit.

$$\begin{cases} x_{(i,j)} = M \times i + \frac{M}{2}, i = 0,1.. \\ y_{(i,j)} = N \times j + \frac{N}{2}, j = 0,1.. \end{cases} \tag{25}$$

$$\begin{cases} vx = \frac{vx_1 - vx_0}{W} x + \frac{vx_2 - vy_0}{H} y + vx_0 \\ vy = \frac{vy_1 - vy_0}{W} x + \frac{vy_2 - vx_0}{H} y + vy_0 \end{cases} \tag{26}$$

$$\begin{cases} vx = \frac{vx_1 - vx_0}{W} x - \frac{vy_1 - vy_0}{W} y + vx_0 \\ vy = \frac{vy_1 - vy_0}{W} x + \frac{vx_1 - vx_0}{W} y + vy_0 \end{cases} \tag{27}$$

Step 605b: Perform motion compensation for each subblock based on the determined motion vector of the subblock, to obtain a predicted pixel value of the subblock.

In the conventional technology, after the motion vector of each subblock is obtained in step 605a or 604b, motion compensation for the subblock is performed in step 606a or 605b. In the conventional technology, to improve prediction efficiency, the subblock is partitioned into 4 x 4, that is, motion compensation is performed for each 4 x 4 unit by using a different motion vector. However, a smaller motion compensation unit indicates a larger average quantity of reference pixels that need to be read for motion compensation for all pixels, and higher computational complexity of interpolation. For motion compensation for one M x N unit, a total quantity of required reference pixels is (M + T - 1) x (N + T - 1) x K, and an average quantity of read pixels is (M + T - 1) x (N + T - 1) x K/M/N. T is a quantity of taps of an interpolation filter, for example, 8, 4, or 2. K is related to a prediction direction. For unidirectional prediction, K = 1. For bidirectional prediction, K = 2. According to this calculation method, average quantities of reference pixels read for unidirectional and bidirectional prediction performed for a 4 x 4 unit, an 8 x 4 unit, and an 8 x 8 unit when the quantity of taps of the interpolation filter is 8 may be obtained through calculation, as shown in Table 3. It should be noted that in M x N, M indicates that the width width of a subblock is M pixels, and N indicates that the height height of the subblock is N pixels. It should be understood that M and N each are $2^n$, and n is a positive integer. It should be noted that, in Table 3, UNI represents unidirectional prediction, and BI represents bidirectional prediction.

**Table 3**

| Prediction direction (also referred to as a reference mode) | Average quantity of read pixels |
| --- | --- |
| 4 x 4 UNI | 7.5625 |
| 4 x 4 BI | 15.1250 |
| 8 x 4 UNI | 5.1563 |
| 8 x 4 BI | 10.3125 |
| 8 x 8 UNI | 3.5156 |
| 8 x 8 BI | 7.0313 |

Based on this, the embodiments of this application provide a picture prediction method and apparatus, to reduce motion compensation complexity in the conventional technology while considering prediction efficiency. In this application, different subblock partition methods are selected based on a prediction direction of a current picture block. The method and the apparatus are based on a same inventive concept. Because a problem-resolving principle of the method is similar to that of the apparatus, for implementations of the apparatus and the method, mutual reference may be made. No repeated description is provided.

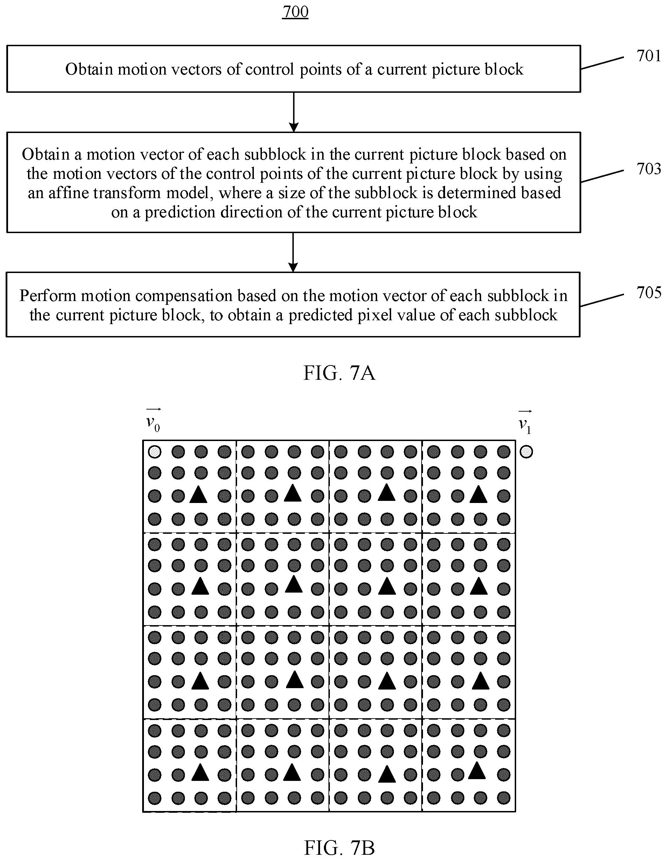

FIG. 7A is a schematic flowchart of a picture prediction method 700 according to an embodiment of this application. It should be noted that the picture prediction method 700 is applicable to both inter prediction for decoding a video picture and inter prediction for encoding a video picture. The method may be performed by a video encoder (for example, the video encoder 20) or an electronic device having a video encoding function. The method 700 may include the following steps.

Step S701: Obtain motion vectors of control points of a current picture block (for example, a current coding block, a current affine picture block, or a current affine coding block).

In an implementation, the motion vectors of the control points of the current affine coding block may be obtained according to the following steps.

Step 1: Determine motion vector predictors of the control points of the current affine coding block.

For example, if an affine motion model used for the current coding block is a 4-parameter affine motion model, motion vector predictors of the top-left corner and the top-right corner of the current coding block are determined based on motion information of neighboring decoded blocks around the current coding block. Specifically, neighboring-location blocks around the current block are traversed in an order of A2→B2→B3 in FIG. 5A, to search for a motion vector that has a same prediction direction as the current coding block. If the motion vector is found, the motion vector is scaled and then used as a motion vector predictor of a top-left control point of the current affine coding block. If the motion vector is not found after spatially neighboring locations are traversed, a zero motion vector is used as a motion vector predictor of a top-left control point of the current affine coding block. Likewise, neighboring-location blocks around the current block are traversed in an order of B0→B1 in FIG. 5A, to search for a motion vector that has a same prediction direction as the current coding block. If the motion vector is found, the motion vector is scaled and then used as a motion vector predictor of a top-right control point of the current affine coding block. If the motion vector is not found after spatially neighboring locations are traversed, a zero motion vector is used as a motion vector predictor of a top-right control point of the current affine coding block.

It should be noted that another neighboring block location and neighboring block traversal order are also applicable to this application, and details are not described herein.

For example, if an affine motion model used for the current coding block is a 6-parameter affine motion model, motion vector predictors of the top-left corner, the top-right corner, and the bottom-left corner of the current coding block are determined based on motion information of neighboring decoded blocks around the current coding block. Specifically, neighboring-location blocks around the current block are traversed in an order of A2→B2→B3 in FIG. 5A, to search for a motion vector that has a same prediction direction as the current coding block. If the motion vector is found, the motion vector is scaled and then used as a motion vector predictor of a top-left control point of the current affine coding block. If the motion vector is not found after spatially neighboring locations are traversed, a zero motion vector is used as a motion vector predictor of a top-left control point of the current affine coding block. Likewise, neighboring-location blocks around the current block are traversed in an order of B0→B1 in FIG. 5A, to search for a motion vector that has a same prediction direction as the current coding block. If the motion vector is found, the motion vector is scaled and then used as a motion vector predictor of a top-right control point of the current affine coding block. If the motion vector is not found after spatially neighboring locations are traversed, a zero motion vector is used as a motion vector predictor of a top-right control point of the current affine coding block. Neighboring-location blocks around the current block are traversed in an order of A0→A1 in FIG. 5A, to search for a motion vector that has a same prediction direction as the current coding block. If the motion vector is found, the motion vector is scaled and then used as a motion vector predictor of a bottom-left control point of the current affine coding block. If the motion vector is not found after spatially neighboring locations are traversed, a zero motion vector is used as a motion vector predictor of a bottom-left control point of the current affine coding block.

It should be noted that another neighboring block location and neighboring block traversal order are also applicable to this application, and details are not described herein.

Step 2: Parse a bitstream to determine the motion vectors of the control points.

If the affine motion model used for the current coding block is the 4-parameter affine motion model, motion vector differences of two control points of the current block are obtained by decoding the bitstream, and motion vectors of the control points are obtained based on the motion vector differences and motion vector predictors of the control points.

For example, motion vector differences of the top-left control point and the top-right control point are obtained by decoding the bitstream, and are respectively added to corresponding motion vector predictors, to obtain motion vectors of the top-left control point and the top-right control point of the current block.

If the affine motion model used for the current coding block is the 6-parameter affine motion model, motion vector differences of three control points of the current block are obtained by decoding the bitstream, and motion vectors of the control points are obtained based on the motion vector differences and motion vector predictors of the control points.

For example, motion vector differences of the top-left control point, the top-right control point, and the bottom-left control point are obtained by decoding the bitstream, and are respectively added to corresponding motion vector predictors, to obtain motion vectors of the top-left control point, the top-right control point, and the bottom-left control point of the current block.

It should be noted that a method for obtaining the motion vectors of the control points of the current picture block (for example, the current coding block, the current affine picture block, or the current affine coding block) is not limited in this specification, and another obtaining method is also applicable to this application. Details are not described herein.

Step S703: Obtain a motion vector of each subblock in the current picture block based on the motion vectors of the control points (such as a plurality of affine control points) of the current picture block (such as a motion vector group) by using an affine transform model, where a size of the subblock is determined based on a prediction direction of the current picture block.

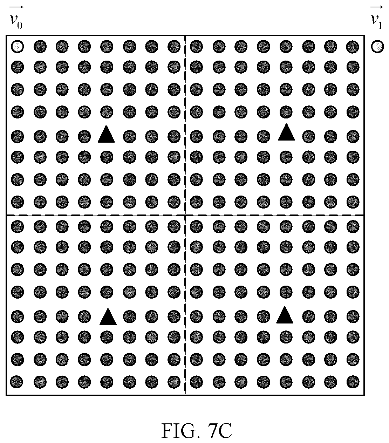

FIG. 7B shows a 4 x 4 subblock (also referred to as a motion compensation unit), and FIG. 7C shows an 8 x 8 subblock (also referred to as a motion compensation unit). In an example, a center pixel of a corresponding subblock (also referred to as a motion compensation unit) is represented by a triangle.

Step S705: Perform motion compensation based on the motion vector of each subblock in the current picture block, to obtain a predicted pixel value of each subblock.

Correspondingly, in a specific implementation of this embodiment of this application, in step S703:

If the prediction direction of the current picture block is bidirectional prediction, the size of the subblock in the current picture block is U x V; or if the prediction direction of the current picture block is unidirectional prediction, the size of the subblock in the current picture block is M x N, where U and M each represent the width of the subblock, V and N each represent the height of the subblock, and U, V, M, and N each are 2n, where n is a positive integer. In a specific implementation, U = 2M, and V = 2N. For example, M is 4, and N is 4. Correspondingly, U is 8, and V is 8.

A specific implementation of the method 700 is as follows:

If a subblock that is in the affine coding block and for which unidirectional prediction is performed is partitioned into M x N, it is specified that a subblock that is in the affine coding block and for which bidirectional prediction is performed is partitioned into U x V Herein, U ≥ M, V ≥ N, and U and V cannot be equal to M and N at the same time. More specifically, it may be specified that U = 2M and N = V, or U = M and V = 2N, or U = 2M and V = 2N. M is an integer such as 4, 8, or 16, and N is an integer such as 4, 8, or 16. In an AMVP mode, whether unidirectional prediction or bidirectional prediction is performed for the affine coding block is determined by using a syntax element inter_pred_idc. In a merge mode, whether unidirectional prediction or bidirectional prediction is performed for the affine coding block is determined by using affine_merge_idx. The prediction direction of the current affine coding block is the same as that of candidate motion information indicated by affine_merge_idx.

Optionally, to partition the affine coding block into at least two subblocks in a horizontal direction and at least two subblocks in a vertical direction, a partition-into-subblock manner for bidirectional prediction may be used, and a use condition of the affine coding block is limited. To be specific, an allowed size for the affine coding block is: width W ≥ 2U and height H ≥ 2V When a size of a coding unit does not satisfy the use condition of the affine coding block, an affine-related syntax element, such as affine_inter_flag or affine_merge_flag in Table 1, does not need to be parsed.

Optionally, to partition the affine coding block into at least two subblocks in a horizontal direction and at least two subblocks in a vertical direction, a partition-into-subblock manner for unidirectional prediction may be alternatively used, and a use condition of the affine coding block is limited. In addition, when a bidirectionally predicted affine coding block cannot be partitioned in a partition-into-subblock manner for bidirectional prediction, the affine coding block is forcibly set to be predicted unidirectionally. To be specific, an allowed size for the affine coding block is: width W ≥ 2M and height H ≥ 2N. When a size of a coding unit does not satisfy the use condition of the affine coding block, an affine-related syntax element, such as affine_inter_flag or affine_merge_flag in Table 1, does not need to be parsed. When the bidirectionally predicted affine coding block has a width W < 2U or a height H < 2V, the bidirectionally predicted affine coding block is forcibly set to be predicted unidirectionally.

It should be noted that the method in this application may also be applied to another partition-into-subblock mode, for example, an ATMVP mode.

Specifically, in an embodiment of this application, if unidirectional prediction is performed on the affine coding block, a size of a motion compensation unit in the affine coding block is set to 4 x 4, or if bidirectional prediction is performed on the affine coding block, a size of a motion compensation unit in the affine coding block is set to 8 x 4.

In an implementation, when the size of the current picture block (which is referred to as a current coding block below) satisfies W ≥ 16 and H ≥ 16, an affine mode is allowed to be used.

Optionally, when the size of the current coding block satisfies W ≥ 16 and H ≥ 8, an affine mode is allowed to be used.

Optionally, when the size of the current coding block satisfies W ≥ 8 and H ≥ 8, an affine mode is allowed to be used. When the width W of the coding block is less than 16, if the prediction direction of the affine coding block is bidirectional, the prediction direction of the affine coding block is changed to unidirectional. For example, motion information of backward prediction is discarded, and bidirectional prediction is converted into forward prediction; or motion information of forward prediction is discarded, and bidirectional prediction is converted into backward prediction.

It should be noted that, the bitstream may be further limited, so that when the width W of the affine coding block is less than 16, a flag bit for bidirectional prediction does not need to be parsed.

In another embodiment of this application, if unidirectional prediction is performed on the affine coding block, a size of a motion compensation unit in the affine coding block is set to 4 x 4, or if bidirectional prediction is performed on the affine coding block, a size of a motion compensation unit in the affine coding block is set to 4 x 8.

Optionally, when the size of the coding block satisfies W ≥ 8 and H ≥ 16, an affine mode is allowed to be used.

Optionally, when the size of the coding block satisfies W ≥ 8 and H ≥ 8, an affine mode is allowed to be used. When the height H of the coding block is less than 16, if the prediction direction of the affine coding block is bidirectional, the prediction direction of the affine coding block is changed to unidirectional. For example, motion information of backward prediction is discarded, and bidirectional prediction is converted into forward prediction; or motion information of forward prediction is discarded, and bidirectional prediction is converted into backward prediction.

It should be noted that, the bitstream may be further limited, so that when the height H of the affine coding block is less than 16, a flag bit for bidirectional prediction does not need to be parsed.

In another embodiment of this application, if unidirectional prediction is performed on the affine coding block, a size of a motion compensation unit in the affine coding block is set to 4 x 4, or if bidirectional prediction is performed on the affine coding block, adaptive partition is performed based on the size of the affine coding block. A partition manner may be one of the following three manners:

(1) If the width W of the affine coding block is greater than or equal to H, the size of the motion compensation unit in the affine coding block is set to 8 x 4; or if the width W of the affine coding block is less than H, the size of the motion compensation unit in the affine coding block is set to 4 x 8.
(2) If the width W of the affine coding block is greater than H, the size of the motion compensation unit in the affine coding block is set to 8 x 4; or if the width W of the affine coding block is less than or equal to H, the size of the motion compensation unit in the affine coding block is set to 4 x 8.
(3) If the width W of the affine coding block is greater than H, the size of the motion compensation unit in the affine coding block is set to 8 x 4; or if the width W of the affine coding block is less than H, the size of the motion compensation unit in the affine coding block is set to 4 x 8; or if the width W of the affine coding block is equal to H, the size of the motion compensation unit in the affine coding block is set to 8 x 8.

Optionally, when the size of the coding block satisfies W ≥ 8 and H ≥ 8, and W is not equal to 8 or H is not equal to 8, an affine mode is allowed to be used.

Optionally, when the size of the coding block satisfies W ≥ 8 and H ≥ 8, an affine mode is allowed to be used. When the width W of the coding block is equal to 8 and the height H of the coding block is equal to 8, if the prediction direction of the affine coding block is bidirectional, the prediction direction of the affine coding block is changed to unidirectional. For example, motion information of backward prediction is discarded, and bidirectional prediction is converted into forward prediction; or motion information of forward prediction is discarded, and bidirectional prediction is converted into backward prediction.

It should be noted that, the bitstream may be further limited, so that when the width W of the affine coding block is equal to 8 and the height H of the affine coding block is equal to 8, a flag bit for bidirectional prediction does not need to be parsed.

It can be learned that, compared with the conventional technology in which a current coding block is partitioned into M x N (that is, 4 x 4) subblocks, that is, motion compensation is performed on each M x N (that is, 4 x 4) subblock by using a corresponding motion vector, in this embodiment of this application, the size of the subblock in the current coding block is determined based on the prediction direction of the current coding block. For example, if unidirectional prediction is performed on the current coding block, the size of the subblock in the current coding block is 4 x 4, or if bidirectional prediction is performed on the current coding block, the size of the subblock in the current coding block is 8 x 8. From a perspective of an overall picture, sizes of subblocks (or motion compensation units) in some picture blocks in this embodiment of this application are larger than a size of a subblock (or a motion compensation unit) in the conventional technology. In this way, an average quantity of reference pixels that need to be read for motion compensation for all pixels is smaller, and computational complexity of interpolation is lower. Therefore, in this embodiment of this application, motion compensation complexity is reduced to some extent while prediction efficiency is also considered, so that coding performance is improved.

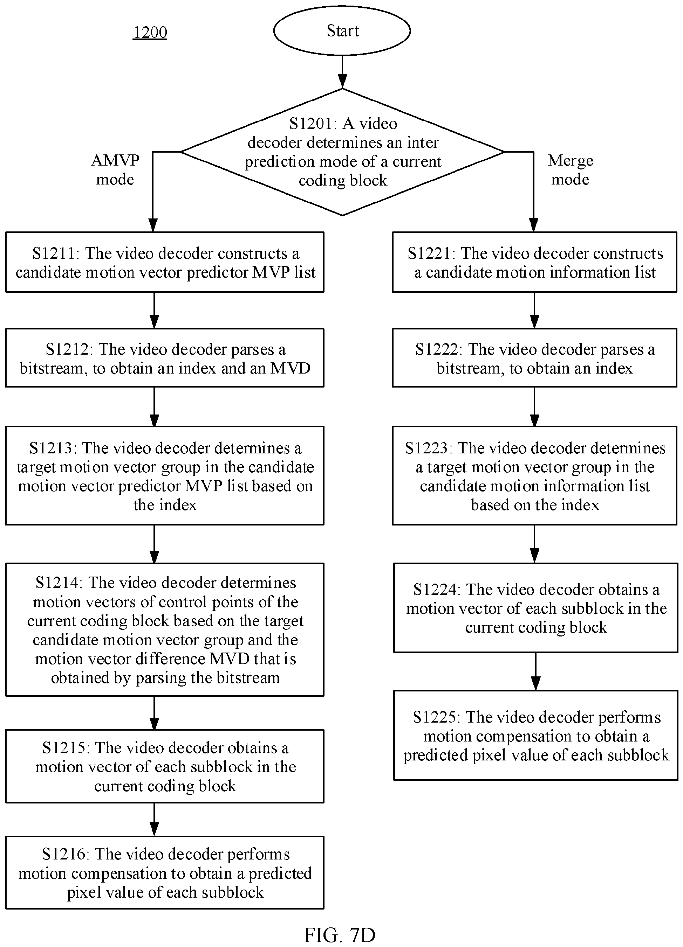

FIG. 7D is a flowchart of a process 1200 of a decoding method according to an embodiment of this application. The process 1200 may be performed by the video decoder 30, and specifically, may be performed by an inter prediction unit and an entropy decoding unit (also referred to as an entropy decoder) of the video decoder 30. The process 1200 is described as a series of steps or operations. It should be understood that the steps or operations of the process 700 may be performed in various orders and/or simultaneously, and are not limited to an execution order shown in FIG. 7D. It is assumed that the video decoder is being used for a video data stream having a plurality of video frames. For the process shown in FIG. 7D, related descriptions are as follows:

It should be understood that, in this embodiment of this application, a size of a subblock in a current affine coding block is determined based on a prediction direction (for example, unidirectional prediction or bidirectional prediction) of the current coding block, or the size of the subblock is determined based on the prediction direction of the current coding block and a size of the current coding block. Details are not described in the following process. For details, refer to the foregoing embodiments.

Step S1201: The video decoder determines an inter prediction mode of the current coding block.

Specifically, the inter prediction mode may be an advanced motion vector prediction (Advanced Motion Vector Prediction, AMVP) mode, or may be a merge (merge) mode.

If the determined inter prediction mode of the current coding block is the AMVP mode, steps S1211 to S1216 are performed.

If the determined inter prediction mode of the current coding block is the merge mode, steps S 1221 to S1225 are performed.

AMVP mode:

Step S1211: The video decoder constructs a candidate motion vector predictor MVP list.

Specifically, the video decoder constructs the candidate motion vector predictor MVP list (also referred to as a candidate motion vector list) by using the inter prediction unit (also referred to as an inter prediction module). The construction may be performed in either of the following two manners or a combination of the two manners. The constructed candidate motion vector predictor MVP list may be a triplet candidate motion vector predictor MVP list or a 2-tuple candidate motion vector predictor MVP list. The two manners are specifically as follows:

Manner 1: The candidate motion vector predictor MVP list is constructed by using a motion model-based motion vector prediction method.

First, all or some neighboring blocks of the current coding block are traversed in a pre-specified order, to determine a neighboring affine coding block in the neighboring blocks. There may be one or more determined neighboring affine coding blocks. For example, neighboring blocks A, B, C, D, and E shown in FIG. 7A may be traversed sequentially, to determine a neighboring affine coding block in the neighboring blocks A, B, C, D, and E. The inter prediction unit determines a group of candidate motion vector predictors (each group of candidate motion vector predictors is a 2-tuple or a triplet) based on at least one neighboring affine coding block. The following uses one neighboring affine coding block as an example for description. For ease of description, the neighboring affine coding block is referred to as a first neighboring affine coding block. Details are as follows:

A first affine model is determined based on motion vectors of control points of the first neighboring affine coding block. Further, motion vectors of control points of the current coding block is predicted based on the first affine model. A manner of predicting the motion vectors of the control points of the current coding block based on the motion vectors of the control points of the first neighboring affine coding block varies with a parameter model of the current coding block. Therefore, the following provides descriptions for different cases.

A: The parameter model of the current coding block is a 4-parameter affine transform model.

If the first neighboring affine coding block is located in a coding tree unit (Coding Tree Unit, CTU) above the current coding block, and the first neighboring affine coding block is a 4-parameter affine coding block, motion vectors of two bottom control points of the first neighboring affine coding block are obtained. For example, location coordinates $(x_6, y_6)$ and a motion vector $(vx_6, vy_6)$ of a bottom-left control point of the first neighboring affine coding block and location coordinates $(x_7, y_7)$ and a motion vector $(vx_7, vy_7)$ of a bottom-right control point of the first neighboring affine coding block may be obtained (step S1201).

A first affine model (the first affine model obtained in this case is a 4-parameter affine model) is formed based on the motion vectors and location coordinates of the two bottom control points of the first neighboring affine coding block (step S1202).

The motion vectors of the control points of the current coding block is predicted based on the first affine model. For example, location coordinates of a top-left control point of the current coding block and location coordinates of a top-right control point of the current coding block may be separately substituted into the first affine model, to predict a motion vector of the top-left control point of the current coding block and a motion vector of the top-right control point of the current coding block. Details are shown in formulas (1) and (2) (step S1203).

$$\begin{cases} vx_0 = vx_6 + \frac{(vx_7 - vx_6)}{x_7 - x_6} \times (x_0 - x_6) - \frac{(vy_7 - vy_6)}{x_7 - x_6} \times (y_0 - y_6) \\ vy_0 = vy_6 + \frac{(vy_7 - vy_6)}{x_7 - x_6} \times (x_0 - x_6) + \frac{(vx_7 - vx_6)}{x_7 - x_6} \times (y_0 - y_6) \end{cases} \quad (1)$$

$$\begin{cases} vx_1 = vx_6 + \frac{(vx_7-vx_6)}{x_7-x_6} \times (x_1 - x_6) - \frac{(vy_7-vy_6)}{x_7-x_6} \times (y_1 - y_6) \\ vy_1 = vy_6 + \frac{(vy_7-vy_6)}{x_7-x_6} \times (x_1 - x_6) + \frac{(vx_7-vx_6)}{x_7-x_6} \times (y_1 - y_6) \end{cases} \qquad (2)$$

In the formulas (1) and (2), $(x_0, y_0)$ are the coordinates of the top-left control point of the current coding block, and $(x_1, y_1)$ are the coordinates of the top-right control point of the current coding block. In addition, $(vx_0, vy_0)$ is the predicted motion vector of the top-left control point of the current coding block, and $(vx_1, vy_1)$ is the predicted motion vector of the top-right control point of the current coding block.

Optionally, both the location coordinates $(x_6, y_6)$ of the bottom-left control point and the location coordinates $(x_7, y_7)$ of the bottom-right control point of the first neighboring affine coding block are obtained through calculation based on location coordinates $(x_4, y_4)$ of a top-left control point of the first neighboring affine coding block. The location coordinates $(x_6, y_6)$ of the bottom-left control point of the first neighboring affine coding block are $(x_4, y_4 + cuH)$, and the location coordinates $(x_7, y_7)$ of the bottom-right control point of the first neighboring affine coding block are $(x_4 + cuW, y_4 + cuH)$, where cuW is the width of the first neighboring affine coding block, and cuH is the height of the first neighboring affine coding block. In addition, the motion vector of the bottom-left control point of the first neighboring affine coding block is a motion vector of a bottom-left subblock of the first neighboring affine coding block, and the motion vector of the bottom-right control point of the first neighboring affine coding block is a motion vector of a bottom-right subblock of the first neighboring affine coding block. It can be learned that both the location coordinates of the bottom-left control point and the location coordinates of the bottom-right control point of the first neighboring affine coding block are derived, rather than being read from memory. Therefore, according to this method, a quantity of memory reading times can be further reduced and decoding performance can be improved. In another optional solution, the location coordinates of the bottom-left control point and the location coordinates of the bottom-right control point may be alternatively pre-stored in the memory, and read from the memory for use when necessary.

If the first neighboring affine coding block is located in a coding tree unit (Coding Tree Unit, CTU) above the current coding block, and the first neighboring affine coding block is a 6-parameter affine coding block, a candidate motion vector predictor of the control point of the current block is not generated based on the first neighboring affine coding block.

If the first neighboring affine coding block is not located in a CTU above the current coding block, the manner of predicting the motion vectors of the control points of the current coding block is not limited herein. However, for ease of understanding, an optional determining manner is also described below by using an example.

Location coordinates and motion vectors of three control points of the first neighboring affine coding block may be obtained, for example, location coordinates $(x_4, y_4)$ and a motion vector $(vx_4, vy_4)$ of a top-left control point, location coordinates $(x_5, y_5)$ and a motion vector $(vx_5, vy_5)$ of a top-right control point, and location coordinates $(x_6, y_6)$ and a motion vector $(vx_6, vy_6)$ of a bottom-left control point.

A 6-parameter affine model is formed based on the location coordinates and the motion vectors of the three control points of the first neighboring affine coding block.

Location coordinates $(x_0, y_0)$ of a top-left control point and location coordinates $(x_1, y_1)$ of a top-right control point of the current coding block are substituted into the 6-parameter affine model, to predict a motion vector of the top-left control point and a motion vector of the top-right control point of the current coding block. Details are shown in formulas (4) and (5).

$$\begin{cases} vx_0 = vx_4 + \frac{(vx_5-vx_4)}{x_5-x_4} \times (x_0 - x_4) + \frac{(vx_6-vx_4)}{y_6-y_4} \times (y_0 - y_4) \\ vy_0 = vy_4 + \frac{(vy_5-vy_4)}{x_5-x_4} \times (x_0 - x_4) + \frac{(vy_6-vy_4)}{y_6-y_4} \times (y_0 - y_4) \end{cases} \qquad (4)$$

$$\begin{cases} vx_1 = vx_4 + \frac{(vx_5-vx_4)}{x_5-x_4} \times (x_1 - x_4) + \frac{(vx_6-vx_4)}{y_6-y_4} \times (y_1 - y_4) \\ vy_1 = vy_4 + \frac{(vy_5-vy_4)}{x_5-x_4} \times (x_1 - x_4) + \frac{(vy_6-vy_4)}{y_6-y_4} \times (y_1 - y_4) \end{cases} \qquad (5)$$

In the formulas (4) and (5), $(vx_0, vy_0)$ is the predicted motion vector of the top-left control point of the current coding block, and $(vx_1, vy_1)$ is the predicted motion vector of the top-right control point of the current coding block.

B: The parameter model of the current coding block is a 6-parameter affine transform model. A derivation manner may be as follows:

If the first neighboring affine coding block is located in a CTU above the current coding block, and the first neighboring affine coding block is a 4-parameter affine coding block, location coordinates and motion vectors of two bottom control points of the first neighboring affine coding block are obtained. For example, location coordinates $(x_6, y_6)$ and a motion vector $(vx_6, vy_6)$ of a bottom-left control point of the first neighboring affine coding block and location coordinates $(x_7, y_7)$ and a motion vector $(vx_7, vy_7)$ of a bottom-right control point of the first neighboring affine coding block may be obtained.

A first affine model (the first affine model obtained in this case is a 4-parameter affine model) is formed based on the motion vectors of the two bottom control points of the first neighboring affine coding block.

The motion vectors of the control points of the current coding block is predicted based on the first affine model. For example, location coordinates of a top-left control point of the current coding block, location coordinates of a top-right control point of the current coding block, and location coordinates of a bottom-left control point of the current coding block may be separately substituted into the first affine model, to predict a motion vector of the top-left control point of the current coding block, a motion vector of the top-right control point of the current coding block, and a motion vector of the bottom-left control point of the current coding block. Details are shown in formulas (1), (2), and (3).

$$\begin{cases} vx_2 = vx_6 + \frac{(vx_7 - vx_6)}{x_7 - x_6} \times (x_2 - x_6) - \frac{(vy_7 - vy_6)}{x_7 - x_6} \times (y_2 - y_6) \\ vy_2 = vy_6 + \frac{(vy_7 - vy_6)}{x_7 - x_6} \times (x_2 - x_6) + \frac{(vx_7 - vx_6)}{x_7 - x_6} \times (y_2 - y_6) \end{cases} \quad (3)$$

The formulas (1) and (2) have been described above. In the formulas (1), (2), and (3), $(x_0, y_0)$ are the coordinates of the top-left control point of the current coding block, $(x_1, y_1)$ are the coordinates of the top-right control point of the current coding block, and $(x_2, y_2)$ are the coordinates of the bottom-left control point of the current coding block. In addition, $(vx_0, vy_0)$ is the predicted motion vector of the top-left control point of the current coding block, $(vx_1, vy_1)$ is the predicted motion vector of the top-right control point of the current coding block, and $(vx_2, vy_2)$ is the predicted motion vector of the bottom-left control point of the current coding block.

If the first neighboring affine coding block is located in a coding tree unit (Coding Tree Unit, CTU) above the current coding block, and the first neighboring affine coding block is a 6-parameter affine coding block, a candidate motion vector predictor of the control point of the current block is not generated based on the first neighboring affine coding block.

If the first neighboring affine coding block is not located in a CTU above the current coding block, the manner of predicting the motion vectors of the control points of the current coding block is not limited herein. However, for ease of understanding, an optional determining manner is also described below by using an example.

Location coordinates and motion vectors of three control points of the first neighboring affine coding block may be obtained, for example, location coordinates $(x_4, y_4)$ and a motion vector $(vx_4, vy_4)$ of a top-left control point, location coordinates $(x_5, y_5)$ and a motion vector $(vx_5, vy_5)$ of a top-right control point, and location coordinates $(x_6, y_6)$ and a motion vector $(vx_6, vy_6)$ of a bottom-left control point.

A 6-parameter affine model is formed based on the location coordinates and the motion vectors of the three control points of the first neighboring affine coding block.

Location coordinates $(x_0, y_0)$ of a top-left control point, location coordinates $(x_1, y_1)$ of a top-right control point, and location coordinates $(x_2, y_2)$ of a bottom-left control point of the current coding block are substituted into the 6-parameter affine model, to predict a motion vector of the top-left control point, a motion vector of the top-right control point, and a motion vector of the bottom-left control point of the current coding block, as shown in formulas (4), (5), and (6).

$$\begin{cases} vx_2 = vx_4 + \frac{(vx_5 - vx_4)}{x_5 - x_4} \times (x_2 - x_4) + \frac{(vx_6 - vx_4)}{y_6 - y_4} \times (y_2 - y_4) \\ vy_2 = vy_4 + \frac{(vy_5 - vy_4)}{x_5 - x_4} \times (x_2 - x_4) + \frac{(vy_6 - vy_4)}{y_6 - y_4} \times (y_2 - y_4) \end{cases} \quad (6)$$

The formulas (4) and (5) have been described above. In the formulas (4), (5), and (6), $(vx_0, vy_0)$ is the predicted motion vector of the top-left control point of the current coding block, $(vx_1, vy_1)$ is the predicted motion vector of the top-right control point of the current coding block, and $(vx_2, vy_2)$ is the predicted motion vector of the bottom-left control point of the current coding block.

Manner 2: The candidate motion vector predictor MVP list is constructed by using a control point combination-based motion vector prediction method.

A manner of constructing the candidate motion vector predictor MVP list varies with a parameter model of the current coding block. Details are described below.

A: The parameter model of the current coding block is a 4-parameter affine transform model. A derivation manner may be as follows:

Motion vectors of the top-left corner and the top-right corner of the current coding block are estimated based on motion information of neighboring decoded blocks around the current coding block. As shown in FIG. 7B, first, motion vectors of neighboring decoded blocks A and/or B and/or C of the top-left corner are used as candidate motion vectors for the motion vector of the top-left corner of the current coding block, and motion vectors of neighboring decoded blocks D and/or E of the top-right corner are used as candidate motion vectors for the motion vector of the top-right corner of the current coding block. A candidate motion vector of the top-left corner and a candidate motion vector of the top-right corner may be combined to obtain a group of candidate motion vector predictors. A plurality of records obtained in this combination manner may constitute the candidate motion vector predictor MVP list.

B: The parameter model of the current coding block is a 6-parameter affine transform model. A derivation manner may be as follows:

Motion vectors of the top-left corner and the top-right corner of the current coding block are estimated based on motion information of neighboring decoded blocks around the current coding block. As shown in FIG. 7B, first, motion vectors of neighboring decoded blocks A and/or B and/or C of the top-left corner are used as candidate motion vectors for the motion vector of the top-left corner of the current coding block, motion vectors of neighboring decoded blocks D and/or E of the top-right corner are used as candidate motion vectors for the motion vector of the top-right corner of the current coding block, and motion vectors of neighboring decoded blocks F and/or G of the bottom-left corner are used as candidate motion vectors for a motion vector of the bottom-left corner of the current coding block. A candidate motion vector of the top-left corner, a candidate motion vector of the top-right corner, and a candidate motion vector of the bottom-left corner may be combined to obtain a group of candidate motion vector predictors. A plurality of groups of candidate motion vector predictors obtained in this combination manner may constitute the candidate motion vector predictor MVP list.

It should be noted that the candidate motion vector predictor MVP list may be constructed by using only the candidate motion vector predictors predicted in the manner 1, or the candidate motion vector predictor MVP list may be constructed by using only the candidate motion vector predictors predicted in the manner 2, or the candidate motion vector predictor MVP list may be constructed by using both the candidate motion vector predictors predicted in the manner 1 and the candidate motion vector predictors predicted in the manner 2. In addition, the candidate motion vector predictor MVP list may be further pruned and sorted according to a preconfigured rule, and then truncated or padded to obtain motion vector predictor groups of a particular quantity. When each group of candidate motion vector predictors in the candidate motion vector predictor MVP list includes motion vector predictors of three control points, the candidate motion vector predictor MVP list may be referred to as a triplet list; or when each group of candidate motion vector predictors in the candidate motion vector predictor MVP list includes motion vector predictors of two control points, the candidate motion vector predictor MVP list may be referred to as a 2-tuple list.

Step S1212: The video decoder parses a bitstream, to obtain an index and a motion vector difference MVD

Specifically, the video decoder may parse the bitstream by using the entropy decoding unit. The index is used to indicate a target candidate motion vector group of the current coding block, and the target candidate motion vector represents motion vector predictors of a group of control points of the current coding block.

Step S1213: The video decoder determines the target motion vector group in the candidate motion vector predictor MVP list based on the index.

Specifically, the target candidate motion vector group determined by the video decoder in the candidate MVP list based on the index is used as optimal candidate motion vector predictors (optionally, when a length of the candidate motion vector predictor MVP list is 1, the bitstream does not need to be parsed to obtain the index, but the target motion vector group can be directly determined). The following briefly describes the optimal candidate motion vector predictors.

If the parameter model of the current coding block is the 4-parameter affine transform model, optimal motion vector predictors of two control points are selected from the foregoing constructed candidate motion vector predictor MVP list. For example, the video decoder parses the bitstream to obtain an index number, and then determines optimal motion vector predictors of two control points in a 2-tuple candidate motion vector predictor MVP list based on the index number. Each group of candidate motion vector predictors in the candidate motion vector predictor MVP list corresponds to a respective index number.

If the parameter model of the current coding block is the 6-parameter affine transform model, optimal motion vector predictors of three control points are selected from the foregoing constructed candidate motion vector predictor MVP list. For example, the video decoder parses the bitstream to obtain an index number, and then determines optimal motion vector predictors of three control points in a triplet candidate motion vector predictor MVP list based on the index number. Each group of candidate motion vector predictors in the candidate motion vector predictor MVP list corresponds to a respective index number.

Step S1214: The video decoder determines the motion vectors of the control points of the current coding block based on the target candidate motion vector group and the motion vector difference MVD that is obtained by parsing the bitstream.

If the parameter model of the current coding block is the 4-parameter affine transform model, motion vector differences of two control points of the current coding block are obtained by decoding the bitstream, and a new candidate motion vector group is obtained based on the motion vector differences of the control points and the target candidate motion vector group indicated by the index. For example, a motion vector difference MVD of the top-left control point and a motion vector difference MVD of the top-right control point are obtained by decoding the bitstream, and are respectively added to a motion vector of a top-left control point and a motion vector of a top-right control point in the target candidate motion vector group, to obtain a new candidate motion vector group. Therefore, the new candidate motion vector group includes new motion vectors of the top-left control point and the top-right control point of the current coding block.

Optionally, a motion vector of a third control point may be further obtained based on the motion vectors of the two control points of the current coding block in the new candidate motion vector group by using the 4-parameter affine transform model. For example, a motion vector $(vx_0, vy_0)$ of the top-left control point of the current coding block and a motion vector $(vx_1, vy_1)$ of the top-right control point of the current coding block are obtained. Then, a motion vector $(vx_2, vy_2)$ of the bottom-left control point $(x_2, y_2)$ of the current coding block is obtained through calculation according to a formula (7).

$$\begin{cases} vx_2 = -\frac{vy_1 - vy_0}{W} H + vx_0 \\ vy_2 = +\frac{vx_1 - vx_0}{W} H + vy_0 \end{cases} \quad (7)$$

Herein, $(x_0, y_0)$ are location coordinates of the top-left control point, $(x_1, y_1)$ are location coordinates of the top-right control point, W is the width of the current coding block, and H is the height of the current coding block.

If the parameter model of the current coding block is the 6-parameter affine transform model, motion vector differences of three control points of the current coding block are obtained by decoding the bitstream, and a new candidate motion vector group is obtained based on the motion vector differences MVDs of the control points and the target candidate motion vector group indicated by the index. For example, a motion vector difference MVD of the top-left control point, a motion vector difference MVD of the top-right control point, and a motion vector difference of the bottom-left control point are obtained by decoding the bitstream, and are respectively added to a motion vector of a top-left control point, a motion vector of a top-right control point, and a motion vector of a bottom-left control point in the target candidate motion vector group, to obtain a new candidate motion vector group. Therefore, the new candidate motion vector group includes motion vectors of the top-left control point, the top-right control point, and the bottom-left control point of the current coding block.

Step S1215: The video decoder obtains a motion vector of each subblock in the current coding block based on the determined motion vectors of the control points of the current coding block by using an affine transform model, where the size of the subblock is determined based on the prediction direction of the current picture block.

Specifically, the new candidate motion vector group obtained based on the target candidate motion vector group and the MVDs includes motion vectors of two control points (for example, the top-left control point and the top-right control point) or three control points (for example, the top-left control point, the top-right control point, and the bottom-left control point). For each subblock (one subblock may be equivalent to one motion compensation unit) in the current coding block, motion information of a pixel at a preset location in the motion compensation unit may be used to represent motion information of all pixels in the motion compensation unit. If a size of the motion compensation unit is M x N (M is less than or equal to the width W of the current coding block, N is less than or equal to the height H of the current coding block, and M, N, W, and H each are a positive integer and are usually a power of 2, for example, 4, 8, 16, 32, 64, or 128), the pixel at the preset location may be a center pixel (M/2, N/2) of the motion compensation unit, a top-left pixel (0, 0), a top-right pixel (M - 1, 0), or a pixel at another location. FIG. 7C shows a 4 x 4 motion compensation unit, and FIG. 7D shows an 8 x 8 motion compensation unit.

Coordinates of the center pixel of the motion compensation unit relative to a pixel in the top-left corner of the current coding block are calculated according to a formula (8-1). Herein, i is an $i^{th}$ motion compensation unit (from left to right) in a horizontal direction, j is a $j^{th}$ motion compensation unit (from top to bottom) in a vertical direction, and $(x_{(i,j)}, y_{(i,j)})$ represent coordinates of a center pixel of an $(i, j)^{th}$ motion compensation unit relative to the pixel at the top-left control point of the current coding block. Then, based on an affine model type (6-parameter or 4-parameter) of the current coding block, $(x_{(i,j)}, y_{(i,j)})$ are substituted into a 6-parameter affine model formula (8-2) or $(x_{(i,j)}, y_{(i,j)})$ are substituted into a 4-parameter affine model formula (8-3) to obtain motion information of a center pixel of each motion compensation unit, and the motion information is used as motion vectors $(vx_{(i,j)}, vy_{(i,j)})$ of all pixels in the motion compensation unit.

$$\begin{cases} x_{(i,j)} = M \times i + \frac{M}{2}, i = 0,1.. \\ y_{(i,j)} = N \times j + \frac{N}{2}, j = 0,1.. \end{cases} \quad (8\text{-}1)$$

$$\begin{cases} vx = \dfrac{vx_1 - vx_0}{W}x + \dfrac{vx_2 - vx_0}{H}y + vx_0 \\ vy = \dfrac{vy_1 - vy_0}{W}x + \dfrac{vy_2 - vy_0}{H}y + vy_0 \end{cases} \qquad (8\text{-}2)$$

$$\begin{cases} vx = \dfrac{vx_1 - vx_0}{W}x - \dfrac{vy_1 - vy_0}{W}y + vx_0 \\ vy = \dfrac{vy_1 - vy_0}{W}x + \dfrac{vx_1 - vx_0}{W}y + vy_0 \end{cases} \qquad (8\text{-}3)$$

Optionally, when the current coding block is a 6-parameter coding block, and motion vectors of one or more subblocks in the current coding block are obtained based on the target candidate motion vector group, if a bottom boundary of the current coding block overlaps a bottom boundary of a CTU in which the current coding block is located, a motion vector of a subblock in the bottom-left corner of the current coding block is obtained through calculation based on location coordinates (0, H) of the bottom-left corner of the current coding block and a 6-parameter affine model constructed by using the three control points, and a motion vector of a subblock in the bottom-right corner of the current coding block is obtained through calculation based on location coordinates (W, H) of the bottom-right corner of the current coding block and the 6-parameter affine model constructed by using the three control points. For example, the motion vector of the subblock in the bottom-left corner of the current coding block can be obtained by substituting the location coordinates (0, H) of the bottom-left corner of the current coding block into the 6-parameter affine model (rather than substituting coordinates of a center pixel of the subblock in the bottom-left corner into the affine model for calculation), and the motion vector of the subblock in the bottom-right corner of the current coding block can be obtained by substituting the location coordinates (W, H) of the bottom-right corner of the current coding block into the 6-parameter affine model (rather than substituting coordinates of a center pixel of the subblock in the bottom-right corner into the affine model for calculation). In this way, when the motion vector of the bottom-left control point and the motion vector of the bottom-right control point of the current coding block are used (for example, a candidate motion vector predictor MVP list of another block is subsequently constructed based on the motion vectors of the bottom-left control point and the bottom-right control point of the current block), accurate values rather than estimated values are used. W is the width of the current coding block, and H is the height of the current coding block.

Optionally, when the current coding block is a 4-parameter coding block, and motion vectors of one or more subblocks in the current coding block are obtained based on the target candidate motion vector group, if a bottom boundary of the current coding block overlaps a bottom boundary of a CTU in which the current coding block is located, a motion vector of a subblock in the bottom-left corner of the current coding block is obtained through calculation based on location coordinates (0, H) of the bottom-left corner of the current coding block and a 4-parameter affine model constructed by using the two control points, and a motion vector of a subblock in the bottom-right corner of the current coding block is obtained through calculation based on location coordinates (W, H) of the bottom-right corner of the current coding block and the 4-parameter affine model constructed by using the two control points. For example, the motion vector of the subblock in the bottom-left corner of the current coding block can be obtained by substituting the location coordinates (0, H) of the bottom-left corner of the current coding block into the 4-parameter affine model (rather than substituting coordinates of a center pixel of the subblock in the bottom-left corner into the affine model for calculation), and the motion vector of the subblock in the bottom-right corner of the current coding block can be obtained by substituting the location coordinates (W, H) of the bottom-right corner of the current coding block into the 4-parameter affine model (rather than substituting coordinates of a center pixel of the subblock in the bottom-right corner into the affine model for calculation). In this way, when the motion vector of the bottom-left control point and the motion vector of the bottom-right control point of the current coding block are used (for example, a candidate motion vector predictor MVP list of another block is subsequently constructed based on the motion vectors of the bottom-left control point and the bottom-right control point of the current block), accurate values rather than estimated values are used. W is the width of the current coding block, and H is the height of the current coding block.

Step S1216: The video decoder performs motion compensation based on the motion vector of each subblock in the current coding block, to obtain a predicted pixel value of each subblock. For example, a corresponding subblock is found in a reference frame based on the motion vector of each subblock and a reference frame index, and interpolation filtering is performed, to obtain the predicted pixel value of each subblock.


Merge mode:


Step S1221: The video decoder constructs a candidate motion information list.

Specifically, the video decoder constructs the candidate motion information list (also referred to as a candidate motion vector list) by using the inter prediction unit (also referred to as an inter prediction module). The construction may be performed in either of the following two manners or a combination of the two manners. The constructed candidate motion information list is a triplet candidate motion information list. The two manners are specifically as follows:

Manner 1: The candidate motion information list is constructed by using a motion model-based motion vector prediction method.

First, all or some neighboring blocks of the current coding block are traversed in a pre-specified order, to determine a neighboring affine coding block in the neighboring blocks. There may be one or more determined neighboring affine coding blocks. For example, neighboring blocks A, B, C, D, and E shown in FIG. 7A may be traversed sequentially, to determine a neighboring affine coding block in the neighboring blocks A, B, C, D, and E. The inter prediction unit determines a group of candidate motion vectors (each group of candidate motion vectors is a 2-tuple or a triplet) based on each neighboring affine coding block. The following uses one neighboring affine coding block as an example for description. For ease of description, the neighboring affine coding block is referred to as a first neighboring affine coding block. Details are as follows:

A first affine model is determined based on motion vectors of control points of the first neighboring affine coding block. Further, motion vectors of control points of the current coding block is predicted based on the first affine model. Details are as follows:

If the first neighboring affine coding block is located in a CTU above the current coding block, and the first neighboring affine coding block is a 4-parameter affine coding block, location coordinates and motion vectors of two bottom control points of the first neighboring affine coding block are obtained. For example, location coordinates $(x_6, y_6)$ and a motion vector $(vx_6, vy_6)$ of a bottom-left control point of the first neighboring affine coding block and location coordinates $(x_7, y_7)$ and a motion vector $(vx_7, vy_7)$ of a bottom-right control point of the first neighboring affine coding block may be obtained.

A first affine model (the first affine model obtained in this case is a 4-parameter affine model) is formed based on the motion vectors of the two bottom control points of the first neighboring affine coding block.

Optionally, the motion vectors of the control points of the current coding block is predicted based on the first affine model. For example, location coordinates of a top-left control point of the current coding block, location coordinates of a top-right control point of the current coding block, and location coordinates of a bottom-left control point of the current coding block may be separately substituted into the first affine model, to predict a motion vector of the top-left control point of the current coding block, a motion vector of the top-right control point of the current coding block, and a motion vector of the bottom-left control point of the current coding block. A candidate motion vector triplet is formed and is added to the candidate motion information list. Details are shown in formulas (1), (2), and (3).

Optionally, the motion vectors of the control points of the current coding block is predicted based on the first affine model. For example, location coordinates of a top-left control point of the current coding block and location coordinates of a top-right control point of the current coding block may be separately substituted into the first affine model, to predict a motion vector of the top-left control point of the current coding block and a motion vector of the top-right control point of the current coding block. A candidate motion vector 2-tuple is formed and is added to the candidate motion information list. Details are shown in formulas (1) and (2).

In the formulas (1), (2), and (3), $(x_0, y_0)$ are the coordinates of the top-left control point of the current coding block, $(x_1, y_1)$ are the coordinates of the top-right control point of the current coding block, and $(x_2, y_2)$ are the coordinates of the bottom-left control point of the current coding block. In addition, $(vx_0, vy_0)$ is the predicted motion vector of the top-left control point of the current coding block, $(vx_1, vy_1)$ is the predicted motion vector of the top-right control point of the current coding block, and $(vx_2, vy_2)$ is the predicted motion vector of the bottom-left control point of the current coding block.

If the first neighboring affine coding block is located in a coding tree unit (Coding Tree Unit, CTU) above the current coding block, and the first neighboring affine coding block is a 6-parameter affine coding block, a candidate motion vector predictor of the control point of the current block is not generated based on the first neighboring affine coding block.

If the first neighboring affine coding block is not located in a CTU above the current coding block, the manner of predicting the motion vectors of the control points of the current coding block is not limited herein. However, for ease of understanding, an optional determining manner is also described below by using an example.

Location coordinates and motion vectors of three control points of the first neighboring affine coding block may be obtained, for example, location coordinates $(x_4, y_4)$ and a motion vector $(vx_4, vy_4)$ of a top-left control point, location coordinates $(x_5, y_5)$ and a motion vector $(vx_5, vy_5)$ of a top-right control point, and location coordinates $(x_6, y_6)$ and a motion vector $(vx_6, vy_6)$ of a bottom-left control point.

A 6-parameter affine model is formed based on the location coordinates and the motion vectors of the three control points of the first neighboring affine coding block.

Location coordinates $(x_0, y_0)$ of a top-left control point, location coordinates $(x_1, y_1)$ of a top-right control point, and location coordinates $(x_2, y_2)$ of a bottom-left control point of the current coding block are substituted into the 6-parameter affine model, to predict a motion vector of the top-left control point, a motion vector of the top-right control point, and a motion vector of the bottom-left control point of the current coding block, as shown in formulas (4), (5), and (6).

$$\begin{cases} vx_2 = vx_4 + \frac{(vx_5 - vx_4)}{x_5 - x_4} \times (x_2 - x_4) + \frac{(vx_6 - vx_4)}{y_6 - y_4} \times (y_2 - y_4) \\ vy_2 = vy_4 + \frac{(vy_5 - vy_4)}{x_5 - x_4} \times (x_2 - x_4) + \frac{(vy_6 - vy_4)}{y_6 - y_4} \times (y_2 - y_4) \end{cases} \quad (6)$$

The formulas (4) and (5) have been described above. In the formulas (4), (5), and (6), $(vx_0, vy_0)$ is the predicted motion vector of the top-left control point of the current coding block, $(vx_1, vy_1)$ is the predicted motion vector of the top-right control point of the current coding block, and $(vx_2, vy_2)$ is the predicted motion vector of the bottom-left control point of the current coding block.

Manner 2: The candidate motion information list is constructed by using a control point combination-based motion vector prediction method.

The following lists two solutions, which are denoted as a solution A and a solution B.

Solution A: Motion information of two control points of the current coding block is combined, to construct a 4-parameter affine transform model. A combination of the two control points is {CP1, CP4}, {CP2, CP3}, {CP1, CP2}, {CP2, CP4}, {CP1, CP3}, or {CP3, CP4}. For example, a 4-parameter affine transform model constructed by using control points CP1 and CP2 is denoted as Affine (CP1, CP2).

It should be noted that a combination of different control points may be converted into control points at a same location. For example, a 4-parameter affine transform model obtained based on a combination {CP1, CP4}, {CP2, CP3}, {CP2, CP4}, {CP1, CP3}, or {CP3, CP4} is converted to be represented by control points {CP1, CP2} or {CP1, CP2, CP3}. A conversion method is: substituting a motion vector and coordinate information of a control point into a formula (9-1), to obtain a model parameter; and then substituting coordinate information of {CP1, CP2} into a formula, to obtain motion vectors of {CP1, CP2}. The motion vectors are used as a group of candidate motion vector predictors.

$$\begin{cases} vx = a_1 + a_3 x + a_4 y \\ vy = a_2 - a_4 x + a_3 y \end{cases} \quad (9\text{-}1)$$

In the formula (9-1), $a_1$, $a_2$, $a_3$, and $a_4$ are all parameters in the parameter model, and (x, y) represent location coordinates.

More directly, conversion may be performed according to the following formulas, to obtain a group of motion vector predictors represented by using the top-left control point and the top-right control point, and the group of motion vector predictors is added to the candidate motion information list.

A formula (9-2) for converting {CP1, CP2} into {CP1, CP2, CP3} is as follows:

$$\begin{cases} vx_2 = -\frac{vy_1 - vy_0}{W} H + vx_0 \\ vy_2 = +\frac{vx_1 - vx_0}{W} H + vy_0 \end{cases} \quad (9\text{-}2)$$

A formula (9-3) for converting {CP1, CP3} into {CP1, CP2, CP3} is as follows:

$$\begin{cases} vx_1 = +\frac{vy_2 - vy_0}{H} W + vx_0 \\ vy_1 = -\frac{vx_2 - vx_0}{H} W + vy_0 \end{cases} \quad (9\text{-}3)$$

A formula (10) for converting {CP2, CP3} into {CP1, CP2, CP3} is as follows:

$$\begin{cases} vx_0 = \frac{vx_2 - vx_1}{W*W + H*H} W*W - \frac{vy_2 - vy_1}{W*W + H*H} H*W + vx_1 \\ vy_1 = \frac{vy_2 - vy_1}{W*W + H*H} W*W + \frac{vx_2 - vx_1}{W*W + H*H} H*W + vy_1 \end{cases} \quad (10)$$

A formula (11) for converting {CP1, CP4} into {CP1, CP2, CP3} is as follows:

$$\begin{cases} vx_1 = \frac{vx_3-vx_0}{W*W+H*H} W * W + \frac{vy_3-vy_0}{W*W+H*H} H * W + vx_0 \\ vy_1 = \frac{vy_3-vy_0}{W*W+H*H} W * W - \frac{vx_3-vx_0}{W*W+H*H} H * W + vy_0 \end{cases} \quad (11)$$

A formula (12) for converting {CP2, CP4} into {CP1, CP2, CP3} is as follows:

$$\begin{cases} vx_0 = -\frac{vy_3-vy_1}{H} W + vx_1 \\ vy_0 = +\frac{vx_3-vx_1}{H} W + vy_1 \end{cases} \quad (12)$$

A formula (13) for converting {CP3, CP4} into {CP1, CP2, CP3} is as follows:

$$\begin{cases} vx_0 = +\frac{vy_3-vy_2}{W} H + vx_2 \\ vy_0 = -\frac{vx_3-vx_2}{W} H + vy_2 \end{cases} \quad (13)$$

Solution B: Motion information of three control points of the current coding block is combined, to construct a 6-parameter affine transform model. A combination of the three control points is {CP1, CP2, CP4}, {CP1, CP2, CP3}, {CP2, CP3, CP4}, or {CP1, CP3, CP4}. For example, a 6-parameter affine transform model constructed by using control points CP1, CP2, and CP3 is denoted as Affine (CP1, CP2, CP3).

It should be noted that a combination of different control points may be converted into control points at a same location. For example, a 6-parameter affine transform model obtained based on a combination {CP1, CP2, CP4}, {CP2, CP3, CP4}, or {CP1, CP3, CP4} is converted to be represented by control points {CP1, CP2, CP3}. A conversion method is: substituting a motion vector and coordinate information of a control point into a formula (14), to obtain a model parameter; and then substituting coordinate information of {CP1, CP2, CP3} into a formula, to obtain motion vectors of {CP1, CP2, CP3}. The motion vectors are used as a group of candidate motion vector predictors.

$$\begin{cases} vx = a_1 + a_3x + a_4y \\ vy = a_2 + a_5x + a_6y \end{cases} \quad (14)$$

In the formula (14), $a_1$, $a_2$, $a_3$, $a_4$, $a_5$, $a_6$ are parameters in the parameter model, and (x, y) represent location coordinates.

More directly, conversion may be performed according to the following formulas, to obtain a group of motion vector predictors represented by using the top-left control point, the top-right control point, and the bottom-left control point, and the group of motion vector predictors is added to the candidate motion information list.

A formula (15) for converting {CP1, CP2, CP4} into {CP1, CP2, CP3} is as follows:

$$\begin{cases} vx_2 = vx_3 + vx_0 - vx_1 \\ vy_2 = vy_3 + vy_0 - vy_1 \end{cases} \quad (15)$$

A formula (16) for converting {CP2, CP3, CP4} into {CP1, CP2, CP3} is as follows:

$$\begin{cases} vx_0 = vx_1 + vx_2 - vx_3 \\ vy_0 = vy_1 + vy_2 - vy_3 \end{cases} \quad (16)$$

A formula (17) for converting {CP1, CP3, CP4} into {CP1, CP2, CP3} is as follows:

$$\begin{cases} vx_1 = vx_3 + vx_0 - vx_2 \\ vy_1 = vy_3 + vy_0 - vy_2 \end{cases} \quad (17)$$

It should be noted that the candidate motion information list may be constructed by using only the candidate motion vector predictors predicted in the manner 1, or the candidate motion information list may be constructed by using only the candidate motion vector predictors predicted in the manner 2, or the candidate motion information list may be constructed by using both the candidate motion vector predictors predicted in the manner 1 and the candidate motion vector predictors predicted in the manner 2. In addition, the candidate motion information list may be further pruned and sorted according to a preconfigured rule, and then truncated or padded to obtain motion vector predictor candidates of a particular quantity. When each group of candidate motion vector predictors in the candidate motion information list includesmotion vector predictors of three control points, the candidate motion information list may be referred to as a triplet list; or when each group of candidate motion vector predictors in the candidate motion information list includes motion vector predictors of two control points, the candidate motion information list may be referred to as a 2-tuple list.

Step S1222: The video decoder parses a bitstream, to obtain an index.

Specifically, the video decoder may parse the bitstream by using the entropy decoding unit. The index is used to indicate a target candidate motion vector group of the current coding block, and the target candidate motion vector represents motion vector predictors of a group of control points of the current coding block.

Step S1223: The video decoder determines the target motion vector group in the candidate motion information list based on the index.

Specifically, the target candidate motion vector group determined by the video decoder in the candidate motion information list based on the index is used as optimal candidate motion vector predictors (optionally, when a length of the candidate motion information list is 1, the bitstream does not need to be parsed to obtain the index, but the target motion vector group can be directly determined). Specifically, the optimal candidate motion vector predictors are optimal motion vector predictors of two or three control points. For example, the video decoder obtains an index number by parsing the bitstream, and then determines optimal motion vector predictors of two or three control points in the candidate motion information list based on the index number. Each group of candidate motion vector predictors in the candidate motion information list corresponds to a respective index number.

Step S1224: The video decoder obtains a motion vector of each subblock in the current coding block based on the determined motion vectors of the control points of the current coding block by using a parameter affine transform model, where the size of the subblock is determined based on the prediction direction of the current picture block.

Specifically, the target candidate motion vector group includes motion vectors of two control points (for example, the top-left control point and the top-right control point) or three control points (for example, the top-left control point, the top-right control point, and the bottom-left control point). For each subblock (one subblock may be equivalent to one motion compensation unit) in the current coding block, motion information of a pixel at a preset location in the motion compensation unit may be used to represent motion information of all pixels in the motion compensation unit. If a size of the motion compensation unit is M x N (M is less than or equal to the width W of the current coding block, N is less than or equal to the height H of the current coding block, and M, N, W, and H each are a positive integer and are usually a power of 2, for example, 4, 8, 16, 32, 64, or 128), the pixel at the preset location may be a center pixel (M/2, N/2) of the motion compensation unit, a top-left pixel (0, 0), a top-right pixel (M - 1, 0), or a pixel at another location. FIG. 7B shows a 4 x 4 motion compensation unit, and FIG. 7C shows an 8 x 8 motion compensation unit.

Coordinates of the center pixel of the motion compensation unit relative to a pixel in the top-left corner of the current coding block are calculated according to a formula (5). Herein, i is an $i^{th}$ motion compensation unit (from left to right) in a horizontal direction, j is a $j^{th}$ motion compensation unit (from top to bottom) in a vertical direction, and ($x_{(i,j)}$, $y_{(i,j)}$) represent coordinates of a center pixel of an (i, j)$^{th}$ motion compensation unit relative to the pixel at the top-left control point of the current coding block. Then, based on an affine model type (6-parameter or 4-parameter) of the current coding block, ($x_{(i,j)}$, $y_{(i,j)}$) are substituted into a 6-parameter affine model formula (25) or ($x_{(i,y)}$, $y_{(i,j)}$) are substituted into a 4-parameter affine model formula (27) to obtain motion information of a center pixel of each motion compensation unit, and the motion information is used as motion vectors ($vx_{(i,j)}$, $vy_{(i,j)}$) of all pixels in the motion compensation unit.

Optionally, when the current coding block is a 6-parameter coding block, and motion vectors of one or more subblocks in the current coding block are obtained based on the target candidate motion vector group, if a bottom boundary of the current coding block overlaps a bottom boundary of a CTU in which the current coding block is located, a motion vector of a subblock in the bottom-left corner of the current coding block is obtained through calculation based on location coordinates (0, H) of the bottom-left corner of the current coding block and a 6-parameter affine model constructed by using the three control points, and a motion vector of a subblock in the bottom-right corner of the current coding block is obtained through calculation based on location coordinates (W, H) of the bottom-right corner of the current coding block and the 6-parameter affine model constructed by using the three control points. For example, the motion vector of the subblock in the bottom-left corner of the current coding block can be obtained by substituting the location coordinates (0, H) of the bottom-left corner of the current coding block into the 6-parameter affine model (rather than substituting coordinates of a center pixel of the subblock in the bottom-left corner into the affine model for calculation), and the motion vector of the subblock in the bottom-right corner of the current coding block can be obtained by substituting the location coordinates (W, H) of the bottom-right corner of the current coding block into the 6-parameter affine model (rather than substituting coordinates of a center pixel of the subblock in the bottom-right corner into the affine model for calculation). In this way, when the motion vector of the bottom-left control point and the motion vector of the bottom-right control point of the current coding block are used (for example, a candidate motion information list of another block is subsequently constructed based on the motion vectors of the bottom-left control point and the bottom-right control point of the current block), accurate values rather than estimated values are used. W is the width of the current coding block, and H is the height of the current coding block.

Optionally, when the current coding block is a 4-parameter coding block, and motion vectors of one or more subblocks in the current coding block are obtained based on the target candidate motion vector group, if a bottom boundary of the current coding block overlaps a bottom boundary of a CTU in which the current coding block is located, a motion vector of a subblock in the bottom-left corner of the current coding block is obtained through calculation based on location coordinates (0, H) of the bottom-left corner of the current coding block and a 4-parameter affine model constructed by using the two control points, and a motion vector of a subblock in the bottom-right corner of the current coding block is obtained through calculation based on location coordinates (W, H) of the bottom-right corner of the current coding block and the 4-parameter affine model constructed by using the two control points. For example, the motion vector of the subblock in the bottom-left corner of the current coding block can be obtained by substituting the location coordinates (0, H) of the bottom-left corner of the current coding block into the 4-parameter affine model (rather than substituting coordinates of a center pixel of the subblock in the bottom-left corner into the affine model for calculation), and the motion vector of the subblock in the bottom-right corner of the current coding block can be obtained by substituting the location coordinates (W, H) of the bottom-right corner of the current coding block into the 4-parameter affine model (rather than substituting coordinates of a center pixel of the subblock in the bottom-right corner into the affine model for calculation). In this way, when the motion vector of the bottom-left control point and the motion vector of the bottom-right control point of the current coding block are used (for example, a candidate motion information list of another block is subsequently constructed based on the motion vectors of the bottom-left control point and the bottom-right control point of the current block), accurate values rather than estimated values are used. W is the width of the current coding block, and H is the height of the current coding block.

Step S1225: The video decoder performs motion compensation based on the motion vector of each subblock in the current coding block, to obtain a predicted pixel value of each subblock. Specifically, a predicted pixel value of the current coding block is predicted based on motion vectors of one or more subblocks in the current coding block, and a reference frame index and a prediction direction that are indicated by the index.

It should be understood that, in the steps of the foregoing method process, a description order of the steps does not represent an execution order of the steps. The steps may be or may not be performed according to the foregoing description order.

It should be understood that, in the steps of the foregoing method process, S1211 and/or S1212 may be optional steps. For example, list construction is not included, and parsing the bitstream to obtain the index is not included. S1221 and/or S1222 may be optional steps. For example, list construction is not included, and parsing the bitstream to obtain the index is not included.

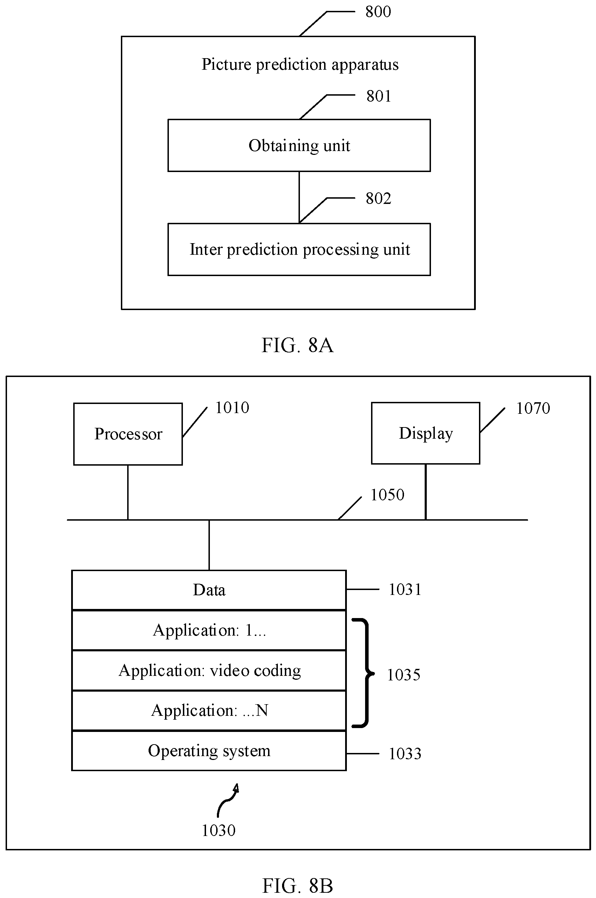

FIG. 8A is a schematic block diagram of a picture prediction apparatus 800 according to an embodiment of this application. It should be noted that the picture prediction apparatus 800 is not only applicable to inter prediction for decoding a video picture, but also applicable to inter prediction for encoding a video picture. It should be understood that the picture prediction apparatus 800 herein may correspond to the inter prediction module 211 in FIG. 2A, or may correspond to the motion compensation module 322 in FIG. 2C. The picture prediction apparatus 800 may include:

an obtaining unit 801, configured to obtain motion vectors of control points of a current picture block (such as a current affine picture block); and

an inter prediction processing unit 802, configured to perform inter prediction on the current picture block, where an inter prediction process includes: obtaining a motion vector of each subblock in the current picture block based on the motion vectors of the control points (such as affine control points) of the current picture block (such as a motion vector group) by using an affine transform model, where a size of the subblock is determined based on a prediction direction of the current picture block; and performing motion compensation based on the motion vector of each subblock in the current picture block, to obtain a predicted pixel value of each subblock.

It should be understood that when predicted pixel values of a plurality of subblocks in the picture block are obtained, a predicted pixel value of the picture block is correspondingly obtained.

In a feasible implementation, the inter prediction processing unit 802 is configured to: obtain the motion vector of each subblock in the current picture block based on the motion vectors of the control points of the current picture block by using the affine transform model, where if unidirectional prediction is performed on the current picture block, the size of the subblock in the current picture block is 4 x 4, or if bidirectional prediction is performed on the current picture block, the size of the subblock in the current picture block is 8 x 8; and perform motion compensation based on the motion vector of each subblock in the current picture block, to obtain the predicted pixel value of each subblock.

In the picture prediction apparatus in this embodiment of this application, in some feasible implementations, if the prediction direction of the current picture block is bidirectional prediction, the size of the subblock in the current picture block is U x V; or

if the prediction direction of the current picture block is unidirectional prediction, the size of the subblock in the current picture block is M x N.

Herein, U and M each represent the width of the subblock, V and N each represent the height of the subblock, and U, V, M, and N each are 2n, where n is a positive integer.

In the picture prediction apparatus in this embodiment of this application, in some feasible implementations, U ≥ M, V ≥ N, and U and V cannot be equal to M and N at the same time.

In the picture prediction apparatus in this embodiment of this application, in some feasible implementations, U = 2M, and V = 2N. For example, M is 4, and N is 4. For example, U is 8, and V is 8.

In the picture prediction apparatus in this embodiment of this application, in some feasible implementations, the obtaining unit 801 is specifically configured to:

receive an index and a motion vector difference MVD that are obtained by parsing a bitstream;

determine a target candidate motion vector predictor group in a candidate motion vector predictor MVP list based on the index; and

determine the motion vectors of the control points of the current picture block based on the target candidate motion vector predictor group and the motion vector difference MVD that is obtained by parsing the bitstream.

In the picture prediction apparatus in this embodiment of this application, in some feasible implementations, prediction direction indication information is used to indicate unidirectional prediction or bidirectional prediction, and the prediction direction indication information is derived or obtained by parsing the bitstream.

In the picture prediction apparatus in this embodiment of this application, in some feasible implementations, the obtaining unit 801 is specifically configured to:

receive an index obtained by parsing a bitstream; and

determine target candidate motion information in a candidate motion information list based on the index, where the target candidate motion information includes at least one target candidate motion vector group, and the target candidate motion vector group is used as the motion vectors of the control points of the current picture block.

In the picture prediction apparatus in this embodiment of this application, in some feasible implementations, the prediction direction of the current picture block is bidirectional prediction, and the target candidate motion information corresponding to the index in the candidate motion information list includes a first target candidate motion vector group corresponding to a first reference frame list and a second target candidate motion vector group corresponding to a second reference frame list; or

the prediction direction of the current picture block is unidirectional prediction, and the target candidate motion information corresponding to the index in the candidate motion information list includes a first target candidate motion vector group corresponding to a first reference frame list, or the target candidate motion information corresponding to the index in the candidate motion information list includes a second target candidate motion vector group corresponding to a second reference frame list.

In the picture prediction apparatus in this embodiment of this application, in some feasible implementations, when a size of the current picture block satisfies W ≥ 16 and H ≥ 16, an affine mode is allowed to be used.

In the picture prediction apparatus in this embodiment of this application, in some feasible implementations, the inter prediction processing unit is specifically configured to: obtain the affine transform model based on the motion vectors of the control points of the current picture block; and obtain the motion vector of each subblock in the current picture block based on location coordinate information of each subblock in the current picture block and the affine transform model.

It can be learned from the foregoing that, in the picture prediction apparatus in this embodiment of this application, the inter direction of the current picture block is considered when the size of the subblock in the current picture block is determined. For example, if a prediction mode of the current coding picture block is unidirectional prediction, the size of the subblock is 4 x 4; or if a prediction mode of the current coding picture block is bidirectional prediction, the size of the subblock is 8 x 8. In this way, motion compensation complexity and prediction efficiency are balanced. To be specific, the prediction efficiency is also considered while the motion compensation complexity in the conventional technology is reduced, so that coding performance is improved.

It should be noted that modules in the picture prediction apparatus in this embodiment of this application are function bodies for implementing various execution steps included in the picture prediction method in this application, that is, function bodies that can implement all steps in the picture prediction method in this application and extensions and variants of these steps. For details, refer to descriptions of the picture prediction method in this specification. For brevity, details are not described again in this specification.

FIG. 8B is a schematic block diagram of an implementation of an encoding device or a decoding device (briefly referred to as a coding device 1000) according to an embodiment of this application. The coding device 1000 may include a processor 1010, a memory 1030, and a bus system 1050. The processor and the memory are connected through the bus system. The memory is configured to store an instruction. The processor is configured to execute the instruction stored in the memory. The memory of the coding device stores program code. The processor may invoke the program code stored in the memory, to perform various video encoding or decoding methods described in this application, particularly the picture prediction method in this application. To avoid repetition, details are not described herein.

In this embodiment of this application, the processor 1010 may be a central processing unit (Central Processing Unit, "CPU" for short), or the processor 1010 may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, any conventional processor, or the like.

The memory 1030 may include a read-only memory (ROM) device or a random access memory (RAM) device. Any other storage device of an appropriate type may alternatively be used as the memory 1030. The memory 1030 may include code and data 1031 accessed by the processor 1010 through the bus 1050. The memory 1030 may further include an operating system 1033 and an application program 1035. The application program 1035 includes at least one program that allows the processor 1010 to perform the video encoding or decoding method described in this application (particularly the encoding method or the decoding method described in this application). For example, the application program 1035 may include applications 1 to N, and further include a video encoding or decoding application (briefly referred to as a video coding application) for performing the video encoding or decoding method described in this application.

The bus system 1050 may further include a power bus, a control bus, a status signal bus, and the like in addition to a data bus. However, for clear description, various types of buses in the figure are marked as the bus system 1050.

Optionally, the coding device 1000 may further include one or more output devices, for example, a display 1070. In an example, the display 1070 may be a touch display that combines a display and a touch unit that operably senses a touch input. The display 1070 may be connected to the processor 1010 through the bus 1050.

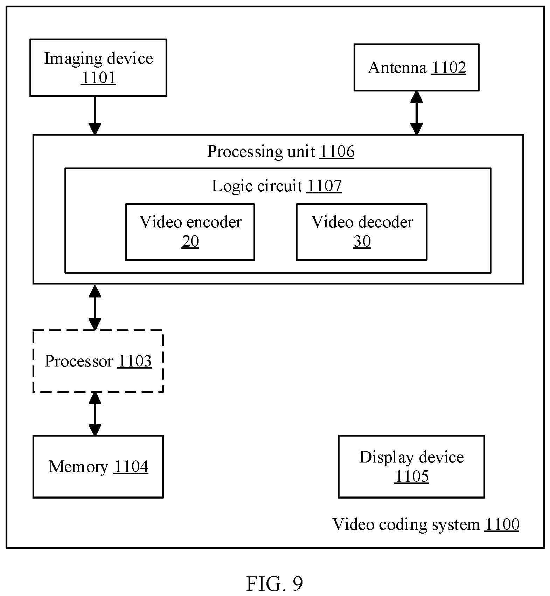

FIG. 9 is an illustration diagram of an example of a video coding system 1100 including the encoder 20 in FIG. 2A and/or the decoder 30 in FIG. 2C according to an example embodiment. The system 1100 may implement a combination of various technologies of this application. In a described implementation, the video coding system 1100 may include an imaging device 1101, the video encoder 20, the video decoder 30 (and/or a video encoder implemented by using a logic circuit 1107 of a processing unit 1106), an antenna 1102, one or more processors 1103, one or more memories 1104, and/or a display device 1105.

As shown in the figure, the imaging device 1101, the antenna 1102, the processing unit 1106, the logic circuit 1107, the video encoder 20, the video decoder 30, the processor 1103, the memory 1104, and/or the display device 1105 can communicate with each other. As described, although the video coding system 1100 is illustrated by using the video encoder 20 and the video decoder 30, in different examples, the video coding system 1100 may include only the video encoder 20 or only the video decoder 30.

In some examples, as shown in the figure, the video coding system 1100 may include the antenna 1102. For example, the antenna 1102 may be configured to transmit or receive an encoded bitstream of video data. In addition, in some examples, the video coding system 1100 may include the display device 1105. The display device 1105 may be configured to present the video data. In some examples, as shown in the figure, the logic circuit 1107 may be implemented by the processing unit 1106. The processing unit 1106 may include application-specific integrated circuit (application-specific integrated circuit, ASIC) logic, a graphics processor, a general-purpose processor, or the like. The video coding system 1100 may further include the optional processor 1103. The optional processor 1103 may similarly include application-specific integrated circuit (application-specific integrated circuit, ASIC) logic, a graphics processor, a general-purpose processor, or the like. In some examples, the logic circuit 1107 may be implemented by using hardware, for example, dedicated hardware for video coding. The processor 1103 may be implemented by using general-purpose software, an operating system, or the like. In addition, the memory 1104 may be a memory of any type, for example, a volatile memory (for example, a static random access memory (Static Random Access Memory, SRAM) or a dynamic random access memory (Dynamic Random Access Memory, DRAM)) or a nonvolatile memory (for example, a flash memory). In a non-restrictive example, the memory 1104 may be implemented by cache memory. In some examples, the logic circuit 1107 may access the memory 1104 (for example, for implementing a picture buffer). In other examples, the logic circuit 1107 and/or the processing unit 1106 may include a memory (for example, a cache) for implementing a picture buffer.

In some examples, the video encoder 20 implemented by using the logic circuit may include a picture buffer (which is implemented by, for example, the processing unit 1106 or the memory 1104) and a graphics processing unit (which is implemented by, for example, the processing unit 1106). The graphics processing unit may be communicatively coupled to the picture buffer. The graphics processing unit may include the video encoder 20 implemented by using the logic circuit 1107, to implement various modules described with reference to FIG. 2A and/or any other encoder system or subsystem described in this specification. The logic circuit may be configured to perform various operations described in this specification.

The video decoder 30 may be implemented by using the logic circuit 1107 in a similar manner, to implement various modules described with reference to the decoder 200 in FIG. 2B and/or any other decoder system or subsystem described in this specification. In some examples, the video decoder 30 implemented by using the logic circuit may include a picture buffer (which is implemented by the processing unit 1106 or the memory 1104) and a graphics processing unit (which is implemented by, for example, the processing unit 1106). The graphics processing unit may be communicatively coupled to the picture buffer. The graphics processing unit may include the video decoder 30 implemented by using the logic circuit 1107, to implement various modules described with reference to FIG. 2B and/or any other decoder system or subsystem described in this specification.

In some examples, the antenna 1102 of the video coding system 1100 may be configured to receive the encoded bitstream of the video data. As described, the encoded bitstream may include data, an indicator, an index value, mode selection data, or the like that is related to video frame encoding and that is described in this specification, for example, data related to coding partitioning (for example, a transform coefficient or a quantized transform coefficient, an optional indicator (as described), and/or data defining the coding partitioning). The video coding system 1100 may further include the video decoder 30 that is coupled to the antenna 1102 and that is configured to decode the encoded bitstream. The display device 1105 is configured to present a video frame.

In the steps of the foregoing method process, a description order of the steps does not represent an execution order of the steps. The steps may be or may not be performed according to the foregoing description order. For example, step S1211 may be performed after step S1212, or may be performed before step S1212, and step S1221 may be performed after step S1222, or may be performed before step S1222. Other steps are not enumerated one by one herein.

A person skilled in the art can understand that, the functions described with reference to various illustrative logical blocks, modules, and algorithm steps disclosed and described in this specification can be implemented by hardware, software, firmware, or any combination thereof. If implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium such as a data storage medium, or may include any communications medium that facilitates transmission of a computer program from one place to another (for example, according to a communications protocol). In this manner, the computer-readable medium may generally correspond to: (1) a non-transitory tangible computer-readable storage medium, or (2) a communications medium such as a signal or a carrier. The data storage medium may be any usable medium that can be accessed by one or more computers or one or more processors to retrieve instructions, code, and/or data structures for implementing the technologies described in this application. A computer program product may include a computer-readable medium.

By way of example but not limitation, such computer-readable storage media may include a RAM, a ROM, an EEPROM, a CD-ROM or another compact disc storage apparatus, a magnetic disk storage apparatus or another magnetic storage apparatus, a flash memory, or any other medium that can be used to store desired program code in a form of an instruction or a data structure and that can be accessed by a computer. In addition, any connection is properly referred to as a computer-readable medium. For example, if an instruction is transmitted from a website, a server, or another remote source through a coaxial cable, an optical fiber, a twisted pair, a digital subscriber line (DSL), or a wireless technology such as infrared, radio, or microwave, the coaxial cable, the optical fiber, the twisted pair, the DSL, or the wireless technology such as infrared, radio, or microwave is included in a definition of the medium. However, it should be understood that the computer-readable storage medium and the data storage medium do not include connections, carriers, signals, or other transitory media, but actually mean non-transitory tangible storage media. Disks and discs used in this specification include a compact disc (CD), a laser disc, an optical disc, a digital versatile disc (DVD), and a Blu-ray disc. The disks usually reproduce data magnetically, whereas the discs reproduce data optically by using lasers. Combinations of the foregoing items should also be included in the scope of the computer-readable media.

An instruction may be executed by one or more processors such as one or more digital signal processors (DSP), general-purpose microprocessors, application-specific integrated circuits (ASIC), field programmable gate arrays (FPGA), or other equivalent integrated or discrete logic circuits. Therefore, the term "processor" used in this specification may be any of the foregoing structures or any other structure suitable for implementing the technologies described in this specification. In addition, in some aspects, the functions described with reference to the illustrative logical blocks, modules, and steps described in this specification may be provided within dedicated hardware and/or software modules configured for encoding and decoding, or may be incorporated into a combined codec. In addition, the technologies may all be implemented in one or more circuits or logic elements.

The technologies in this application may be implemented in various apparatuses or devices, including a wireless handset, an integrated circuit (IC), or a set of ICs (for example, a chip set). Various components, modules, or units are described in this application to emphasize function aspects of the apparatuses configured to perform the disclosed technologies, but are not necessarily implemented by different hardware units. Actually, as described above, various units may be combined into a codec hardware unit in combination with appropriate software and/or firmware, or may be provided by interoperable hardware units (including one or more processors described above).

The foregoing descriptions are merely examples of specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A picture prediction method, comprising:

   obtaining motion vectors of control points of a current picture block;
   obtaining a motion vector of each subblock in the current picture block based on the motion vectors of the control points of the current picture block by using an affine transform model, wherein a size of the subblock is determined based on a prediction direction of the current picture block; and
   performing motion compensation based on the motion vector of each subblock in the current picture block, to obtain a predicted pixel value of each subblock.

2. The method according to claim 1, wherein
   if the prediction direction of the current picture block is bidirectional prediction, the size of the subblock in the current picture block is U x V; or
   if the prediction direction of the current picture block is unidirectional prediction, the size of the subblock in the current picture block is M x N, wherein
   U and M each represent a width of the subblock, V and N each represent a height of the subblock, and U, V, M, and N each are $2^n$, wherein n is a positive integer.

3. The method according to claim 2, wherein $U \geq M$, $V \geq N$, and U and V cannot be equal to M and N at the same time.

4. The method according to claim 2 or 3, wherein U = 2M, and V = 2N.

5. The method according to claim 2, 3, or 4, wherein M is 4, and N is 4.

6. The method according to claim 2, 3, 4, or 5, wherein U is 8, and V is 8.

7. The method according to any one of claims 1 to 6, wherein the obtaining motion vectors of control points of a current picture block comprises:

   receiving an index and a motion vector difference MVD that are obtained by parsing a bitstream;
   determining a target candidate motion vector group in a candidate motion vector predictor MVP list based on the index; and
   determining the motion vectors of the control points of the current picture block based on the target candidate motion vector group and the motion vector difference MVD that is obtained by parsing the bitstream.

8. The method according to claim 7, wherein
   prediction direction indication information is used to indicate unidirectional prediction or bidirectional prediction, and the prediction direction indication information is derived or obtained by parsing the bitstream.

9. The method according to any one of claims 1 to 6, wherein the obtaining motion vectors of control points of a current picture block comprises:

   receiving an index obtained by parsing a bitstream; and
   determining target candidate motion information in a candidate motion information list based on the index, wherein the target candidate motion information comprises at least one target candidate motion vector group, and the target candidate motion vector group is used as the motion vectors of the control points of the current picture block.

10. The method according to claim 9, wherein
the prediction direction of the current picture block is bidirectional prediction, and the target candidate motion information corresponding to the index in the candidate motion information list comprises a first target candidate motion vector group corresponding to a first reference frame list and a second target candidate motion vector group corresponding to a second reference frame list; or
the prediction direction of the current picture block is unidirectional prediction, and the target candidate motion information corresponding to the index in the candidate motion information list comprises a first target candidate motion vector group corresponding to a first reference frame list, or the target candidate motion information corresponding to the index in the candidate motion information list comprises a second target candidate motion vector group corresponding to a second reference frame list.

11. The method according to any one of claims 1 to 10, wherein when a size of the current picture block satisfies $W \geq 16$ and $H \geq 16$, an affine mode is allowed to be used.

12. The method according to any one of claims 1 to 11, wherein the obtaining a motion vector of each subblock in the current picture block based on the obtained motion vectors of the control points of the current picture block by using an affine transform model comprises:

obtaining the affine transform model based on the motion vectors of the control points of the current picture block; and
obtaining the motion vector of each subblock in the current picture block based on location coordinate information of each subblock in the current picture block and the affine transform model.

13. A picture prediction method, comprising:

obtaining motion vectors of control points of a current picture block;
obtaining a motion vector of each subblock in the current picture block based on the motion vectors of the control points of the current picture block by using an affine transform model, wherein if unidirectional prediction is performed on the current picture block, a size of the subblock in the current picture block is 4 x 4, or if bidirectional prediction is performed on the current picture block, a size of the subblock in the current picture block is 8 x 8; and
performing motion compensation based on the motion vector of each subblock in the current picture block, to obtain a predicted pixel value of each subblock.

14. A picture prediction apparatus, comprising:

an obtaining unit, configured to obtain motion vectors of control points of a current picture block; and
an inter prediction processing unit, configured to: obtain a motion vector of each subblock in the current picture block based on the motion vectors of the control points of the current picture block by using an affine transform model, wherein a size of the subblock is determined based on a prediction direction of the current picture block; and perform motion compensation based on the motion vector of each subblock in the current picture block, to obtain a predicted pixel value of each subblock.

15. The apparatus according to claim 14, wherein
if the prediction direction of the current picture block is bidirectional prediction, the size of the subblock in the current picture block is U x V; or
if the prediction direction of the current picture block is unidirectional prediction, the size of the subblock in the current picture block is M x N, wherein
U and M each represent a width of the subblock, V and N each represent a height of the subblock, and U, V, M, and N each are $2^n$, wherein n is a positive integer.

16. The apparatus according to claim 15, wherein $U \geq M$, $V \geq N$, and U and V cannot be equal to M and N at the same time.

17. The apparatus according to claim 15 or 16, wherein U = 2M, and V = 2N.

18. The apparatus according to claim 15, 16, or 17, wherein M is 4, and N is 4.

**19.** The apparatus according to claim 15, 16, 17, or 18, wherein U is 8, and V is 8.

**20.** The apparatus according to any one of claims 14 to 19, wherein the obtaining unit is specifically configured to:

receive an index and a motion vector difference MVD that are obtained by parsing a bitstream;
determine a target candidate motion vector predictor group in a candidate motion vector predictor MVP list based on the index; and
determine the motion vectors of the control points of the current picture block based on the target candidate motion vector predictor group and the motion vector difference MVD that is obtained by parsing the bitstream.

**21.** The apparatus according to claim 20, wherein
prediction direction indication information is used to indicate unidirectional prediction or bidirectional prediction, and the prediction direction indication information is derived or obtained by parsing the bitstream.

**22.** The apparatus according to any one of claims 14 to 19, wherein the obtaining unit is specifically configured to:

receive an index obtained by parsing a bitstream; and
determine target candidate motion information in a candidate motion information list based on the index, wherein the target candidate motion information comprises at least one target candidate motion vector group, and the target candidate motion vector group is used as the motion vectors of the control points of the current picture block.

**23.** The apparatus according to claim 22, wherein
the prediction direction of the current picture block is bidirectional prediction, and the target candidate motion information corresponding to the index in the candidate motion information list comprises a first target candidate motion vector group corresponding to a first reference frame list and a second target candidate motion vector group corresponding to a second reference frame list; or
the prediction direction of the current picture block is unidirectional prediction, and the target candidate motion information corresponding to the index in the candidate motion information list comprises a first target candidate motion vector group corresponding to a first reference frame list, or the target candidate motion information corresponding to the index in the candidate motion information list comprises a second target candidate motion vector group corresponding to a second reference frame list.

**24.** The apparatus according to any one of claims 14 to 23, wherein when a size of the current picture block satisfies $W \geq 16$ and $H \geq 16$, an affine mode is allowed to be used.

**25.** The apparatus according to any one of claims 14 to 24, wherein the inter prediction processing unit is specifically configured to: obtain the affine transform model based on the motion vectors of the control points of the current picture block; and obtain the motion vector of each subblock in the current picture block based on location coordinate information of each subblock in the current picture block and the affine transform model.

**26.** A picture prediction apparatus, comprising:

an obtaining unit, configured to obtain motion vectors of control points of a current picture block; and
an inter prediction processing unit, configured to: obtain a motion vector of each subblock in the current picture block based on the motion vectors of the control points of the current picture block by using an affine transform model, wherein if unidirectional prediction is performed on the current picture block, a size of the subblock in the current picture block is 4 x 4, or if bidirectional prediction is performed on the current picture block, a size of the subblock in the current picture block is 8 x 8; and perform motion compensation based on the motion vector of each subblock in the current picture block, to obtain a predicted pixel value of each subblock.

**27.** A video encoder, comprising:

the picture prediction apparatus according to any one of claims 14 to 26, wherein the picture prediction apparatus is configured to obtain a predicted pixel value of a current picture block based on a predicted pixel value of each subblock in the current picture block; and
a reconstruction module, configured to reconstruct the current picture block based on the predicted pixel value of the current picture block.

28. A video decoder, comprising:

the picture prediction apparatus according to any one of claims 14 to 26, wherein the picture prediction apparatus is configured to obtain a predicted pixel value of a current picture block based on a predicted pixel value of each subblock in the current picture block; and
a reconstruction module, configured to reconstruct the current picture block based on the predicted pixel value of the current picture block.

29. A video decoding device, comprising a non-volatile memory and a processor that are coupled to each other, wherein the processor invokes program code stored in the memory, to perform the method according to any one of claims 1 to 13.

Source apparatus 11

| Video source 13 | → | Video encoder 20 | → | Output interface 14 |

16

Destination apparatus 12

| Display apparatus 17 | ← | Video decoder 30 | ← | Input interface 15 |

Video encoding and decoding system 10

FIG. 1

FIG. 2A

EP 3 855 733 A1

FIG. 2B

FIG. 2C

FIG. 3

FIG. 4

| B2 | B3 | | | B1 | B0 |
|----|----|----|----|----|----|

| A2 |
|----|

Current block
(current block)

| A1 |
|----|

| A0 | | | | | T |
|----|

FIG. 5A

| Obtain motion information of all control points of a current block | 501 |
|---|---|

| Combine the motion information of the control points to obtain constructed control point motion information | 502 |
|---|---|

FIG. 5B

**FIG. 6A**

Obtain motion information of all control points of a current block — 601c

Combine the motion information of the control points to obtain constructed control point motion information — 602c

Add the constructed control point motion information to a candidate motion vector list — 603c

FIG. 6B

FIG. 6C

700

Obtain motion vectors of control points of a current picture block — 701

Obtain a motion vector of each subblock in the current picture block based on the motion vectors of the control points of the current picture block by using an affine transform model, where a size of the subblock is determined based on a prediction direction of the current picture block — 703

Perform motion compensation based on the motion vector of each subblock in the current picture block, to obtain a predicted pixel value of each subblock — 705

FIG. 7A

FIG. 7B

FIG. 7C

1200

```
                    ┌──────────────┐
                    │    Start     │
                    └──────┬───────┘
                           │
                           ▼
                  ╱─────────────────╲
         AMVP    ╱  S1201: A video   ╲   Merge
         mode   ╱ decoder determines  ╲  mode
        ◄──────╱ an inter prediction   ╲──────►
                ╲ mode of a current    ╱
                 ╲  coding block      ╱
                  ╲─────────────────╱
```

| S1211: The video decoder constructs a candidate motion vector predictor MVP list | S1221: The video decoder constructs a candidate motion information list |

| S1212: The video decoder parses a bitstream, to obtain an index and an MVD | S1222: The video decoder parses a bitstream, to obtain an index |

| S1213: The video decoder determines a target motion vector group in the candidate motion vector predictor MVP list based on the index | S1223: The video decoder determines a target motion vector group in the candidate motion information list based on the index |

| S1214: The video decoder determines motion vectors of control points of the current coding block based on the target candidate motion vector group and the motion vector difference MVD that is obtained by parsing the bitstream | S1224: The video decoder obtains a motion vector of each subblock in the current coding block |

| S1215: The video decoder obtains a motion vector of each subblock in the current coding block | S1225: The video decoder performs motion compensation to obtain a predicted pixel value of each subblock |

| S1216: The video decoder performs motion compensation to obtain a predicted pixel value of each subblock | |

FIG. 7D

800

## Picture prediction apparatus

801

### Obtaining unit

802

### Inter prediction processing unit

FIG. 8A

Processor — 1010

Display — 1070

1050

| Data | — 1031 |
|------|--------|
| Application: 1... | |
| Application: video coding | } 1035 |
| Application: ...N | |
| Operating system | — 1033 |

1030

FIG. 8B

FIG. 9

## INTERNATIONAL SEARCH REPORT

| International application No. |
| --- |
| **PCT/CN2019/107614** |

**A. CLASSIFICATION OF SUBJECT MATTER**

H04N 9/10(2006.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 图像, 控制点, 预测, 运动向量, 运动矢量, 仿射, 划分, 分割, 单向, 双向, 子块, 块, 预测方向, 尺寸, image, control point, predict, MV, motion vector, affine, direction, block, sub-block, size

**C. DOCUMENTS CONSIDERED TO BE RELEVANT**

| Category* | Citation of document, with indication, where appropriate, of the relevant passages | Relevant to claim No. |
| --- | --- | --- |
| A | WANG, Yang et al. "CE4.2.12 Affine Merge Mode"<br>*Joint Video Experts Team (JVET) of ITU-T SG 16 WP 3 and ISO/IEC JTC 1/SC 29/WG 11 11th Meeting: Ljubljana, SI, 10-18 July 2018*, 18 July 2018 (2018-07-18),<br>text, section 2 | 1-29 |
| A | CN 104980762 A (QUALCOMM INCORPORATED) 14 October 2015 (2015-10-14)<br>entire document | 1-29 |
| A | CN 107113424 A (MEDIATEK INC.) 29 August 2017 (2017-08-29)<br>entire document | 1-29 |
| A | CN 104363451 A (HUAWEI TECHNOLOGIES CO., LTD.) 18 February 2015 (2015-02-18)<br>entire document | 1-29 |
| A | CN 103828373 A (MATSUSHITA ELECTRIC INDUSTRIAL CO., LTD.) 28 May 2014 (2014-05-28)<br>entire document | 1-29 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 November 2019** | **20 December 2019** |

| Name and mailing address of the ISA/CN | Authorized officer |
| --- | --- |
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/107614**

| Patent document cited in search report | | | Publication date (day/month/year) | Patent family member(s) | | | Publication date (day/month/year) |
|---|---|---|---|---|---|---|---|
| CN | 104980762 | A | 14 October 2015 | WO | 2013119816 | A1 | 15 August 2013 |
| | | | | US | 9699472 | B2 | 04 July 2017 |
| | | | | KR | 20140130465 | A | 10 November 2014 |
| | | | | US | 2015229955 | A1 | 13 August 2015 |
| | | | | PH | 12014501622 | B1 | 13 October 2014 |
| | | | | RU | 2620723 | C2 | 29 May 2017 |
| | | | | AU | 2013217035 | B2 | 13 April 2017 |
| | | | | HK | 1201000 | A1 | 14 August 2015 |
| | | | | EP | 2813080 | A1 | 17 December 2014 |
| | | | | MY | 168356 | A | 31 October 2018 |
| | | | | CA | 2862311 | C | 21 August 2018 |
| | | | | ZA | 201406544 | B | 30 August 2017 |
| | | | | KR | 101825262 | B1 | 02 February 2018 |
| | | | | CN | 104980762 | B | 31 July 2018 |
| | | | | PH | 12014501622 | A1 | 13 October 2014 |
| | | | | IL | 233522 | D0 | 31 August 2014 |
| | | | | AU | 2013217035 | A1 | 07 August 2014 |
| | | | | JP | 2018142972 | A | 13 September 2018 |
| | | | | HK | 1216273 | A1 | 28 October 2016 |
| | | | | SG | 11201403844 P | A | 26 September 2014 |
| | | | | CA | 2862311 | A1 | 15 August 2013 |
| | | | | JP | 2015510357 | A | 02 April 2015 |
| | | | | IL | 233522 | A | 31 August 2017 |
| | | | | US | 9451277 | B2 | 20 September 2016 |
| | | | | RU | 2014136329 | A | 10 April 2016 |
| | | | | US | 2013202037 | A1 | 08 August 2013 |
| | | | | CN | 104094605 | A | 08 October 2014 |
| CN | 107113424 | A | 29 August 2017 | KR | 101908249 | B1 | 15 October 2018 |
| | | | | EP | 3202143 | B1 | 21 August 2019 |
| | | | | SG | 11201703454X | A | 29 June 2017 |
| | | | | US | 2017310990 | A1 | 26 October 2017 |
| | | | | KR | 20170073681 | A | 28 June 2017 |
| | | | | EP | 3202143 | A4 | 04 April 2018 |
| | | | | EP | 3202143 | B8 | 25 September 2019 |
| | | | | US | 10182240 | B2 | 15 January 2019 |
| | | | | EP | 3202143 | A1 | 09 August 2017 |
| | | | | BR | 112017010468 | A2 | 03 April 2018 |
| | | | | WO | 2016078511 | A1 | 26 May 2016 |
| CN | 104363451 | A | 18 February 2015 | WO | 2016065873 | A1 | 06 May 2016 |
| | | | | US | 10440380 | B2 | 08 October 2019 |
| | | | | CN | 104363451 | B | 25 January 2019 |
| | | | | JP | 2017536002 | A | 30 November 2017 |
| | | | | KR | 20170045264 | A | 26 April 2017 |
| | | | | US | 2019289313 | A1 | 19 September 2019 |
| | | | | EP | 3177015 | A4 | 09 August 2017 |
| | | | | KR | 20190100435 | A | 28 August 2019 |
| | | | | US | 2017195685 | A1 | 06 July 2017 |
| | | | | EP | 3177015 | A1 | 07 June 2017 |
| | | | | KR | 102013771 | B1 | 23 August 2019 |
| | | | | JP | 6490203 | B2 | 27 March 2019 |

Form PCT/ISA/210 (patent family annex) (January 2015)

**INTERNATIONAL SEARCH REPORT**
**Information on patent family members**

International application No.

**PCT/CN2019/107614**

| Patent document cited in search report | | | Publication date (day/month/year) | Patent family member(s) | | | Publication date (day/month/year) |
|---|---|---|---|---|---|---|---|
| | | | | JP | 2019041418 | A | 14 March 2019 |
| | | | | BR | 112017007399 | A2 | 19 June 2018 |
| CN | 103828373 | A | 28 May 2014 | EP | 2765771 | A4 | 11 March 2015 |
| | | | | WO | 2013051209 | A1 | 11 April 2013 |
| | | | | JP | 6403125 | B2 | 10 October 2018 |
| | | | | JP | 5514372 | B2 | 04 June 2014 |
| | | | | JP | 5544452 | B1 | 09 July 2014 |
| | | | | CN | 108040259 | A | 15 May 2018 |
| | | | | US | 9888253 | B2 | 06 February 2018 |
| | | | | TW | 201322775 | A | 01 June 2013 |
| | | | | US | 2015036748 | A1 | 05 February 2015 |
| | | | | JP | 2014143729 | A | 07 August 2014 |
| | | | | TW | I563830 | B | 21 December 2016 |
| | | | | JP | WO2013051209 | A1 | 30 March 2015 |
| | | | | MX | 2014003728 | A | 09 July 2014 |
| | | | | JP | 6008211 | B2 | 19 October 2016 |
| | | | | US | 2018124416 | A1 | 03 May 2018 |
| | | | | KR | 20140085434 | A | 07 July 2014 |
| | | | | US | 2014211857 | A1 | 31 July 2014 |
| | | | | CA | 2850066 | A1 | 11 April 2013 |
| | | | | JP | 2017011740 | A | 12 January 2017 |
| | | | | US | 2017280150 | A1 | 28 September 2017 |
| | | | | CN | 103828373 | B | 16 February 2018 |
| | | | | RU | 2604330 | C2 | 10 December 2016 |
| | | | | RU | 2014111736 | A | 10 November 2015 |
| | | | | JP | 2014150585 | A | 21 August 2014 |
| | | | | US | 10334266 | B2 | 25 June 2019 |
| | | | | US | 9161036 | B2 | 13 October 2015 |
| | | | | EP | 2765771 | A1 | 13 August 2014 |
| | | | | US | 9712840 | B2 | 18 July 2017 |

Form PCT/ISA/210 (patent family annex) (January 2015)